# EUROPEAN PATENT APPLICATION

(11) **EP 4 053 944 A1**
(43) Date of publication of application: **07.09.2022**
(21) Application number: 21895928.6
(22) Date of filing: 29.07.2021
(51) Int. Cl.: H01M 4/38

(54) **NEGATIVE ELECTRODE MATERIAL AND PREPARATION METHOD THEREFOR, AND LITHIUM ION BATTERY**

(30) Priority: 11.12.2020 CN 202011459903; 06.01.2021 CN 202110013364; 02.04.2021 CN 202110363721; 28.04.2021 CN 202110468548
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: HE, Peng, Shenzhen, Guangdong 518106 (CN); AN, Weili, Shenzhen, Guangdong 518106 (CN); REN, Jianguo, Shenzhen, Guangdong 518106 (CN); HE, Xueqin, Shenzhen, Guangdong 518106 (CN)
(74) Representative: Noréns Patentbyrå AB
(86) International application number: PCT/CN2021/109137
(87) International publication number: WO 2022/121334

(57) **Abstract**

The present disclosure relates to an anode material, a preparation method thereof, and a lithium ion battery. The anode material is primary particles. The primary particle includes a skeleton. The skeleton includes a main skeleton located inside the primary particle and multiple branches extending to the surface of the primary particle. The primary particles have a macroporous structure, and pores are formed inside the primary particles, and extend to the surface of the primary particles. Compared with the secondary porous structure formed by accumulating nano-particles, the anode material of the present disclosure has a more stable structure and low volume expansion while having a smaller specific surface area and a higher porosity.

## Description

### CROSS-REFERENCE TO RELATED APPLICATIONS

The present disclosure claims priorities to Chinese Patent Application No. 202011459903.8, titled with "SILICON ANODE MATERIAL FOR LITHIUM ION BATTERY AND METHOD FOR PREPARING THE SAME" and filed on December 11, 2020; Chinese Patent Application No. 202110013364.3, titled with "COMPOSITE ANODE MATERIAL AND METHOD FOR PREPARING THE SAME, LITHIUM ION BATTERY" and filed on January 06, 2021; Chinese Patent Application No. 202110468548.9, titled with "COMPOSITE ANODE MATERIAL AND METHOD FOR PREPARING THE SAME, LITHIUM ION SECONDARY BATTERY" and filed on April 28, 2021; Chinese Patent Application No. 202110363721.9, titled with "COMPOSITE ANODE MATERIAL AND METHOD FOR PREPARING THE SAME, LITHIUM ION BATTERY" and filed on April 02, 2021, the contents of which are incorporated herein by reference in their entirety.

### TECHNICAL FIELD

The present disclosure relates to the technical field of anode materials, particularly, to an anode material, a preparation method thereof, and a lithium ion battery.

### BACKGROUND

Lithium-ion batteries are widely used in electric vehicles and consumer electronic products due to their advantages, e.g., high energy density, high output power, long cycle service life, low environmental pollution, etc. In order to improve the energy density of a battery, the research and development of silicon anode materials have been gradually advancing. However, the silicon anode material has a large volumetric expansion (>300%) during a process of lithium de-intercalation and lithium intercalation. The silicon anode material suffer serious pulverization during charging and discharging processes, and may be peeled off from the current collector, resulting in loss of electrical contact with current collector These two obstacles lead to deteriorated electrochemical performance, attenuated capacity, and decreased cycle stability, hindering the commercial applications of silicon.

Based on this, there is an urgent requirement to develop an anode material with low expansion rate and high cycle stability and a method for preparing the anode material.

### SUMMARY

In view of this, a composite anode material, a method for preparing the composite anode material, and a lithium ion battery are provided. The anode material may has a lower expansion rate and an improved cycle performance. The preparation method can reduce preparation cost.

Thus, the present disclosure adopts following technical solutions.

In a first aspect, the present disclosure provides an anode material including primary particles, the primary particle includes a skeleton, and the skeleton includes a main skeleton located inside the primary particle and multiple branches extending from the main skeleton to the surface of the primary particle.

In the above solution, the anode material are primary particles, the main skeleton in the primary particle and the multiple branches extending from the main skeleton to the surface of the primary particle form a unity. The entire skeleton structure enhances the electronic conduction and ion diffusion of the material. The stress after lithiation can be effectively released, thereby preventing from crack and pulverization of the material due to the stress concentrated at the boundary of the grain. The anode material has a more stable integrated structure, as well as a smaller specific surface area and a higher porosity. In the present disclosure, the anode material is a primary completed particle, the entire skeleton is interconnected, which enhances the electronic conduction and ion diffusion of the material. The stress after lithiation can be effectively released, thereby preventing from pulverization of the material due to the stress concentration. For the porous material agglomerated by primary particles, stress after lithiation is concentrated, particles are cracked, and the entire structure is destructed due to the obvious grain boundaries among particles, resulting to ultimate deterioration of electrochemical performances.

In a second aspect, an anode material is provided, the anode material includes primary particles, the primary particle has a macroporous structure, and the primary particle is formed with pores extending to the surface of the primary particle.

In a third aspect, an anode material is provided, the anode material includes primary particles, the primary particle is formed with through holes inside, and a porosity of the primary particles is not less than 30%.

In an embodiment, the anode material further includes a coating layer located on the surface of the primary particle.

In addition, the coating layer on the surface of the primary particles can further improve the structural stability and cycle stability of the anode material while further relieving the volume expansion of the anode material.

In an embodiment, the anode material further includes a protective layer located on the surface of the skeleton.

The protective layer formed on the surface of the anode material skeleton can further improve the electrical conductivity and cycle stability of the anode material while further relieving the volume expansion of the anode material, thereby further improving the electrical conductivity and rate performance of the anode material.

In an embodiment, the anode material further includes a nano-particle layer located on the surface of the primary particles, and a coating layer coated on the nano-particle layer, and the nano-particle layer is formed with micro-pores and/or meso-pores.

In the above solution, the nano-particle layer can effectively preventing the material from pulverization, relieve the volume expansion of the material, and ensure the structural stability of the primary particles inside the anode material. Due to being coated with a coating layer, more improved electrical conductivity and stability can be obtained, which can effectively prevent the existing of the internal pores of the carbon filling material, and improve the initial efficiency of the material. Therefore, the composite anode material can exhibit high capacity, long cycle service life, high rate performance and low expansion.

In a fourth aspect, the present disclosure provides a method for preparing an anode material, including following steps:
placing a mixture containing an N-M material and a transition metal halide in a protective atmosphere, and performing a displacement reaction to obtain a reaction product, the reaction product comprises a halide of M and a transition metal; and
removing the halide of M and the transition metal to obtain an anode material;
wherein the M in the N-M material comprises at least one of Mg, Al, Li, and Ca, and the N in the N-M material comprises at least one of Si, Ge, Sn, B, and Sb.

In the above solution of the present disclosure, the N-M material reacts with the transition metal halide at a high temperature, and then the metal M component of the N-M material is removed to obtain a porous N anode material. Due to the metal halide produced by the reaction, taking a silicon-magnesium alloy or a silicon-aluminum alloy as a raw material for example, the metal halide produced is magnesium halide or aluminum halide which are molten at the reaction temperature. The molten halide has continuity, which can provides an interconnected liquid template for the formation of the interconnected nano-N material. A porous N anode material is obtained by removing the metal halide. The nano-units, in structure, grow along the interconnected liquid template to form an interconnected skeleton structure. By removing the template, the primary particles formed have a macroporous structure. The primary particles are formed with pores inside, and the pores extend to the surface of the primary particle.

In a fifth aspect, the present disclosure provides a method for preparing an anode material, including following steps:
placing a mixture containing an N-M alloy and a halogen-containing six-membered ring organic substance in a protective atmosphere, and performing a substitution reaction to obtain a reaction product, the reaction product comprises an oxide of M and a halide of M; and
removing the oxide of M and the halide of M to obtain an anode material;
wherein the N in the N-M alloy comprises at least one of silicon, germanium, antimony, tin, and boron, and the M in the N-M alloy comprises at least one of magnesium, aluminum, calcium, and zinc.

In the above solution, the anode material is prepared by a one-step compounding method. The N-M alloy directly reacts with the six-membered ring organic matter at a high temperature. The metal M component in the N-M alloy is removed. Meanwhile a carbon layer is deposited in situ on the surface of the N material. The overall reaction is mild and there are no by-products. The N material has a complete and stable structure. The carbon layer is deposited uniformly. The raw materials involved in the reaction are all commonly used alloys, organic matters and metal salts, which can reduce costs.

In a sixth aspect, the present disclosure provides a method for preparing an anode material, including following steps:
placing a mixture containing an N-M alloy and a carbon-containing ammonium salt in a protective atmosphere, and performing a substitution reaction to obtain a reaction product, the reaction product comprises an oxide of M and a nitride of M; and
removing the oxide of M and the nitride of M to obtain an anode material;
wherein the N in the N-M alloy comprises at least one of silicon, germanium, antimony, tin, and boron, and the M in the N-M alloy comprises at least one of magnesium, aluminum, calcium, and zinc.

In the above solution of the present disclosure, a composite anode material is prepared by using carbon-containing ammonium salt as a carbon source and N-M alloy under high temperature conditions by a one-step compounding method. Compared with a two-step compounding method, the preparation efficiency can be effectively improved and the process is simple.

In a seventh aspect, the present disclosure provides a method for preparing an anode material, including following steps:
forming a coating layer on a surface of an N-M alloy to obtain an N-M alloy containing the coating layer;
adding the N-M alloy containing the coating layer to an ammonium salt solution, and performing an oxidation-reduction reaction to obtain an intermediate; and
suffering the intermediate to a de-alloying heat treatment in a protective atmosphere, and acid-washing reaction product to obtain a composite anode material, wherein the N in the N-M alloy comprises at least one of silicon, germanium, antimony, tin, and boron, and the M in the N-M alloy comprises at least one of magnesium, aluminum, calcium, and zinc.

In the above solution of the present disclosure, a composite anode material with two pore structures can be prepared through a simple in-situ reaction in one step. The composite anode can be obtained by reacting the coated N-M alloy with the ammonium salt solution and then heating in a protective atmosphere. The morphology and pore structure of the composite anode material are easy to be adjusted and controlled. The size and porosity of the pores can be adjusted by controlling the components of the alloy. The depth of the pores can be adjusted by the reaction time and the reaction temperature. The pores in the anode material prepared can provide space for internal expansion during lithium de-intercalation and intercalation of the anode material. And the pores can be used as a channel for flow of electrolyte, which can improve the lithium storage performance while reducing the expansion of the lithium battery. Therefore, it is conducive for the anode material to expanding inward after lithiation, so as to further reduce the thickness of the entire electrode film. Thereby the safety of the lithium-ion battery is greatly improved. The nano-particle layer outside can effectively prevent pulverization of the material, relieve the volume expansion of the material, and ensure the structural stability of the primary particles inside the anode material. The composite anode material can have better electrical conductivity and stability after being coated with a coating material, which can effectively avoid carbon-filling the three-dimensional pores of primary particles, and improve the initial efficiency of the material. Thus the composite anode material can exhibit high capacity, long cycle service life, high rate performance and low expansion.

In an eighth aspect, the present disclosure provides a lithium ion battery, the lithium ion battery includes the foregoing composite anode materials or the composite anode materials prepared by the foregoing preparation methods.

### BRIEF DESCRIPTION OF DRAWINGS

FIG. 1 is a structural schematic diagram showing an anode material according to an embodiment of the present disclosure;
FIG. 2a is a structural schematic diagram showing an anode material according to an embodiment of the present disclosure;
FIG. 2b is a structural schematic diagram showing a graphene layer of an anode material according to an embodiment of the present disclosure;
FIG. 3a is a schematic diagram showing a structure of an anode material according to an embodiment of the present disclosure;
FIG. 3b is a structural schematic diagram showing an anode material according to another embodiment of the present disclosure;
FIG. 4a is a structural schematic diagram showing an anode material according to an embodiment of the present disclosure;
FIG. 4b is a structural schematic diagram showing a nano-particle layer in an anode material according to an embodiment of the present disclosure;
FIG. 5 is a flow chart showing a method for preparing a silicon anode material according to an embodiment of the present disclosure;
FIG. 6 is a schematic flow chart showing a method for preparing a silicon anode material according to an embodiment of the present disclosure;
FIG. 7a is an SEM photograph of a silicon anode material of Example 1 according to an embodiment of the present disclosure;
FIG. 7b is an XRD pattern showing a silicon anode material of Example 1 according to an embodiment of the present disclosure;
FIG. 7c is an initial charging and discharging curve of a silicon anode material of Example 1 according to an embodiment of the present disclosure;
FIG. 7d is a graph showing cycle performance of a silicon anode material of Example 1 according to an embodiment of the present disclosure;
FIG. 7e is an SEM photograph of a silicon anode material of Comparative Example 1 according to an embodiment of the present disclosure;
FIG. 8 is a schematic flow chart showing a method for preparing an anode material according to an embodiment of the present disclosure;
FIG. 9 is a schematic flow chart showing a synthesis process of a silicon-carbon composite anode material according to an embodiment of the present disclosure;
FIG. 10 is a schematic flow chart showing a synthesis process of a silicon/metal oxide and silicon/metal nitride composite anode material according to an embodiment of the present disclosure;
FIG. 11a is an SEM photograph of a silicon-carbon composite anode material of Example 1 according to an embodiment of the present disclosure;
FIG. 11b is an SEM photograph of a silicon-carbon composite anode material of Example 1 according to another embodiment of the present disclosure;
FIG. 12a is an XRD pattern showing a silicon-carbon composite anode material of Example 1 according to another embodiment of the present disclosure;

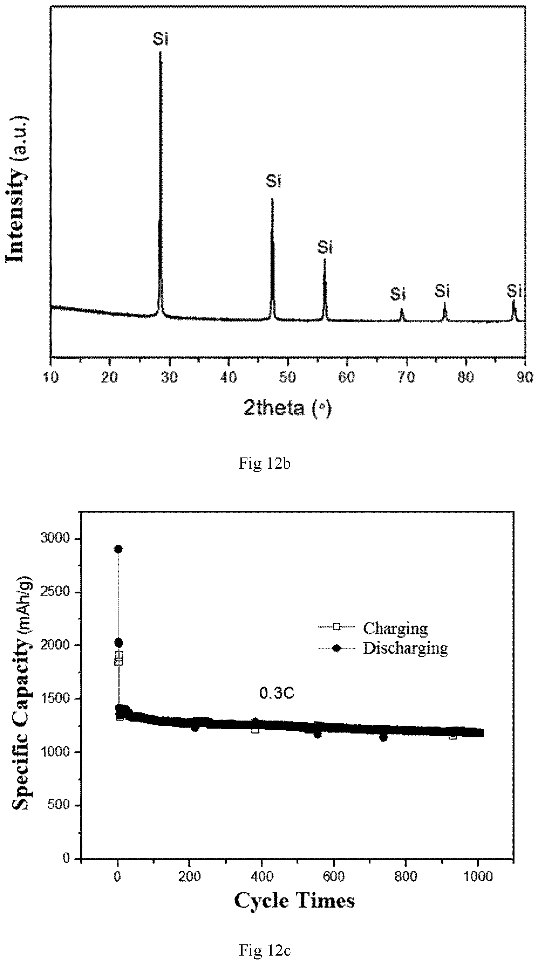

FIG. 12b is a Raman pattern showing a silicon-carbon composite anode material of Example 1 according to another embodiment of the present disclosure;
FIG. 12c is a graph showing the cycle performance of a silicon-carbon composite anode material of Example 1 according to another embodiment of the present disclosure;
FIG. 13 is a schematic diagram showing a synthesis process of a composite anode material according to an embodiment of the present disclosure;
FIG. 14a is an SEM photograph showing a silicon-carbon composite anode material of Example 15 according to an embodiment of the present disclosure;
FIG. 14b is an SEM photograph of a silicon-carbon composite anode material of Example 15 according to another embodiment of the present disclosure;
FIG. 15a is a Raman pattern showing a silicon-carbon composite anode material of Example 15 according to an embodiment of the present disclosure;
FIG. 15b is an XRD pattern showing a silicon-carbon composite anode material of Example 15 according to an embodiment of the present disclosure;
FIG. 15c is a graph showing cycle performance of a silicon-carbon composite anode material according to an embodiment of the present disclosure;
FIG. 16 is a flowchart showing a method for preparing an anode material according to an embodiment of the present disclosure;
FIG. 17a is an SEM photograph of a silicon-carbon composite anode material of Example 25 according to an embodiment of the present disclosure;
FIG. 17b is an XRD pattern showing a silicon-carbon composite anode material of Example 25 according to an embodiment of the present disclosure; and
FIG. 17c is a graph showing cycle performance of a silicon-carbon composite anode material of Example 25 according to an embodiment of the present disclosure.

### DESCRIPTION OF EMBODIMENTS

In order to better illustrate the present disclosure and facilitate the understanding of technical solutions of the present disclosure, the present disclosure will be further described in detail below. However, following embodiments are only simple examples of the present disclosure, which do not represent or limit the protection scope of the present disclosure. The protection scope of the present disclosure is limited by claims.

Typical but non-limiting embodiments of the present disclosure are shown as follows.

In this context, "de-alloying" refers to a method of selectively removing one or more element(s) in an alloy through a chemical or electrochemical corrosion process. The de-alloying process involves the removal of old lattice sites and the formation of new lattice sites, as well as the nucleation and growth of new crystals. Formation of nano-porous structures is closely related to the recombination of atomic level on the alloy/solution interface during the de-alloying process. However, the recombination process is completed through surface diffusion of metal atoms undissolved and vacancies. The speed of surface diffusion has an important impact on the size of ligaments/pores in the final nano-porous metal.

### First Aspect

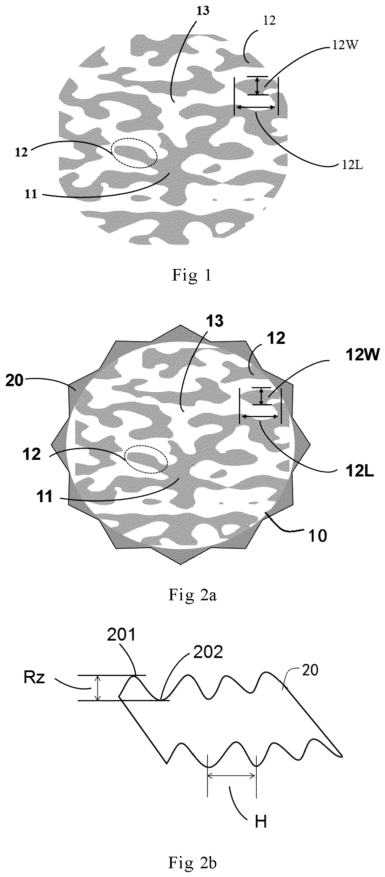

In an embodiment of an anode material, as shown in FIG. 1, the anode material includes primary particles. The primary particle includes a skeleton. The skeleton includes a main skeleton 11 located inside the primary particle and multiple branches 12 extending from the main skeleton 11 to the surface of the primary particle.

Further referring to FIG. 1, the primary particle in the embodiments has a macroporous structure. The primary particle is formed with pores 13 extending to the surface of the primary particle. According to a definition of the International Union of Pure and Applied Chemistry (IUPAC), those with a pore diameter greater than 50 nm are called as macro-pores.

In the embodiments, the anode material includes primary particles. The main skeleton inside the primary particle and multiple branches extending from the main skeleton to the surface of the primary particle form an integrated structure. The entire skeleton structure improves the electron transfer and ion diffusion of the material, which can effectively release the stress after lithiation, and thereby preventing from crack and pulverization of the material due to the stress concentrated at the grain boundary.

The pore structure in which the pore of the anode material extends to the surface of the primary particle has following advantages. I. It can reduce the expansion of the lithium battery while improving the lithium storage performance. It can not only relieve the volume expansion during lithium intercalation, but also help to provide an internal expansion space for lithiation. Thus the electrode material expands inward after lithiation to reduce the thickness of the entire electrode film, thereby greatly improving the safety of the lithium ion battery. II. It provides channels for the flowing of the electrolyte, which is conducive to the contact of the electrolyte. The pore structure can further bring a higher tap density, so that the volumetric energy density of the battery can be increased.

Compared with a secondary porous structure formed by the accumulation of nano-particles, the porous anode material prepared in the embodiments has the advantage of a more stable integrated structure, as well as a smaller specific surface area and a higher porosity. In the present disclosure, a primary complete particle is provided, the entire skeleton connected enhances the electron transfer and ion diffusion of the material, which can effectively release the stress after lithiation, and prevent from pulverization of the material due to the stress concentration. For the porous material assembled by the secondary particle, since there are obvious grain boundaries, lithiation stress is concentrated, and particles are cracked, resulting in that the entire structure is destructed, and electrochemical performance is ultimately deteriorated.

In some embodiments, the anode material is the primary particle.

In some embodiments, the main skeleton is a three-dimensional network structure.

In some embodiments, a single branch is a single crystal grain. There is no obvious grain boundary between the branch and the main skeleton. The surface of the primary particle is dispersed with crystal grains. In the prior art, the branches on the porous silicon secondary particle are mainly composed of multiple small crystal grains, thus there are many grain boundaries. Compared with such a structure, the branch on the primary particle in the embodiments is a single large grain without excessive grain boundaries, thus the stress after lithiation can be better dispersed, thereby avoiding damage to the material due to stress concentration. Meanwhile, the crystal rocking curves of single crystal grains are the same, which is more conducive to reducing the relative volume expansion of the material in a certain direction. However, the structure composed of multiple small crystal grains has a relatively large volume expansion while having a relatively poor structural stability, resulting in poor cycle stability.

Specifically, the size of the crystal grain ranges from 30 nm to 100 nm, e.g., 30 nm, 45 nm, 50 nm, 60 nm, 75 nm, and 100 nm.

In some embodiments, the maximum cross-sectional width of the branch ranges from 20 nm to 350 nm, and the maximum cross-sectional length of the branch ranges from 50 nm to 2500 nm. Preferably, the maximum cross-sectional width 12W of the branch 12 ranges from 20 nm to 250 nm, and the maximum cross-sectional length 12L of the branch ranges from 100 nm to 1500 nm. Exemplarily, the maximum width 12W of the cross section of the branch 12 can be 20 nm, 40 nm, 80 nm, 100 nm, 120 nm, 150 nm, 180 nm, 200 nm or 250 nm, and the maximum cross-sectional length 12L of the branch 12 can be 100 nm, 200 nm, 300 nm, 400 nm, 500 nm, 800 nm, 1000 nm, 1200 nm or 1500 nm, which are not limited here.

In some embodiments, the branches are at least one of selected from rod-shaped nano-particles, nano-sheets, nano-wires, and nano-tubes.

In some embodiments, the pore 13 has a diameter of 10 nm to 150 nm as measured by the mercury intrusion test method. The pore has a depth of 50 nm to 1500 nm. Exemplarily, the diameter of the pore can be 10 nm, 50 nm, 60 nm, 80 nm, 100 nm, or 150 nm, which is not limited herein. The depth of the pore 13 can be 50 nm, 100 nm, 200 nm, 300 nm, 400 nm, 500 nm, 800 nm or 1000 nm, which is not limited here. A reaction time and reaction temperature can be controlled to change the depth of the pores (generally, the longer the reaction time and the higher the reaction temperature, the deeper the depth of the pore).

The anode material of the embodiments includes primary particles in which through holes are formed, and the porosity of the primary particles is not less than 30%. The primary particles of the present disclosure have a relatively high porosity, so that more than 300% of volume expansion of the silicon anode can be relieved. Combined with the structure advantages of a macroporous through structure, the pore structure after lithiation can also be maintained intact. In the prior art, the porosity is relatively low and there are many micro-pores and meso-pores, which cannot satisfy the huge volume expansion of silicon. After lithiation, the pores are filled, since the pores are finally blocked due to electrochemical sintering, the porous structure cannot be maintained.

The anode materials in the foregoing embodiments can be silicon anode materials, germanium anode materials, tin anode materials, boron anode materials, antimony anode materials and other anode materials, typically, silicon anode materials. In some embodiments, the primary particles are at least one selected from silicon, germanium, tin, boron and antimony. The skeleton of the primary particle can be a silicon skeleton, a germanium skeleton, a tin skeleton, a boron skeleton, or an antimony skeleton. If the anode material is the silicon anode material, its silicon anode material is the primary particle including a silicon skeleton. The silicon skeleton includes a main skeleton located inside the primary particle and multiple branches extending from the main skeleton to the surface of the primary particle. The skeleton structures of germanium, boron, tin and antimony are similar to the aforementioned silicon skeleton structures.

In some embodiments, the median particle size of the primary particles ranges from 0.2 µm to 15 µm, e.g., 0.2 µm, 1 µm, 3 µm, 5 µm, 8 µm, 10 µm, 12 µm, or 15 µm. The median particle size of the primary particles preferably ranges from 0.5 µm to 10 µm, and more preferably ranges from 1 µm to 5 µm.

In some embodiments, the specific surface area of the primary particles ranges from 5m²/g to 100m²/g, e.g., 5m²/g, 10m²/g, 20m²/g, 30m²/g, 40m²/g, 50m²/g, 60m²/g, 80m²/g or 100m²/g. Preferably, the specific surface area of the primary particles ranges from 10m²/g to 50m²/g.

In some embodiments, the porosity of the primary particles ranges from 30% to 70%, e.g., 30%, 35%, 40%, 50%, 55%, 60% or 70%, preferably ranges from 40% to 60%.

In some embodiments, the tap density of the primary particles ranges from 0.2 g/cm³ to 0.8 g/cm³, e.g., 0.2 g/cm³, 0.3 g/cm³, 0.5 g/cm³, 0.6 g/cm³, 0.7 g/cm³ or 0.8 g/cm³. Preferably, the tap density of the primary particles ranges from 0.4 g/cm³ to 0.7 g/cm³.

In some embodiments, the powder compaction density of the primary particles ranges from 1.2 g/cm³ to 1.8 g/cm³, e.g., 1.2 g/cm³, 1.3 g/cm³, 1.4 g/cm³, 1.5 g/cm³, 1.6 g/cm³ or 1.8 g/cm³, preferably ranges from 1.4 g/cm³ to 1.7 g/cm³.

In some embodiments, as shown in FIG. 2a, the anode material includes primary particles 10 and a coating layer 20 located on the surface of the primary particle 10.

It can be understood that the anode material includes a core 10 and a coating layer 20 formed on the surface of the core. The core 10 is a primary particle.

It can be understood that the primary particle includes a skeleton. The skeleton includes a main skeleton 11 located inside the primary particle and multiple branches 12 extending from the main skeleton 11 to the surface of the primary particle. The primary particle has a macroporous structure. The primary particle is formed with pores 13 extending to the surface of the primary particle. It can be understood that the primary particle is formed with through holes, and the porosity of the primary particles is not less than 30%.

By forming the coating layer on the surface of the primary particles (core), the structural stability and cycle stability of the anode material can be further improved while the volume expansion of the anode material can be further relieved.

In this embodiment, the specific structure (skeleton structure, pore structure) and performance parameters (porosity, median diameter, specific surface area, powder compaction density, powder compaction density and other parameters) of the primary particles are described as in the forgoing embodiments, which will not be repeated here.

In some embodiments, the median particle size of the anode material ranges from 0.1 µm to 15 µm. Optionally, the median particle size of the anode material can be 0.1 µm, 0.5 µm, 1 µm, 2 µm, 3 µm, 4 µm, 5 µm, 6 µm, 7µm, 8µm, 9µm or 10µm, which are not limited here. The median particle size of the composite anode material preferably ranges from 0.5 µm to 10 µm, and more preferably 1 µm to 8 µm.

In some embodiments, the specific surface area of the anode material ranges from 1 m²/g to 150 m²/g. Optionally, the specific surface area of the anode material can be 1 m²/g, 5 m²/g, 10 m²/g, 20 m²/g, 30 m²/g, 40 m²/g, 50 m²/g, 60 m²/g, 70 m²/g, 100 m²/g, 120 m²/g or 150 m²/g, which are not limited here. The specific surface area of the anode material preferably ranges from 1 m²/g to 50 m²/g. It can be understood that the smaller the specific surface area is, the better. Excessive large specific surface area may tend to lead to the formation of SEI film, so that too much irreversible lithium salt is consumed, and the initial efficiency of the battery is reduced. Comprehensively considering the cost of the preparation process, the specific surface area is controlled to be 10 m²/g to 50 m²/g.

In some embodiments, the porosity of the anode material ranges from 30% to 70%.

In some embodiments, the coating layer includes at least one of a carbon layer, a metal oxide layer, and a metal nitride layer. The above types of coating layers can further improve the electrical conductivity, structural stability, and cycle stability of the anode material, while further relieving the volume expansion of the anode material.

The coating layer includes a carbon layer. Further, the carbon layer includes at least one of a graphene layer and an amorphous carbon layer.

Furthermore, the graphene layer has a corrugated structure. The corrugated morphology of the graphene layer can provide more active sites, thereby further improving the electrical conductivity and rate performance of the anode material.

As shown in FIG. 2b, the corrugated structure includes protrusions (peaks) 201 and recesses (valleys) 202. The recesses 202 are located between two adjacent protrusions 201. The protrusions 201 are located between two adjacent recesses 202. The surface roughness Rz (maximum height difference between a peak and a valley) of the corrugated structure is greater than 10 nm and less than 1 µm. Further, Rz can be greater than 50 nm and less than 500 nm. Furthermore, Rz can be greater than 100 nm and less than 350 nm. A distance H between the highest points of two adjacent protrusions or between the lowest points of two recesses is greater than 10 nm and less than 1 µm. Further, H is greater than 50 nm and less than 800 µm. Furthermore, H is greater than 100 nm and less than 500 nm.

Specifically, the corrugated structures are classified according to the bending shape of the corrugated surface. The corrugated structure can be at least one selected from arc corrugations, sharp edge corrugations and fan-shaped corrugations. Further, the corrugated structure can have arc corrugations, sharp edge corrugations, and fan-shaped corrugations simultaneously.

The corrugated structures are classified according to the axial plane appearance and the two-wing appearance. The corrugated structure can be at least one selected from upright corrugations, oblique corrugations, inverted corrugations and horizontal corrugations. Further, the corrugated structure can have upright corrugations, oblique corrugations, inverted corrugations and horizontal corrugations simultaneously.

The graphene layer has the above corrugated structures, so that more active sites can be provided, thereby further improving the electrical conductivity and rate performance of the anode material.

In some embodiments, the carbon layer includes an amorphous carbon layer, and the thickness of the amorphous carbon layer is 5 nm to 150 nm.

In some embodiments, based on 100% of the total mass of the composite anode material, a mass percentage of carbon ranges from 2% to 50%.

In some embodiments, the coating layer includes a metal oxide layer. The metal in the metal oxide layer includes at least one of Ti, V, Nb, Ta, W, and Zr.

A molar ratio of the metal element to the oxygen element in the metal oxide layer is 1: (0.1 to 3). The thickness of the metal oxide layer ranges from 1 nm to 200 nm.

Based on 100% of the total mass of the composite anode material, a mass percentage of the metal oxide ranges from 2% to 60%;

In some embodiments, the coating layer includes a metal nitride layer. The metal element in the metal nitride layer includes at least one of Ti, V, Nb, Ta, W, and Zr. Further, the thickness of the metal nitride layer ranges from 1 nm to 250 nm.

A mass percentage of the metal nitride ranges from 2% to 70% based on 100% of the total mass of the composite anode material.

The metal oxide layer and its nitride layer serve as a rigid protective shell to prevent the volume expansion of the primary particles from breaking the entire material, ensuring excellent structural stability and long cycle service life.

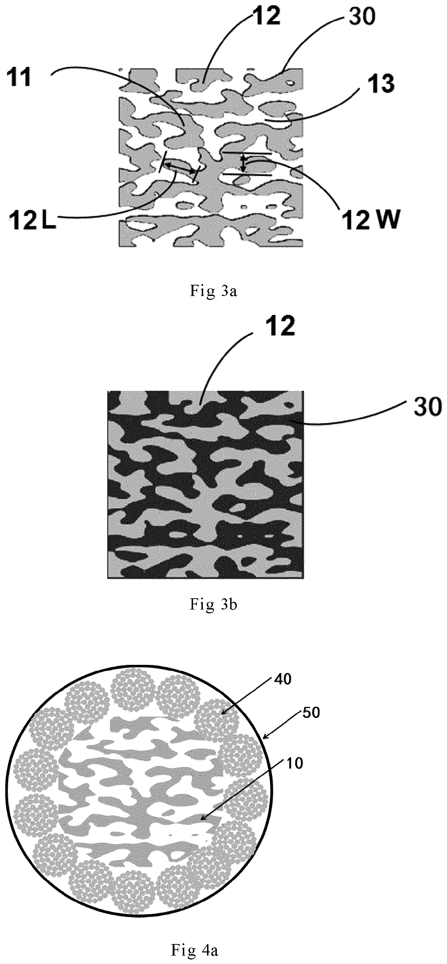

In some embodiments, as shown in FIG. 3a, the anode material further includes a protective layer 30. The protective layer 30 is located on the surface of the skeleton. That is, the anode material includes a primary particle protective layer.

The protective layer on the surface of the skeleton can improve conductivity and stability, facilitate the going in and out of lithium ions, and improve the rate performance of the anode material.

It can be understood that the primary particle includes a skeleton. The skeleton includes a main skeleton 11 located inside the primary particle and multiple branches 12 extending from the main skeleton 11 to the surface of the primary particle. The primary particle has a macroporous structure, and is formed with pores 13 extending to the surface of the primary particle. It can be understood that the primary particle is formed with through holes, and the porosity of the primary particles is not less than 30%.

In the embodiments, the specific structure (skeleton structure, pore structure) and performance parameters (porosity, median diameter, specific surface area, powder compaction density, powder compaction density) of the primary particles are described in the forgoing embodiments, which will not be repeated here.

In some embodiments, the protective layer includes at least one of a carbon layer, a metal oxide layer, and a metal nitride layer.

In some embodiments, the carbon layer is an amorphous carbon layer and/or a graphitic carbon layer.

In some embodiments, the carbon layer is only located on the surface of the skeleton. Based on 100% of the total mass of the composite anode material, the carbon mass content ranges from 5% to 25%, e.g., 5%, 8%, 10%, 12%, 15%, 18%, 20% or 25%, which is not limited here.

In some embodiments, the thickness of the carbon layer ranges from 1 nm to 300 nm.

In some embodiments, referring to FIG. 3b, when the content of the protective layer is high, the protective layer is further filled in the pore channels, which can further enhance the electrical conductivity and structural stability.

Specifically, the carbon layer is further filled in the pore channels. The carbon filled in the pore structure can provide more ion and electron transmission paths, has good carbon conductivity, is conducive to the going in and out of lithium ions, thereby improving the rate performance of the material, and further improving stability.

In some embodiments, when the carbon layer is located on the surface of the skeleton and is filled in the pore channels, a mass percentage of the carbon ranges from 25% to 75%, excluding 25%, based on 100% of the total mass of the composite anode material. In some embodiments, a mass percentage of the carbon is 25%, 28%, 30%, 35%, 40%, 45%, 50% or 75%, which is not limited here.

In some embodiments, the protective layer includes a metal oxide layer. The metal element of the metal oxide layer includes at least one of Si, Sn, Ge, Li, V, Al, Fe, and Zn. The metal oxide layer has the advantages of good rigidity, excellent compactness, so that the damage of the entire structure caused by the volume expansion of N can be effectively inhibited, the volume expansion of the material can be reduced while avoiding contact between the electrolyte and the N material, thereby reducing side effects, and improving the initial efficiency of the entire composite material.

Based on 100% of the total mass of the composite anode material, when the metal oxide layer is only located on the surface of the skeleton, a mass percentage of the metal oxide ranges from 5% to 25%.

When the metal oxide layer is located on the surface of the skeleton and is filled in the pore channels, based on 100% of the total mass of the composite anode material, a mass percentage of the metal oxide ranges from 25% to 75%, excluding 25%.

The protective layer includes a metal nitride layer. The metal element in the metal nitride layer includes at least one of Ti, V, Nb, Ta, W, and Zr. The metal nitride layer not only has good rigidity, but also has excellent electrical conductivity, so that the volume expansion of silicon can be effectively relieved while increasing the electrical conductivity of the material, thereby improving the rate performance of the material, reducing the irreversible capacity loss of the material, and bringing high capacity.

Based on 100% of the total mass of the composite anode material, when the metal nitride layer is only located on the surface of the skeleton, a mass percentage of the metal nitride ranges from 5% to 25%.

When the metal nitride is located on the surface of the skeleton and is filled in the pore channels, based on 100% of the total mass of the composite anode material, a mass percentage of the metal nitride ranges from 25% to 75%, excluding 25%.

As shown in FIG. 3b, in some embodiments, the carbon layer is further filled in the through holes of the primary particles. The carbon filled in the through holes can provide more ion and electron transmission paths, has good carbon conductivity, is conducive to the going in and out of lithium ions, thereby improving the rate performance of the material, and further improving stability.

In some embodiments, when the carbon layer is located on the surface of the skeleton and is filled in the through holes, based on 100% of the total mass of the composite anode material, a mass percentage of the carbon ranges from 25% to 75% excluding 25%, e.g., 25%, 28%, 30%, 35%, 40%, 45%, 50% or 75%, which is not limited here.

In some embodiments, the protective layer is a metal oxide layer. The metal element of the metal oxide layer includes at least one of oxides of Si, Sn, Ge, Li, V, Al, Fe, and Zn.

Based on 100% of the total mass of the composite anode material, when the oxide layer is located on the surface of the skeleton and is filled in the through holes, a mass percentage of the metal oxide ranges from 25% to 75%, excluding 25%.

In some embodiments, the protective layer is a metal nitride layer. The metal element in the metal nitride layer includes at least one of Ti, V, Nb, Ta, W, and Zr.

In some embodiments, when the metal nitride layer is located on the surface of the skeleton and is filled in the through holes, a mass percentage of the metal nitride ranges from 25% to 75%, excluding 25%.

In some embodiments, the median particle size of the anode material ranges from 0.1 µm to 15 µm. Optionally, the median particle size of the anode material can be 0.1 µm, 0.5 µm, 1 µm, 2 µm, 3 µm, 4 µm, 5 µm, 6 µm, 7µm, 8µm, 9µm or 10µm, which is not limited here. The median particle size of the composite anode material preferably ranges from 0.5 µm to 10 µm, and more preferably ranges from 1 µm to 8 µm.

In some embodiments, the specific surface area of the anode material ranges from 1 m²/g to 150 m²/g. Optionally, the specific surface area of the anode material can be 1 m²/g, 5 m²/g, 10 m²/g, 20 m²/g, 30 m²/g, 40 m²/g, 50 m²/g, 60 m²/g, 70 m²/g, 100 m²/g, 120 m²/g or 150 m²/g, which is not limited here. The specific surface area of the composite anode material preferably ranges from 1 m²/g to 50 m²/g. It can be understood that the smaller the specific surface area, the better the anode material. Excessive large specific surface area may tend to lead to the formation of SEI film, so that too much irreversible lithium salt is consumed, and the initial efficiency of the battery is reduced. Comprehensively considering the cost of the preparation process, the specific surface area is controlled to be 10 m²/g to 50 m²/g.

In some embodiments, the porosity of the anode material ranges from 10% to 70%, e.g., 10%, 30%, 35%, 40%, 50%, 55%, 60% or 70%, preferably 40% to 60%.

In some embodiments, as shown in FIG. 4a, the anode material further includes a nano-particle layer 40 on the surface of the primary particles 10 and a coating layer 50 coating the surface of the nano-particle layer. The nano-particle layer 40 is formed with micro-pores and/or meso-pores.

It can be understood that the anode material of the embodiments includes a core and a coating layer 50 on the surface of the core. The core includes a primary particle 10 and a nano-particle layer 40 located on the surface of the primary particle 10. The nano-particle layer 40 is formed with micro-pores and/or meso-pores.

The primary particle 10 includes a skeleton. The skeleton includes a main skeleton 11 located inside the primary particle and multiple branches 12 extending from the main skeleton 11 to the surface of the primary particle 10. The primary particle has a macroporous structure, and is formed with pores 13 extending to the surface of the primary particle.

The nano-particle layer is composed of nano-particles. The nano-particles can effectively prevent from pulverization of the material. The nano-particle layer is formed with micro-pores and/or meso-pores, so that the volume expansion of the material can be effectively relieved while promoting the infiltration and contact surface of the electrolyte, thereby accelerating the lithium ion transmission, and improving the rate performance of the entire material while ensuring the structural stability of the primary particles inside the anode material. After being coated by a coating layer, it has better electrical conductivity and stability, can effectively avoid the internal pores of the carbon filling material, and improve the initial efficiency of the material, so that the anode material can exhibit high capacity, long cycle service life, high rate performance, low expansion and other performances.

In the embodiments, the specific structure (skeleton structure, pore structure) and performance parameters of the primary particles (median particle size, specific surface area, powder compaction density, powder compaction density and other parameters) are described in the first aspect, which will not be repeated here.

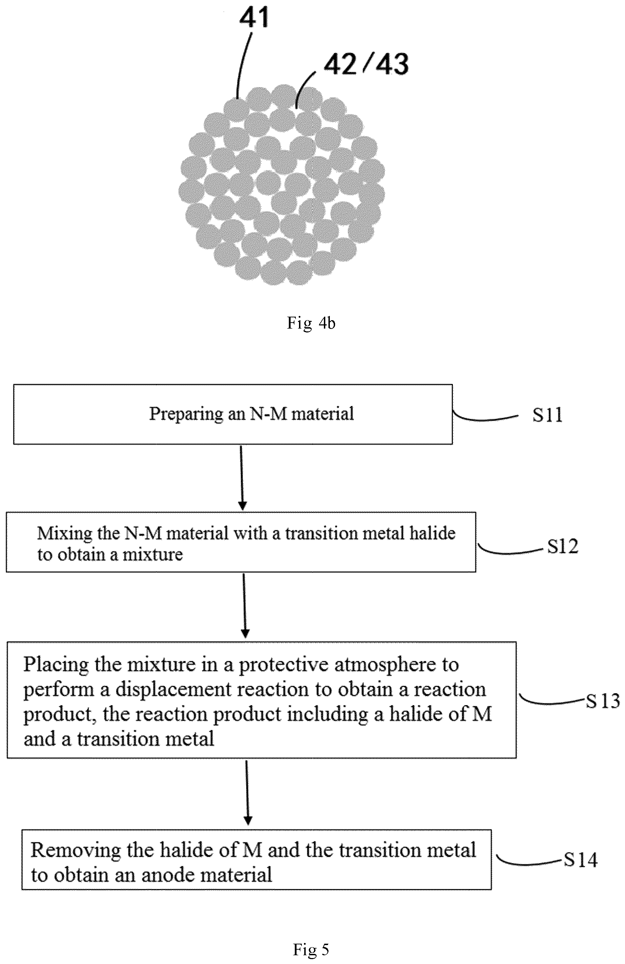

As shown in FIG. 4b, the nano-particle layer 40 includes multiple nano-particles 41 which are stacked on each other. The shape of the nano-particles 41 can be spherical, quasi-spherical, flat or any other shape, which is not limited here. The nano-particle 41 has previously formed with micro-pores 42 and/or meso-pores 43. The pore diameter of the micro-pores is less than 2 nm, and the pore diameter of the meso-pores is greater than 2 nm and less than 50 nm. It can be understood that the pore diameters of the micro-pores and meso-pores are smaller than the pore diameter of the pore of the primary particle.

In some embodiments, the nano-particles are at least one selected from silicon nano-particles, germanium nano-particles, antimony nano-particles, tin nano-particles, and boron nano-particles.

In some embodiments, the porosity of the anode material ranges from 30% to 70%, e.g., 30%, 40%, 50%, 60%, or 70%, which is not limited here. The porosity of the composite anode material preferably ranges from 40% to 60%.

In some embodiments, the porosity of the primary particles 10 ranges from 15% to 75%, e.g., 15%, 20%, 35%, 40%, 50%, 60%, or 75%, which is not limited here.

In some embodiments, the porosity of the nano-particle layer ranges from 5% to 35%, e.g., 5%, 10%, 15%, 20%, 25%, 30%, or 35%. In the embodiments, a ratio of the total porosity of the meso-pore of the nano-particle layer to the total porosity of the micro-pores of the nano-particle layer is (2-10): 1. It can be understood that in the nano-particle layer, the number of meso-pores is more than the number of micro-pores, which is conducive to circulation of the electrolyte.

It can be understood that the nano-particles 41 are formed on the surface of the primary particles 10 and are tightly bonded with the primary particles 10 to form a nano-particle layer 40. There is a clear grain boundary between the nano-particle layer 40 and the primary particles 10. The bonding is a higher bonding force which is not a Van der Waals' force, so that the connection between the primary particles 10 and the nano-particle layer 40 is more stable, and the overall structure is more stable.

More specifically, a volume ratio of pores in all pore structures ranges from 35% to 90%, a volume ratio of meso-pores in all pore structures ranges from 5% to 45%, and a volume ratio of micro-pores in all pore structures ranges from 5% to 20%.

In all the above pore structures, the volume of open pores accounts for 60% to 95%, and the volume of close pores accounts for 5% to 40%. The open pores can be divided into crosslinking holes, through holes and blind holes according to the type of pore structure. In open pores of all pore structures, the volume of the crosslinking holes accounts for 79% to 95% of the volume of all open pores, the volume of the through holes accounts for 4% to 20% of the volume of all open pores, and the volume of the blind holes accounts for 1% to 10% of the volume of all open pores.

It should be noted that, the blind hole is a via hole that connects the skin layer and the inner layer of the primary particle without passing through the primary particle, and the crosslinked hole is formed by the intersection of multiple pores. It can be understood that a relatively large number of crosslinking holes can provide a circulating passage for the electrolyte, and the electrolyte can circulate in the primary particles along the crosslinking holes, so that the expansion of the lithium battery is reduced while improving the lithium storage performance of silicon. The through hole can also provide a fluid passage for the electrolyte, but it may reduce the flow rate of the electrolyte, so that a volume ratio of the through holes should be less than a volume ratio of the crosslinking holes. Further, the blind holes are not conducive to the circulation of the electrolyte, and the electrolyte flowing into the blind holes can only flow out with the original path, so that the generation of the blind holes should be minimized during the preparation process.

In some embodiments, the median diameter of the nano-particles 41 ranges from 20 nm to 200 nm. In some embodiments, the median diameter of the nano-particles 41 can be 20 nm, 40 nm, 50 nm, 60 nm, 80 nm, 100 nm, 150 nm, or 200 nm, It is appreciated that the median diameter of the nano-particles 41 can also be set according to the actual situation, which is not limited here. The small-size nano-particles 41 are wrapped on the surface of the primary particles, so that the carbon layer is prevented from filling and blocking the pores and increasing the passages of electrolyte flow, thereby reducing the expansion of the lithium battery while improving the lithium storage performance of silicon.

In some embodiments, the thickness of the nano-particle layer 40 ranges from 20 nm to 2000 nm, e.g., 20 nm, 50 nm, 100 nm, 200 nm, 300 nm, 500 nm, 800 nm, 1000 nm, or 2000 nm. It is appreciated that the thickness of the nano-particle layer 40 can also be set based on actual situation, which is not limited here.

It can be understood that the nano-particle layer 40 with a suitable thickness can effectively prevent from pulverization of the material, and relieve the volume expansion of the material, ensuring the structural stability of the primary particles inside the material.

In some embodiments, the median particle size of the anode material ranges from 0.1 µm to 15 µm, optionally, 0.1 µm, 0.5 µm, 1 µm, 2 µm, 3 µm, 4 µm, 5 µm, 6 µm, 7 µm, 8 µm, 9 µm, 10µm or 15µm, which is not limited here. The median particle size of the composite anode material preferably ranges from 0.5 µm to 10 µm, and more preferably ranges from 1 µm to 8 µm.

In some embodiments, the specific surface area of the anode material ranges from 1 m²/g to 100 m²/g. Optionally, the specific surface area of the composite anode material can be 1 m²/g, 5 m²/g, 10 m²/g, 15 m²/g, 20 m²/g, 25 m²/g, 30 m²/g, 35 m²/g, 40 m²/g, 45 m²/g, 50 m²/g, 60 m²/g, 80 m²/g or 100 m²/g, which is not limited here. The specific surface area of the composite anode material preferably ranges from 10 m²/g to 50m²/g. It can be understood that excessive large specific surface area may tend to lead to the formation of SEI film, so that too much irreversible lithium salt is consumed, and the initial efficiency of the battery is reduced. Comprehensively considering the cost of the preparation process, the specific surface area is controlled to be 10 m²/g to 50 m²/g.

The coating layer in the anode material in the embodiments is a carbon layer. The carbon layer has a thickness of 5 nm to 100 nm, e.g., 5 nm, 10 nm, 20 nm, 30 nm, 40 nm, 50 nm, 60 nm, 70 nm, 80 nm or 100 nm. The carbon layer is excessively thick, and the lithium ion transmission efficiency is reduced, so that it is not conducive to the high-rate charging and discharging of the material, thereby reducing the overall performance of the anode material. The carbon layer is too thin, so that it is not conducive to increasing the electrical conductivity of the anode material and has weak inhibition of the volume expansion of the material, thereby resulting in a poor long cycle performance.

In some embodiments, a mass percentage of carbon in the anode material ranges from 5% to 50%, e.g., 5%, 8%, 10%, 15%, 20%, 25%, 30%, 40% or 50%, which is not limited here. Optionally, a mass percentage of carbon ranges from 10% to 30%.

### Second Aspect

As the anode material according to the first aspect, the anode material includes primary particles. The primary particle includes a skeleton. The skeleton includes a main skeleton 10 located inside the primary particle and multiple branches 11 extending from the main skeleton 10 to the surface of the primary particle. The primary particle has a macroporous structure. The primary particle is formed with pores 13 extending to the surface of the primary particle. The primary particle is formed with through holes, and the porosity of the primary particle is not less than 30%.

FIG. 5 shows a method for preparing an anode material. The method includes following steps S11 to S14.

An embodiment provides a method for preparing an anode material. The method includes following steps S11 to S14.

In S11, preparing an N-M material.

In some embodiments, the N-M material includes at least one of an N-M alloy and an N-M intermetallic compound. The N in the N-M material includes at least one of Si, Ge, Sn, B, and Sb. The M in the N-M material includes at least one of Mg, Al, Li, and Ca. In a specific example, the N-M material can be Si-Mg alloy, Si-Al alloy, Ge-Mg alloy, or Ge-Al alloy.

In some embodiments, N powder and M powder are mixed, and perform a heating reaction in a protective atmosphere to obtain an N-M material. As in the specific example, silicon powder and magnesium powder are mixed, and performs a heating reaction in a protective atmosphere to obtain a Si-Mg alloy.

In some embodiments, D50 of the N powder ranges from 0.2 µm to 15 µm, e.g., 0.2 µm, 0.5 µm, 1 µm, 3 µm, 5 µm, 6 µm, 8 µm, 10 µm, 12 µm, 13 µm, or 15 µm.

In some embodiments, a molar ratio of the N powder to the M powder is 1:(1.5 to 2.5), e.g., 1:1.5, 1:1.8, 1:2.0, 1:2.1, 1:2.3, or 1:2.5.

Further, the N powder has a solid structure, and the N powder includes at least one particle having a shape of sphere, flake, fiber, and diamond.

In some embodiments, a heating rate of the heating reaction in the step of the method for preparing the N-M material ranges from 1°C/min to 10°C/min, e.g., 1°C/min, 3°C/min, 4°C/min, 5°C/min, 6°C/min, 8°C/min or 10°C/min.

In some embodiments, the heating reaction in the steps of the method for preparing the N-M material is heat-preserved at 400°C to 900°C for 2 hours to 8 hours. For example, the temperature is 400°C, 500°C, 600°C, 700°C, 800°C or 850°C. For example, the time is 2 hours, 4 hours, 5hours, 6 hours, 7 hours or 8 hours.

In some embodiments, after the reaction, the obtained N-M material is pulverized to powder with D50 of 0.2 µm to 15 µm, e.g., 0.2 µm, 1 µm, 2 µm, 3.5 µm, 5 µm, 7 µm, 10 µm, 12 µm, or 15 µm.

In some embodiments, the equipment used for pulverization includes any one of a planetary ball mill, a sand mill, or a jet mill.

It is appreciated that N-M materials can also be prepared by other methods, e.g., high-energy ball milling, vacuum smelting, and hot pressed sintering.

It can be understood that the N-M material can be obtained commercially, at this time, step S11 can be omitted.

In S12, mixing the N-M material with a transition metal halide to obtain a mixture.

In some embodiments, the D50 of the N-M material ranges from 0.1 µm to 15 µm, e.g., 0.1 µm, 0.2 µm, 0.5 µm, 1 µm, 3 µm, 5 µm, 8 µm, 10 µm, 12 µm, or 15 µm.

Different types of N-M materials can obtain skeleton units having different shapes, including at least one of rod-shaped nano-particles, nano-sheets, nano-wires, and nano-tubes. For example, different types of silicon alloys can obtain skeleton units having different shapes, including at least one of rod-shaped silicon nano-particles, silicon nano-sheets, silicon nano-wires, and silicon nano-tubes.

In some embodiments, the chemical formula of the transition metal halide is ABx, where x=2 or 3, A includes at least one of Sn, Cu, Fe, Zn, Co, and Ni, and B includes at least one of Cl, F, and Br.

In some embodiments, a molar ratio of the N-M material to the transition metal halide is 1:(0.2-2), e.g., 1:0.2, 1:0.5, 1:1, 1:1.2, 1:1.5, or 1:2.

In some embodiments, in the step of mixing the N-M material and the transition metal halide, at least one of an alkali metal halide and an alkaline earth metal halide is further added.

In some embodiments, the chemical formula of the alkali metal halide and/or alkaline earth metal halide is ZBy, where y=1 or 2, Z includes at least one of Li, Na, K, Mg, and Ca, and B includes at least one of Cl, F and Br.

In some embodiments, a molar ratio of at least one of the alkali metal halide and the alkaline earth metal halide to the transition metal halide is 1: (0.2 to 1.5).

Alkali metal halides and/or alkaline earth metal halides serve as molten salt media at high temperatures. On the one hand, they can absorb the heat released during the reaction and maintain the stability of the structure. On the other hand, they can increase the solubility of transition metal halides in them and promote the reaction sufficiently, thereby improving the yield and purity.

The reasons for the formation of the structure of the anode material in the embodiments of the present disclosure are explained as follows. I. If a transition metal chloride with high melting point (greater than the melting point of the reaction product M_{z}Bₓ) is selected to participate in the de-alloying process, the reactants M_{z}Bₓ (e.g., MgCl₂, MgF₂ or MgBr₂) are all in a molten state, providing an interconnected liquid template for the formation of interconnected nano-skeleton and ensuring the continuity of the pore of the porous anode material. If alkali metal halide (ABₓ) or alkaline earth metal halide (ZB_{y}) are further added, the reaction temperature can be further reduced, so that the melting point of the mixture of M_{z}Bₓ and ABₓ is lower than the melting point of M_{z}Bₓ itself, thereby achieving that M_{z}Bₓ can also be used as the liquid template at a temperature lower than the melting point. II. When a transition metal chloride having a melting point lower than the melting point of the reaction product M_{z}Bₓ is selected as the reactant, in order to prevent such transition metal chloride (e.g., ZnCl₂ or SnCl₂) from volatilizing at high temperatures, alkali metal halide (ABₓ) or Alkaline earth metal halides (ZB_{y}) are added to prevent the volatilization of these transition metal chlorides and promote the sufficient reaction. Meanwhile, the melting point of the reaction product M_{z}Bₓ can be lowered, and the reaction temperature can be lowered, and the M_{z}Bₓ is in a molten state, thereby providing a continuous liquid template.

It can be understood that the mixture can be obtained commercially, at this time, step S12 can be omitted.

In S13, placing the mixture in a protective atmosphere, and performing a displacement reaction, and obtaining a reaction product. The reaction product includes a halide of M and a transition metal.

In some embodiments, a heating rate of the heating reaction ranges from 1°C/min to 20°C/min, e.g., 1°C/min, 3°C/min, 5°C/min, 8°C/min, 10°C/min, 12°C/min, 14°C/min, 16°C/min, 18°C/min or 20°C/min.

In some embodiments, the heating reaction is heat-preserved at a temperature of 200°C to 950°C, e.g., 200°C, 235°C, 260°C, 300°C, 400°C, 450°C, 500°C, 600°C, 700°C, and 800°C. °C or 900°C, for 2 hours to 18 hours.

In some embodiments, the gas in the protective atmosphere includes at least one of nitrogen, helium, neon, argon, krypton, and xenon.

In S14, removing the halide of M and the transition metal to obtain the anode material.

In some embodiments, the method for removing a halide of M and a transition metal in the reaction product is treating the reaction product in an acid solution and/or a transition metal halide solution. The processed product can still be recycled to use.

In some embodiments, the acid in the acid solution includes at least one of hydrochloric acid, nitric acid, and sulfuric acid.

In some embodiments, the concentration of the acid solution ranges from 1 mol/L to 5 mol/L, and the treatment time in the acid solution ranges from 1 hour to 10 hours. For example, the concentration of the acid solution is 1 mol/L, 2 mol/L, 2.5 mol/L, 3 mol/L, 4 mol/L, or 5 mol/L. For example, the treatment time is 1 hour, 3 hours, 5 hours, 6 hours, 8 hours, 9 hours, or 10 hours.

In some embodiments, the concentration of the transition metal halide solution ranges from 0.5 mol/L to 5 mol/L, and the treatment time in the transition metal halide solution ranges from 1 hour to 12 hours. For example, the concentration of the metal halide solution is 0.5 mol/L, 1 mol/L, 1.5 mol/L, 2 mol/L, 2.5 mol/L, 3.5 mol/L, 4 mol/L or 5 mol/L. For example, the treatment time is 1 hour, 3 hours, 5 hours, 6 hours, 8 hours, 9 hours, 10 hours or 11 hours.

In the method for preparing the anode material provided by the embodiments of the present disclosure, the N-M material is used to react with the transition metal halide at a high temperature, and then the M in the N-M material is removed to obtain the porous N anode material. Due to the metal halide produced by the reaction, taking silicon-magnesium alloy or silicon-aluminum alloy as an example, the metal halide produced is the halide of magnesium or aluminum which is in a molten state at the reaction temperature, and the molten halide has continuity, further providing an interconnected liquid template for the formation of interconnected nano-silicon. After removing metal halides, porous silicon is obtained. In the structure, silicon nano-units grow along the interconnected liquid template to form an interconnected silicon skeleton. After the template is removed, the formed silicon skeleton has a continuous passing through pore structure in three-dimensional directions. In the present disclosure, a primary complete particle is provided, the entire skeleton connected enhances the electron transfer and ion diffusion of the material, which can effectively release the stress after lithiation, and prevent from pulverization of the material due to the stress concentration. In the prior art, it is a generally secondary particle, that is, the primary nano-particles are assembled or stacked into porous silicon of large secondary particle, e.g., pomegranate-shaped silicon anodes, raspberry-shaped silicon anodes, and watermelon-shaped silicon anodes. Since there are obvious grain boundaries among these primary particles, lithiation stress is concentrated, particle is broken, so that the entire structure is destructed, and electrochemical performance is ultimately deteriorated.

The method for preparing the anode material provided in the embodiments of the present disclosure has the outstanding advantages of simplicity, safety, and environmental protection, producing on a large scale. It is only necessary to cause the N-M material (e.g., silicon alloys) to react with transition metal halides at high temperatures and remove the metal components in the silicon alloys, a large amount of porous silicon is obtained with high yield. The chemical formula of transition metal halides is ABₓ (x=2 or 3, the A includes at least one of Sn, Cu, Fe, Zn, Co and Ni, the B includes at least one of Cl, F and Br), the chemical formula of the silicon alloy is M_{z}Si (z=1, 2 or 3, M includes Mg and Al). The reaction equation is ABₓ+M_{z}Si=Si+A+M_{z}Bₓ.

In addition, in such a method, raw materials has many sources and low cost, the by-products can be recycled to use, and cheap commercial silicon can be used as raw materials to prepare porous silicon anode materials (Ge, B, Sn, and Sb). The obtained N anode materials have a porous structure, and the morphology and pore structure are easy to be controlled. Since the reaction is in a liquid environment, the reaction can be performed sufficiently, so that the yield and product purity are greatly improved.

By improving the overall process flow and the parameter conditions of each reaction step (e.g., the types and proportions of reactants, reaction temperature, and reaction time, and the like), the morphology of the product can be controlled to realize the regulation of performance. For example, the alloy composition can be controlled to change the size and porosity of the pore (generally the higher the silicon content in silicon alloys, the smaller the pore size). The reaction time and reaction temperature can be controlled to change the depth of the pores (generally, the longer the reaction time and the higher the reaction temperature, the deeper the depth of the pore channels. It is appreciated that the reaction temperature should not exceed 950°C. For example, since the excessive high reaction temperature may cause the generated silicon to react with transition metals to form silicide (e.g., copper silicide or nickel silicide), the performance of the product may be deteriorated).

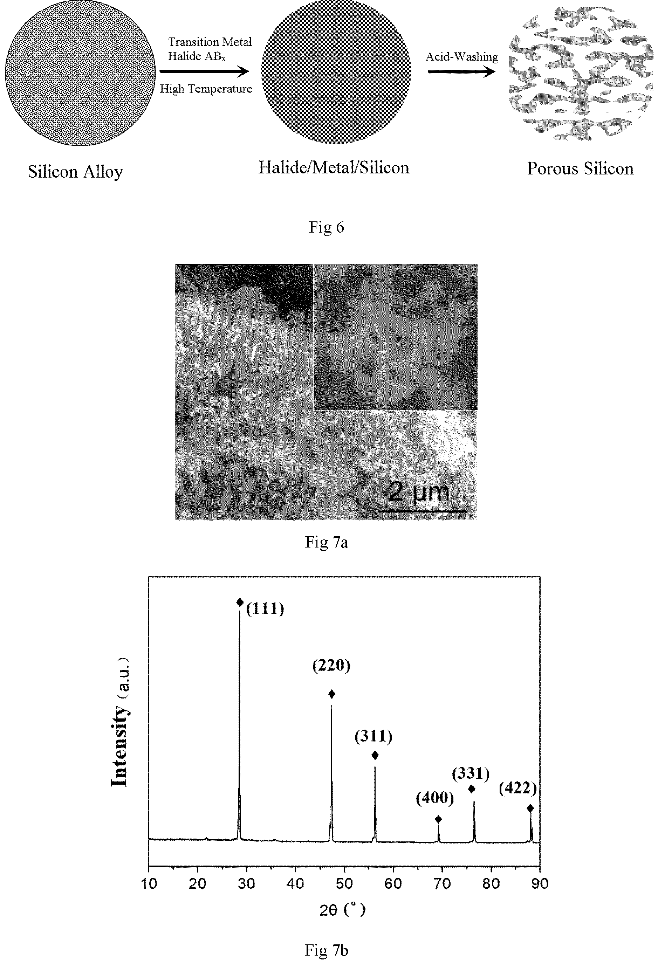

In a specific example, as shown in FIG. 6, taking the silicon anode material as an example, the method for preparing the silicon anode material includes following steps. 1) preparing Si-M alloy; 2) mixing Si-M alloy with transition metal halide to obtain a mixture, wherein the M in the Si-M alloy includes at least one of Mg, Al, Li and Ca;. 3) placing the mixture n a protective atmosphere for substitution reaction to obtain a reaction product, and the reaction product includes a halide of M, silicon and a transition metal; and 4) removing the halide of M and the transition metal to obtain a silicon anode material.

The methods for preparing Ge, B, Sn and Sb anode materials are also similar to the method for preparing the above porous silicon anode materials.

In another embodiment, a lithium ion battery includes the silicon anode material as described in the first aspect. The lithium ion battery has the advantages of high capacity, long cycle service life and low expansion.

### Example 1

1 µm of silicon powder and magnesium powder were mixed uniformly at a molar ratio of 1:2 and placed into an atmosphere furnace, and heated under the protection of argon inert gas to 600°C at a heating rate of 3°C/min and heat-preserved for 6 hours to make them react sufficiently to obtain a silicon-magnesium alloy. The silicon-magnesium alloy was ball-milled to obtain 1 µm of silicon-magnesium alloy powder, and then 1 mol of silicon-magnesium alloy powder was uniformly mixed with 1 mol of stannous chloride (SnCl₂) and then was uniformly mixed with 1 mol of sodium chloride (NaCI). The obtained mixture was placed into the argon atmosphere to heat to 750°C at a heating rate of 3°C/min, and then heat-preserved for 8 hours to sufficiently react to obtain a reaction product. The reaction product was mechanically stirred in hydrochloric acid solution of 1 mol/L for 2 hours, filtered, washed, and dried to obtain a porous silicon anode material with a median particle size of 1 µm.

FIG. 7a is an SEM photograph of a silicon anode material of Example 1 according to an embodiment of the present disclosure, and FIG. 7b is an XRD pattern showing a silicon anode material of Example 1 according to an embodiment of the present disclosure.

It can be seen from FIG. 7a that the silicon anode material prepared is a primary particle. The primary particle includes a silicon skeleton. The silicon skeleton includes a main skeleton located inside the primary particle and multiple branches extending from the main skeleton to the surface of the primary particle. The primary particle has a macroporous structure. Pores are formed inside the primary particles, and extend to the surface of the primary particle. From the XRD diffraction pattern of the sample being acid-washed in FIG. 7b, it can be seen that three strong peaks at 28.4°, 47.3° and 56.1°Correspond to three strong peaks of silicon (JCPDS No. 27-1402), and there is basically no impurity phase.

### Example 2

1 µm of silicon powder and magnesium powder were mixed uniformly at a molar ratio of 1:2 and placed into an atmosphere furnace, and heated under the protection of argon inert gas to 650°C at a heating rate of 5°C/min and heat-preserved for 3 hours to make them react sufficiently to obtain a silicon-magnesium alloy. The silicon-magnesium alloy was ball-milled to obtain 0.5 µm of silicon-magnesium alloy powder, and then 1 mol of silicon-magnesium alloy powder was uniformly mixed with 1 mol of copper chloride (CuCl₂). The obtained mixture was placed into the argon atmosphere to heat to 800°C at a heating rate of 3°C/min, and then heat-preserved for 6 hours to sufficiently react to obtain a reaction product. The reaction product was mechanically stirred in 1 L hydrochloric acid solution of 2 mol/L for 3 hours, filtered, washed, and dried to obtain a porous silicon anode material with a median particle size of 0.5 µm.

### Example 3

1.5 µm of silicon powder and magnesium powder were mixed uniformly at a molar ratio of 1:2 and placed into an atmosphere furnace, and heated under the protection of argon inert gas to 600°C at a heating rate of 5°C/min and heat-preserved for 6 hours to make them react sufficiently to obtain a silicon-magnesium alloy. The silicon-magnesium alloy was ball-milled to obtain 1 µm of silicon-magnesium alloy powder, and then 1 mol of silicon-magnesium alloy powder was uniformly mixed with with 1 mol of stannous chloride (SnCl₂) and 1 mol of lithium chloride (LiCl). The obtained mixture was placed into the argon atmosphere to heat to 400°C at a heating rate of 3°C/min, and then heat-preserved for 8 hours to sufficiently react to obtain a reaction product. The reaction product was mechanically stirred in 2 L hydrochloric acid solution of 1 mol/L for 3 hours, filtered, washed, and dried to obtain a porous silicon anode material with a median particle size of 1.2 µm.

### Example 4

1.5 µm of silicon powder and aluminum powder were mixed uniformly at a molar ratio of 1:1.5 and placed into an atmosphere furnace, and heated under the protection of argon inert gas to 650°C at a heating rate of 10°C/min and heat-preserved for 6 hours to make them react sufficiently to obtain a silicon-aluminum alloy. The silicon-aluminum alloy was ball-milled to obtain 2 µm of silicon-aluminum alloy powder, and then 1 mol of silicon-aluminum alloy powder was uniformly mixed with with 0.8 mol of stannous chloride (SnCl₂). The obtained mixture was placed into the argon atmosphere to heat to 600°C at a heating rate of 5°C/min, and then heat-preserved for 6 hours to sufficiently react to obtain a reaction product. The reaction product was mechanically stirred in 1 L hydrochloric acid solution of 1 mol/L for 2 hours, filtered, washed, and dried to obtain a porous silicon anode material with a median particle size of 2 µm.

### Example 5

1.5 µm of silicon powder and aluminum powder were mixed uniformly at a molar ratio of 1:2 and placed into an atmosphere furnace, and heated under the protection of argon inert gas to 650°C at a heating rate of 10°C/min and heat-preserved for 6 hours to make them react sufficiently to obtain a silicon-aluminum alloy. The silicon-aluminum alloy was ball-milled to obtain 1 µm of silicon-aluminum alloy powder, and then 1 mol of silicon-aluminum alloy powder was uniformly mixed with with 1 mol of stannous bromide (SnBr₂). The obtained mixture was placed into the argon atmosphere to heat to 650°C at a heating rate of 5°C/min, and then heat-preserved for 6 hours to sufficiently react to obtain a reaction product. The reaction product was mechanically stirred in 1 L hydrochloric acid solution of 1 mol/L for 5 hours, filtered, washed, and dried to obtain a porous silicon anode material.

### Example 6

2.5 µm of silicon powder and magnesium powder were mixed uniformly at a molar ratio of 1:2 and placed into an atmosphere furnace, and heated under the protection of argon inert gas to 650°C at a heating rate of 10°C/min and heat-preserved for 6 hours to make them react sufficiently to obtain a silicon-magnesium alloy. The silicon-magnesium alloy was ball-milled to obtain 1 µm of silicon-magnesium alloy powder, and then 1 mol of silicon-magnesium alloy powder was uniformly mixed with 1 mol of stannous bromide (SnBr₂) and 1 mol of potassium bromide (KBr). The obtained mixture was placed into the argon atmosphere to heat to 450°C at a heating rate of 5°C/min, and then heat-preserved for 6 hours to sufficiently react to obtain a reaction product. The reaction product was mechanically stirred in 1 L hydrochloric acid solution of 1 mol/L for 4 hours, filtered, washed, and dried to obtain a porous silicon anode material.

### Example 7

Except for adjusting a molar ratio of silicon powder to magnesium powder to 1:5, other methods and conditions are the same as in Example 1.

### Example 8

Except for adjusting the temperature when the silicon-magnesium alloy was reacted with stannous chloride to 300°C, the other methods and conditions are the same as in Example 1.

### Example 9

Except for adjusting the temperature when the silicon-magnesium alloy was reacted with stannous chloride to 850°C, the other methods and conditions are the same as in Example 1.

### Example 10

1.5 µm of silicon powder and aluminum powder were mixed uniformly at a molar ratio of 1:1.5 and placed into an atmosphere furnace, and heated under the protection of argon inert gas to 650°C at a heating rate of 10°C/min and heat-preserved for 6 hours to make them react sufficiently to obtain a silicon-aluminum alloy. The silicon-aluminum alloy was ball-milled to obtain 2 µm of silicon-aluminum alloy powder, and then 1 mol of silicon-aluminum alloy powder was uniformly mixed with with 0.8 mol of zinc chloride (ZnCl₂). The obtained mixture was placed into the argon atmosphere to heat to 600°C at a heating rate of 5°C/min, and then heat-preserved for 6 hours to sufficiently react to obtain a reaction product. The reaction product was mechanically stirred in 1 L hydrochloric acid solution of 1 mol/L for 2 hours, filtered, washed, and dried to obtain a porous silicon anode material with a median particle size of 2 µm.

### Example 11

1 µm of germanium powder and magnesium powder were mixed uniformly at a molar ratio of 1:2 and placed into an atmosphere furnace, and heated under the protection of argon inert gas to 650°C at a heating rate of 3°C/min and heat-preserved for 6 hours to make them react sufficiently to obtain a germanium-magnesium alloy. The germanium-magnesium alloy was ball-milled to obtain 1 µm of germanium-magnesium alloy powder, and then 1 mol of germanium-magnesium alloy powder was uniformly mixed with 1 mol of stannous chloride and 1 mol of sodium chloride. The obtained mixture was placed into the argon atmosphere to heat to 750°C at a heating rate of 3°C/min, and then heat-preserved for 8 hours to sufficiently react to obtain a reaction product. The reaction product was mechanically stirred in hydrochloric acid solution of 1 mol/L for 2 hours, filtered, washed, and dried to obtain a porous germanium anode material with a median particle size of 1 µm.

### Example 12

1 µm of boron powder and magnesium powder were mixed uniformly at a molar ratio of 2:1 and placed into an atmosphere furnace, and heated under the protection of argon inert gas to 600°C at a heating rate of 3°C/min and heat-preserved for 6 hours to make them react sufficiently to obtain a boron-magnesium alloy. The boron-magnesium alloy was ball-milled to obtain 1 µm of boron-magnesium alloy powder, and then 1 mol of boron-magnesium alloy powder was uniformly mixed with 1 mol of zinc chloride and was uniformly mixed with 1 mol of potassium chloride. The obtained mixture was placed into the argon atmosphere to heat to 750°C at a heating rate of 3°C/min, and then heat-preserved for 8 hours to sufficiently react to obtain a reaction product. The reaction product was mechanically stirred in hydrochloric acid solution of 1 mol/L for 2 hours, filtered, washed, and dried to obtain a porous boron anode material with a median particle size of 1 µm.

### Example 13

1 µm of tin powder and magnesium powder were mixed uniformly at a molar ratio of 1:2 and placed into an atmosphere furnace, and heated under the protection of argon inert gas to 650°C at a heating rate of 3°C/min and heat-preserved for 6 hours to make them react sufficiently to obtain a tin-magnesium alloy. The tin-magnesium alloy was ball-milled to obtain 1 µm of tin-magnesium alloy powder, and then 1 mol of tin-magnesium alloy powder was uniformly mixed with 1 mol of zinc chloride and was uniformly mixed with 1 mol of potassium chloride. The obtained mixture was placed into the argon atmosphere to heat to 750°C at a heating rate of 3°C/min, and then heat-preserved for 8 hours to sufficiently react to obtain a reaction product. The reaction product was mechanically stirred in hydrochloric acid solution of 1 mol/L for 2 hours, filtered, washed, and dried to obtain a porous tin anode material with a median particle size of 1 µm.

### Example 14

1 µm of tellurium powder and magnesium powder were mixed uniformly at a molar ratio of 1:1 and placed into an atmosphere furnace, and heated under the protection of argon inert gas to 600°C at a heating rate of 3°C/min and heat-preserved for 6 hours to make them react sufficiently to obtain a tellurium-magnesium alloy. The tellurium-magnesium alloy was ball-milled to obtain 1 µm of tellurium-magnesium alloy powder, and then 1 mol of tellurium-magnesium alloy powder was uniformly mixed with 1 mol of copper chloride and was uniformly mixed with 1 mol of sodium chloride. The obtained mixture was placed into the argon atmosphere to heat to 750°C at a heating rate of 3°C/min, and then heat-preserved for 8 hours to sufficiently react to obtain a reaction product. The reaction product was mechanically stirred in hydrochloric acid solution of 1 mol/L for 2 hours, filtered, washed, and dried to obtain a porous tellurium anode material with a median particle size of 1 µm.

### Comparative Example 1

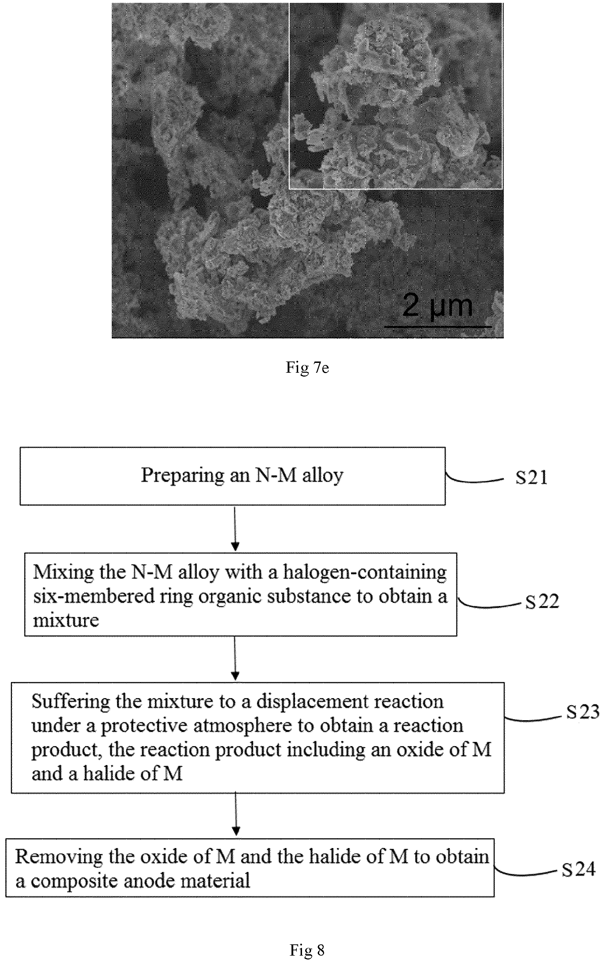

This comparative example is Example 1 of patent application of CN 105399100 A. The SEM photograph of the prepared nano-porous silicon is shown in FIG. 7e, and the porous silicon structure cannot be obtained.

### Comparative Example 2

Except for not adding stannous chloride, the other methods and conditions are the same as in Example 1.

### Performance Test:

Following methods were used to test the anode materials of each of Examples 1-14 (denoted as S1 to S14) and Comparative Examples 1-2 (denoted as R1 to R2).

The tap density is tested by Kantar AutoTap tap density meter.

The specific surface area of the material was tested using the Tristar3000 automatic specific surface area and porosity analyzer from Micromeritics Instruments Corporation (US).

Porosity: AutoPore IV9510 from Micromeritics Instruments Corporation (US) is used to test the porosity. Powder compaction density: The domestic powder compaction density tester FT-100F is used for testing in accordance with the standard GBT 24533-2009.

Performance Test of a coin cell at the first week: test of a coin cell at the first week is performed on the LAND CT2001A battery test system, in which the charging and discharging current was 0.05C.

Cycle test: the coin cell is tested on a LAND CT2001A battery test system, in which the current is 0.2C, and the cycle is 150 times.

The test results are shown in Table 1 and Table 2.

**Table 1**

| Examples | Specific surface area (m²/g) | Porosity (%) | Tap density (g/cm³) | Compact density of powder ( g/cm³) |
|---|---|---|---|---|
| S1 | 18 | 50 | 0.73 | 1.4 |
| S2 | 35 | 59 | 0.67 | 1.3 |
| S3 | 25 | 52 | 0.77 | 1.26 |
| S4 | 45 | 56 | 0.67 | 1.16 |
| S5 | 28 | 53 | 0.71 | 1.31 |
| S6 | 60 | 66 | 0.59 | 1.2 |
| S7 | 62 | 74 | 0.51 | 1.2 |
| S8 | 12 | 31 | 0.88 | 1.8 |
| S9 | 17 | 45 | 0.81 | 1.6 |
| S10 | 8 | 10 | 1.1 | 1.7 |
| S11 | 15 | 51 | 0.89 | 1.8 |
| S12 | 13 | 34 | 0.71 | 1.5 |
| S13 | 19 | 48 | 0.91 | 1.9 |
| S14 | 16 | 44 | 0.69 | 1.7 |
| R1 | 29.16 | - | - | - |
| R2 | - | - | - | - |

**Table 2**

| Examples | Discharge specific capacity (mAh/g) | First Coulomb efficiency (%) | Capacity after 150 cycles at 0.2C (mAh/g) | Capacity retention rate after 150 cycles at 0.2C (%) | |
|---|---|---|---|---|---|
| S1 | 3300 | 84.8 | 1200 | 40 | |
| S2 | 3250 | 82.1 | 1100 | 35 | |
| S3 | 3266 | 82.9 | 1146 | | 38 |
| S4 | 3253 | 80.6 | 1047 | | 32 |
| S5 | 3276 | 82.6 | 1141 | | 36 |
| S6 | 3223 | 75.1 | 998.7 | | 30 |
| S7 | 3120 | 60.2 | 1109 | | 35 |
| S8 | 3058 | 55.5 | 856.2 | | 23 |
| S9 | 3215 | 74.2 | 810.3 | | 28 |
| S10 | 2312 | 70.6 | 656 | | 22 |
| S11 | 1600 | 84.5 | 925 | | 57.8 |
| S12 | 1218 | 80.1 | 712 | | 58.5 |
| S13 | 990 | 85.6 | 598 | | 60.4 |
| S14 | 2568 | 81.9 | 1058 | | 41.2 |
| R1 | - | - | - | - | |
| R2 | - | - | - | - | |

| | | | | | |
|---|---|---|---|---|---|
| "-" in the table means none. | | | | | |

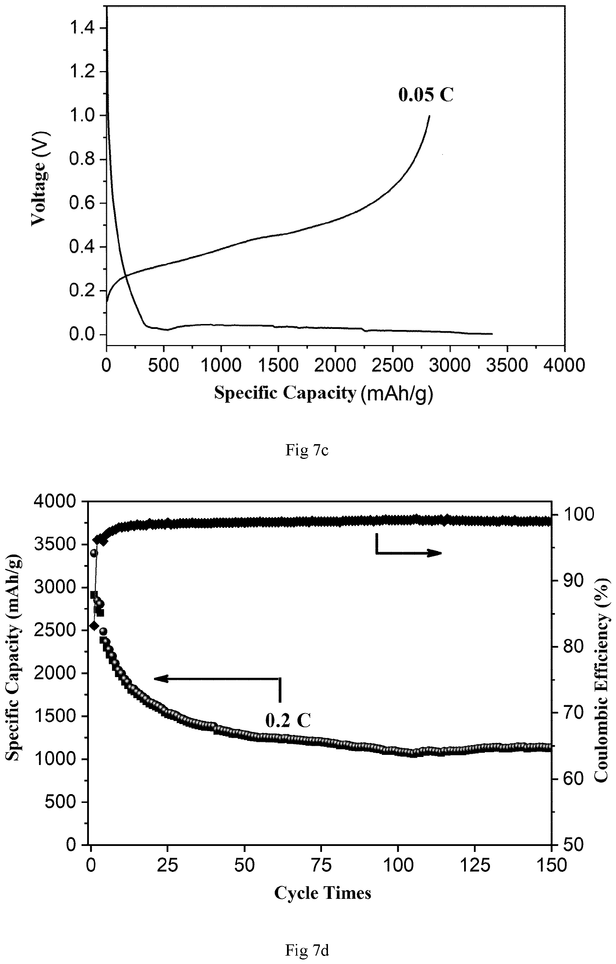

FIG. 7c is an initial charging and discharging curve of a silicon anode material of Example 1 according to an embodiment of the present disclosure, in which the charging and discharging current is 0.05C, and a half-cell test is adopted. FIG. 7d is a graph showing cycle performance of a silicon anode material of Example 1 according to an embodiment of the present disclosure, in which the charging and discharging current is 0.2C. It can be seen from FIG. 7c and FIG. 7d that the material has a higher initial charging and discharging efficiency and excellent cycle performance. Although Example 7 to Example 9 adjust a molar ratio of reactants, the reaction temperature and reaction time, porous silicon could still be obtained, but the performance was somewhat lower than that of Example 1.

According to the test data in Table 1 and Table 2, by comparing Example 7 with Example 1, a molar ratio of silicon powder to magnesium powder is increased, the porosity is increased, the tap density is reduced, the initial efficiency is reduced, and the energy density is reduced.

Comparing Example 8 with Example 1, the temperature is excessively low, the reaction is insufficient, the structure is uneven, the inner and outer pore structures are inconsistent, the structure is unstable, and the cycle performance is reduced.

Comparing Example 9 with Example 1, the temperature is excessively high, the crystal grain size becomes larger, the silicon skeleton becomes thicker, it is easy to pulverize, the initial efficiency is reduced, and the cycle performance is reduced.

By comparing Example 1 with Comparative Example 1, the specific surface area of the porous silicon obtained in Example 1 is smaller than that of Comparative Example 1. In Comparative Example 1, zinc chloride is used, the reaction temperature is 300°C, the magnesium chloride produced at this temperature is a solid granular form and is a solid template, resulting in the final porous silicon being accumulated by silicon nano-particles, and finally leading to a larger specific surface area and a lower initial efficiency. However, in Example 1, a heat treatment temperature range is 750°C, the magnesium chloride produced is a continuous liquid state and is an interconnected liquid template, resulting in porous silicon having a skeleton structure, and greatly reducing the specific surface area of the material and improving the initial efficiency.

By comparing Example 1 with Comparative Example 2, porous silicon cannot be prepared without adding stannous chloride.

Similar to the method of Example 1, Examples 11-14 change raw materials to prepare porous germanium, porous boron, porous tin and porous tellurium that have a skeleton structure, respectively.

### Third aspect

The anode material as described in the first aspect includes primary particles and a coating layer. When the coating layer is a carbon layer, as shown in FIG. 8, the method for preparing the anode material includes following steps S21 to S24.

In S21, preparing an N-M alloy.

In some embodiments, the N in the N-M alloy includes at least one of Si, Ge, Sn, B, and Sb. The M in the N-M alloy includes at least one of Mg, Al, Zn, and Ca. In a specific example, the N-M alloy can be Si-Mg alloy, Si-Al alloy, Ge-Mg alloy, or Ge-Al alloy. Different types of alloys can obtain different shapes of branches, including at least one of rod-shaped nano-particles, nano-sheets, nano-wires, and nano-tubes.

In some embodiments, the N-M alloy preparation method is to mix the N powder and the active metal M and then perform a heating reaction under a protective gas to prepare the N-M alloy.

The particle size of the N powder ranges from 0.1 µm to 15 µm, e.g., 0.1 µm, 0.5 µm, 1 µm, 3 µm, 5 µm, 8 µm, 10 µm, or 15 µm, which is not limited here.

The particle size of the active metal M powder ranges from 0.1µm to 80µm, e.g., 0.1µm, 5µm, 10µm, 20µm, 40µm, 50µm or 80µm, which is not limited here.

A molar ratio of the N powder to the active metal M is 1: (1 to 3), it can be 1:1, 1:1.5, 1:2, 1:2.5 or 1:3, which is not limited here.

The temperature of the heating reaction ranges from 400°C to 900°C, e.g., 400°C, 500°C, 600°C, 700°C, 800°C, or 900°C.

The heat-preserving time of the heating reaction ranges from 2 hours to 8 hours, e.g., 2 hours, 4 hours, 6 hours or 8 hours, which is not limited here.

A heating rate of the heating reaction ranges from 1°C/min to 10°C/min, e.g., 1°C/min, 3°C/min, 5°C/min, 8°C/min or 10°C/min, which is not limited here.

In the present disclosure, by controlling the particle size of silicon powder, the particle size of active metal, reaction temperature, reaction time and other parameters, it is conducive to the formation of the N-M alloy and improving the doping evenness of metal elements in N-M alloys.

It is appreciated that the N-M alloy can also be prepared by other preparation methods, e.g., high-energy ball milling, vacuum smelting, and hot pressed sintering. It can be understood that the N-M alloy can be obtained commercially, at this time, step S21 can be omitted.

In some embodiments, a mass percentage of the N in the N-M alloy ranges from 15% to 60%. Optionally, a mass percentage of the N in the N-M alloy can be 15%, 20%, 30%, 40%, 50%, or 60%, which is not limited here. In some embodiments, the N-M alloy can be at least one of silicon-magnesium alloy, silicon-aluminum alloy, silicon-calcium alloy, and silicon-zinc alloy. It can be understood that the pore size and porosity of the pores of the N material can be changed by controlling the composition of the N-M alloy. Generally, the higher the N content in the N-M alloy, the smaller the pore diameter. The heating reaction time and reaction temperature can be controlled to change the depth of the pore channels. Generally, the longer the reaction time and the higher the reaction temperature, the deeper the pore depth.

In a specific embodiment, the method further includes following.

The prepared N-M alloy is pulverized, and the particle size of the N-M alloy powder is adjusted to be 0.1 µm to 15 µm, e.g., 0.1 µm, 0.5 µm, 1 µm, 2 µm, 5 µm, 10 µm or 15 µm, which is not limited here.

Specifically, the equipment for pulverization includes at least one of a planetary ball mill, a sand mill, and a jet mill. It can be understood that the smaller the particle size of the N-M alloy, the larger the specific surface area of the N-M alloy, so that it can react more sufficiently during the de-alloying heat treatment.

It is appreciated that the N-M alloy can also be prepared by other preparation methods, e.g., high-energy ball milling, vacuum smelting, and hot pressed sintering. It can be understood that the N-M alloy can be obtained commercially, at this time, step S21 can be omitted.

In some embodiments, a mass percentage of the N in the N-M alloy is 15% to 60%. Optionally, a mass percentage of the N in the N-M alloy can be 15%, 20%, 30%, 40%, 50%, or 60%, which is not limited here. In some embodiments, the N-M alloy can be at least one of silicon-magnesium alloy, silicon-aluminum alloy, silicon-calcium alloy, and silicon-zinc alloy. It can be understood that the pore size and porosity of the pores of the N material can be changed by controlling the composition of the N-M alloy. Generally, the higher the N content in the N-M alloy, the smaller the pore diameter. The heating reaction time and reaction temperature can be controlled to change the depth of the pore channels. Generally, the longer the reaction time and the higher the reaction temperature, the deeper the pore depth.

In S22, mixing the N-M alloy with a halogen-containing six-membered ring organic substance to obtain a mixture.

Specifically, a molar ratio of the N-M alloy to the halogen-containing six-membered ring organic substance is 1:(0.2 to 6), e.g., 1:0.2, 1:0.5, 1:1, 1:2, 1:3, 1:4, 1:5 or 1:6, which is not limited here.

Specifically, the halogen-containing six-membered ring organic substance includes at least one of halogenated cyclohexane and its derivatives, halogenated benzene, halogenated benzoic acid, and halogenated aniline. The halogen includes at least one of fluorine, chlorine, and bromine.

Halogenated cyclohexane is a six-membered cyclic hydrocarbon. The structural stability of halogenated cyclohexane is worse than that of halogenated benzene, so that halogenated cyclohexane is prone to hydrocarbon chain scission at high temperature. The halogenated cyclohexane can be chlorocyclohexane, hexachlorocyclohexane, hexabromocyclohexane, or trichlorocyclohexane. The halogenated benzene can be tribromobenzene, hexachlorobenzene, or hexabromobenzene. The halogenated benzoic acid can be chlorobenzoic acid, bromobenzoic acid, 2-bromobenzoic acid, 4-bromobenzoic acid, or 3-chlorobenzoic acid. The halogenated aniline can be p-chloroaniline, 4-bromoaniline, or 2-chloroaniline.

When the halogen-containing six-membered ring organic substance is halogenated cyclohexane, before a step S23 is performed, the method further includes a following step S221.

Adding a cleavage inhibitor to the mixture, wherein the cleavage inhibitor includes an amide compound and a cyanate, the amide compound includes at least one of carbonamide, formamide, acetamide, dimethylformamide, and lactam; and the cyanate includes at least one of potassium cyanate, sodium cyanate, and ammonium cyanate.

It should be noted that when the carbonamide is heated to a temperature of 150°C to 160°C, it may be decomposed and deaminated into isocyanic acid. Potassium cyanate can be decomposed into potassium cyanamide and carbon dioxide at high temperature (700°C to 900°C) and when the air is isolated. Similarly, sodium cyanate can be decomposed into sodium cyanamide and carbon dioxide at about 550°C. It can be understood that the carbon dioxide gas and inorganic salt that are decomposed are not harmful to the environment. The cleavage inhibitor can undergo decomposition reaction at high temperature and when the air is isolated, and absorb part of the reaction energy, thereby inhibiting the self-cleavage of halogenated cyclohexane or its derivatives.

In a specific embodiment, a molar ratio of the N-M alloy to the amide compound is 1:(0.1 to 10), e.g., 1:0.1, 1:0.5, 1:1, 1:5 or 1:10, which is not limited here. A molar ratio of the N-M alloy to the cyanate is 1:(0.1-10), e.g., 1:0.1, 1:0.5, 1:1, 1:5 or 1:10, etc., which is not limited here.

In S23, undergoing the mixture a displacement reaction under a protective atmosphere to obtain a reaction product, the reaction product includes an oxide of M and a halide of M.

In a specific embodiment, in order to cause the mixture to react sufficiently, the temperature of the displacement reaction ranges from 200°C to 1000°C, e.g., 200°C, 300°C, 400°C, 600°C, 800°C, or 950°C.

The heat-preserving time ranges from 1 hour to 24 hours, e.g., 1 hour, 3 hours, 6 hours, 9 hours, 12 hours, 15 hours, 18 hours or 24 hours, which is not limited here.

When the temperature ranges from 200°C to 750°C, the produced carbon layer produced is an amorphous carbon layer. When the temperature is greater than 750°C, the produced carbon layer is corrugated graphene.

A heating rate of the displacement reaction ranges from 1°C/min to 20°C/min, e.g., 1°C/min, 5°C/min, 10°C/min, 15°C/min or 20°C/min. Therefore, the reaction efficiency is effectively improved.

It can be understood that within the above suitable ranges of temperature, time, and heating rate of the heat treatment, it is helpful to improve the de-alloying efficiency, and it is helpful for the silicon alloy to form a skeleton structure during the de-alloying process.

In order to improve the safety of the reaction, the substitution reaction is performed under a protective atmosphere, and the gas of the protective atmosphere includes at least one of nitrogen, helium, neon, argon, and hernia. The flow rate of protective gas can be controlled between 1 L/min-10 L/min.

In S24, removing the oxide of M and the halide of M to obtain a composite anode material.

It should be noted that the reaction product includes halide of M, oxide of M, carbon, and N. Therefore, it is necessary to remove the metal oxide and the halide in the reaction product.

The removal method includes acid-washing. The reaction product is acid-washed, so that the metal oxide and the halide in the reaction product can be removed.

Optionally, the acid solution used for acid-washing includes at least one of hydrochloric acid, nitric acid, and sulfuric acid.

A mass concentration of the acid solution ranges from 1 mol/L to 5 mol/L, e.g., 1 mol/L, 2 mol/L, 3 mol/L, 4 mol/L, or 5 mol/L. It is appreciated that a mass concentration of the acid solution can also be adjusted according to actual requirements, which is not limited here.

The duration of acid-washing ranges from 1 hour to 10 hours, e.g., 1 hour, 3 hours, 5 hours, 7 hours or 10 hours. In the embodiments, the acid-washed product can still be recycled to use.

In this solution, the anode material is prepared by a one-step compounding method. The N-M alloy reacts directly with the six-membered ring organic matter at high temperature to remove the metal M component in the N-M alloy. At the same time a carbon layer is deposited in situ on the surface of the N material. The overall reaction is mild and has no by-products. The N material has a complete and stable structure, and the carbon layer is deposited uniformly. The raw materials involved in the reaction are common alloys, organics and metal salts, which can reduce costs.

In this solution, the graphene layer and the amorphous carbon layer are formed by in-situ growth. The halogen-containing six-membered ring organic matter used as a carbon source and N-M alloy are de-alloyed to prepare a composite anode material in one step. In this method, since the metal vapor generated by the N-M alloy at high temperature has strong reducibility, the metal M component in the N-M alloy is removed after the N-M alloy reacts with the six-membered ring organic matter. The six-membered ring itself grows in situ and orderly self-assembles to form a corrugated graphene layer or an amorphous carbon layer. After being acid-washed, N material corrugated wrapped with the corrugated graphene layer or the amorphous carbon layer is obtained. The composite anode material is prepared by a one-step compounding method, which can effectively improve the preparation efficiency. The preparation method is simple, practicable, green and environmentally friendly. The preparation process is highly controllable, has a low cost, and can be mass-produced. The prepared composite anode material has the advantages of high capacity, high stability of the charging and discharging cycle, low expansion rate, and can be widely used in lithium batteries. It should be noted that the one-step compounding method refers to the preparation of silicon material and carbon coating are performed simultaneously, and the preparation efficiency of the one-step compounding method is higher than that of the two-step compounding method.

The composite anode material prepared by the method of the embodiments includes a core 10 and a coating layer 20 formed on the surface of the core 10, the coating layer 20 is a carbon coating layer. Wherein

The core 10 is a primary particle. The primary particle includes a skeleton. The skeleton includes a main skeleton 11 located inside the primary particle and multiple branches 12 extending from the main skeleton 11 to the surface of the primary particle.

The core 10 of the embodiments is a primary particle. The primary particle has a macroporous structure. The primary particle is formed with pores 13 extending to the surface of the primary particle.

The primary particle is formed with through holes, and the porosity of the primary particles is not less than 30%.

Exemplarily, FIG. 5 is a flow chart showing a synthesis process of a silicon-carbon composite anode material.

When the coating layer is a metal oxide layer, the method for preparing the anode material according to an embodiment includes following steps S21' to S24'.

In S21', preparing an N1-M1 material.

In some embodiments, the N1-M1 material is at least one of intermetallic compounds and alloys.

The N1 in the N1-M1 material includes at least one of silicon, germanium, antimony, tin, and boron. The M1 in the N1-M1 material includes at least one of magnesium, aluminum, calcium, and zinc.

In some embodiments, the method for preparing the N1-M1 alloy is the same as the step S11, which is not elaborated here.

In S22', forming a metal oxide layer on the surface of the N1-M1 material to obtain a composite.

In a specific embodiment, the metal element of the metal oxide layer includes at least one of Ti, V, Nb, Ta, W, and Zr. A molar ratio of the metal element to the oxygen element in the metal oxide layer is 1: (0.1 to 3).

In some embodiments, the thickness of the metal oxide layer is 1 nm to 200 nm.

Specifically, a molar ratio of the N1-M1 material to the metal oxide of the metal oxide layer is 1:(0.01 to 5), e.g., 1:0.02, 1:0.05, 1:1, 1:2, 1:3, 1:4 or 1:5, which is not limited here.

Specifically, the method for forming the metal oxide layer on the surface of the N1-M1 material is a conventional method in the prior art, e.g., a hydrothermal method, a sol-gel method, a precipitation method, a chemical vapor deposition method, a magnetron sputtering method or a solid phase reaction method.

In S23', undergoing the composite a displacement reaction under a vacuum environment to obtain a reaction product.

Specifically, the reaction product includes an oxide of Ml, N1, and metal oxide.

In some embodiments, a vacuum degree of the vacuum environment is less than 1000 Pa.

The temperature of the replacement reaction ranges from 500°C to 1100°C, e.g., 500°C, 600°C, 700°C, 800°C, 900°C, or 1200°C.

The heat-preserving time of the displacement reaction ranges from 1 hour to 48 hours, e.g., 1 hour, 24 hours, 36 hours or 48 hours, which is not limited here.

A heating rate of the reduction reaction ranges from 1°C/min to 20°C/min, e.g., 1°C/min, 3°C/min, 5°C/min, 8°C/min or 20°C/min, which is not limited here.

In S24', removing the oxide of M1 to obtain a composite anode material.

Specifically, the method for removing the oxide of M1 includes acid-washing.

Further, the acid solution used for acid-washing includes at least one of hydrochloric acid, nitric acid and sulfuric acid.

A mass concentration of the acid solution ranges from 1 mol/L to 5 mol/L, e.g., 1 mol/L, 2 mol/L, 3 mol/L, 4 mol/L, or 5 mol/L. It is appreciated that a mass concentration of the acid solution can also be adjusted according to actual requirements, which is not limited here.

The duration of acid-washing ranges from 1 hour to 10 hours, e.g., 1 hour, 3 hours, 5 hours, 7 hours or 10 hours. In the embodiments, the acid-washed product can still be recycled to use.

In the embodiments, a metal oxide layer is coated on the surface of the N1-M1 material, the N1-M1 material and part of the metal oxide layer undergo the replacement reaction at high temperature to remove the M1 component in the N1-M1 material, and at the same time, an incompletely reacted metal oxide layer is formed on the surface of the N1 material, and the composite anode material can be obtained after acid-washing. In this solution, the metal oxide layer has the advantages of good rigidity and excellent compactness. The current state and flexible carbon layer material can effectively inhibit the damage of the entire structure caused by the volume expansion of the N1, reduce the volume expansion of the material and avoid contact between the electrolyte and the N material, thereby reducing side effects, and improving the initial efficiency of the entire composite material.

The method for preparing the anode material provided by the embodiments of the present disclosure can effectively improve the stability of the charging and discharging cycle of the lithium battery, and has the advantages of high capacity, long cycle service life, high initial efficiency, and low expansion.

The composite anode material prepared by the method of the embodiments includes a core 10 and a coating layer 20 formed on the surface of the core 10. The coating layer 20 is a metal oxide layer.

When the coating layer is a metal nitride layer, the method for preparing the anode material of an embodiment includes following steps S21" to S24".

In S21", preparing an N1-M1 material.

In S22", forming a metal oxide layer on the surface of the N1-M1 material to obtain a composite.

Steps S21" and S22" are the same as the above steps S21' and S22', which are not be repeated here.

In S23", subjecting the composite to heat treatment in a protective atmosphere and then subjected to nitridation treatment to obtain a reaction product.

The reaction product includes oxide of Ml, N1, and metal oxide.

The heat treatment temperature of the protective atmosphere is 500°C to 800°C, the heat-preserving time is 1 hour to 24 hours, and a reaction heating rate of the heat treatment is 1 °C/min to 20°C/min.

The protective atmosphere includes at least one of helium, neon, argon, krypton, and xenon.

Specifically, in the nitriding treatment, the treatment temperature is 400°C to 950°C, the heat-preserving time is 2 hours to 24 hours, and the nitriding atmosphere is at least one of an ammonia gas atmosphere and a plasma nitrogen atmosphere.

In S24", removing the oxide of M1 to obtain a composite anode material.

The method for removing the oxide of M1 is the same as the step S24', which is not repeated here.

The composite anode material prepared by the method of the embodiments includes a core 10 and a coating layer 20 formed on the surface of the core 10. The coating layer 20 is a metal nitride layer.

In the embodiments, a metal oxide layer is coated on the surface of the N1-M1 material, and then subjected to heat treatment in a protective atmosphere. Therefore, on the one hand, the N1-M1 material and a part of the metal oxide layer undergo the replacement reaction, and the M1 component is removed from the N1-M1 material. On the other hand, the oxide is transformed from amorphous substance to crystal under high temperature and normal pressure. The metal oxide layer on the surface of the core is further nitridated to metal nitride through nitriding treatment, and then is immediately acid-washed to obtain the composite anode material. In this solution, the metal nitride layer not only has good rigidity, but also has excellent conductivity, which can effectively relieve the volume expansion of silicon while increasing the electrical conductivity of the material, increase the rate of the material, reduce the material's irreversible capacity loss, and achieve high capacity.

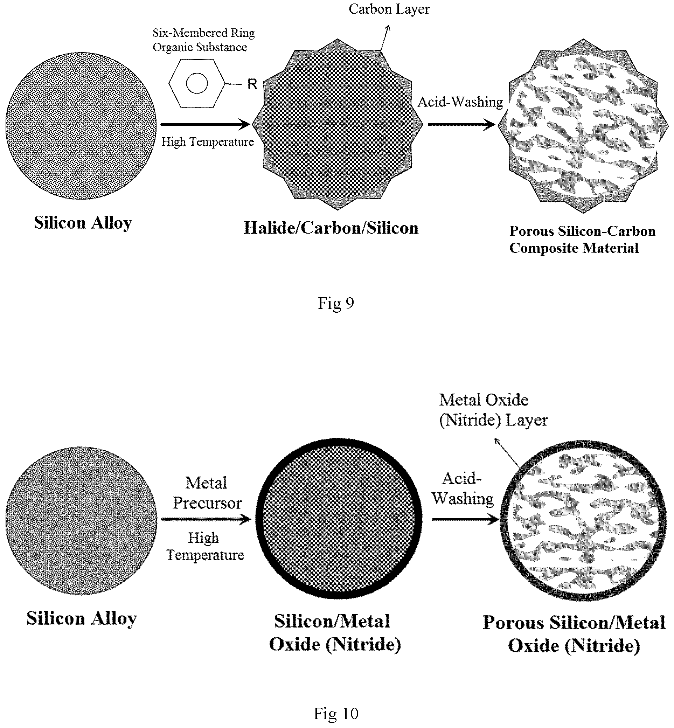

Exemplarily, FIG. 9 is a schematic flow chart showing a synthesis process of a silicon/metal oxide and silicon/metal nitride composite anode materials.

The method for preparing the anode material provided in the embodiments of the present disclosure can effectively improve the stability of the charging and discharging cycle of lithium battery, and has the advantages of high capacity, long cycle service life, good rate performance, and low expansion.

The embodiments of the present disclosure will be further described in multiple Examples. The embodiments of the present disclosure are not limited to following Examples. Within the scope of the unchanging main rights, changes can be appropriately implemented.

### Example 15

A method for preparing a silicon-carbon anode material includes following steps.
(1) Silicon powder with a particle size of 1 µm and magnesium powder were mixed at a molar ratio of 1:2 and placed into an atmosphere furnace, and heated under the protection of argon inert gas to 600°C at a heating rate of 3°C/min and heat-preserved for 6 hours to make them react sufficiently to obtain a silicon-magnesium alloy. The silicon-magnesium alloy is ball-milled to obtain 1 µm of silicon-magnesium alloy powder.
(2) 1 mol of silicon-magnesium alloy powder was mixed uniformly with 1 mol of hexachlorocyclohexane, and then 1 mol of carbonamide, 1 mol of potassium cyanate and 1 mol of sodium cyanate were added to obtain a mixture.
(3) After the obtained mixture was mixed uniformly, it was placed into a sealed stainless steel reactor, vacuumized to 10pa. Then the reactor was heated to 780°C at a heating rate of 3°C/min in an argon atmosphere, and then heat-preserved for 8 hours to react sufficiently to obtain a reaction product.
(4) The reaction product was mechanically stirred in hydrochloric acid solution of 1 mol/L for 2 hours, filtered, washed, and dried to obtain a silicon-carbon composite anode material.

The silicon-carbon composite anode material obtained has a median particle size of about 1 µm, a specific surface area of 53 m²/g, porosity of 48%, and a carbon mass content of 12%.

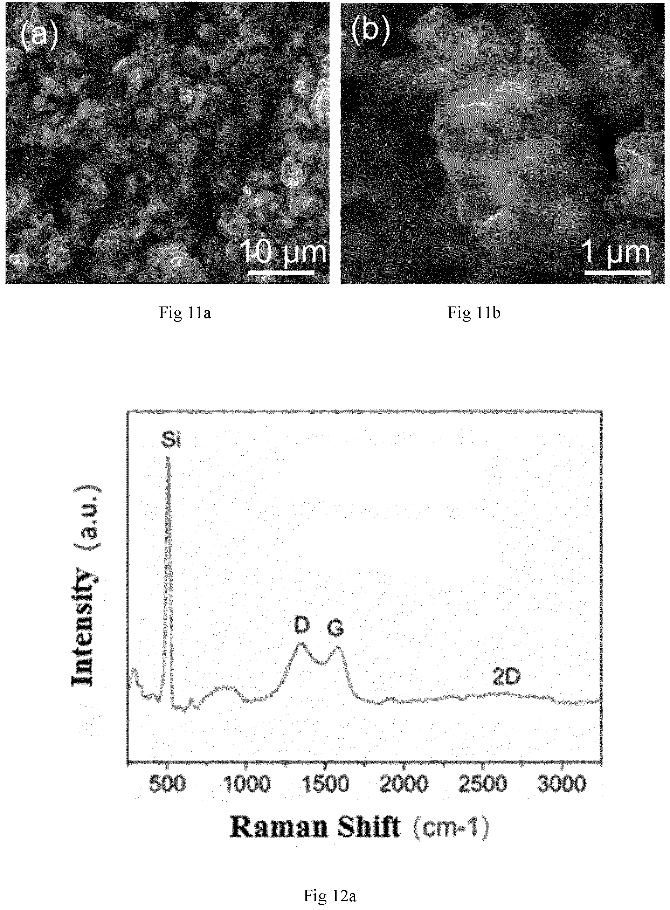

FIG. 10a and FIG. 10b are SEM images of the silicon-carbon composite anode material. FIG. 11a is a Raman pattern showing the silicon-carbon composite anode material according to an embodiment of the present disclosure; and FIG. 11b is an XRD pattern of the silicon-carbon composite anode material provided in the embodiments. As can be seen from the SEM images in FIGS. 10a and 10b, the obtained silicon-carbon composite anode material includes a core and a coating layer formed on the surface of the core.

The core is a primary particle. The primary particle includes a silicon skeleton. The silicon skeleton includes a main skeleton located inside the primary particle and multiple branches extending from the main skeleton to the surface of the primary particle. The primary particle has a macroporous structure, and is formed with pores extending to the surface of the primary particles.

The coating layer is 2 nm of corrugated grapheme. The average diameter of the pores is about 100 nm, and the depth of the pores is about 700 nm.

The Raman pattern showing FIG. 11a further proves that there is a 2D peak near 2680 cm⁻¹, which is a characteristic peak of graphite, and further shows that the carbon generated in situ is graphite-like carbon, having better electrical conductivity and stability. From the XRD pattern showing in FIG. 11b, it can be seen that three strong peaks at 28.4°, 47.3° and 56.1° corresponding to three strong peaks of silicon (JCPDS No. 27-1402), and there is substantially no impurity. FIG. 11c is a graph showing the cycle performance of a battery made of the composite anode material, which shows that the composite anode material has excellent cycle performance.

### Example 16

A method for preparing a silicon-carbon anode material includes following steps.
(1) 1.5 µm of silicon powder and magnesium powder were mixed at a molar ratio of 1:2.5 and placed into an atmosphere furnace, and heated under the protection of argon inert gas to 650°C at a heating rate of 5°C/min and heat-preserved for 6 hours to make them react sufficiently to obtain a silicon-magnesium alloy. The silicon-magnesium alloy is ball-milled to obtain 0.5 µm of silicon-magnesium alloy powder.
(2) 1 mol of silicon-magnesium alloy powder was mixed uniformly with 1 mol of hexachlorobenzene to obtain a mixture.
(3) After the obtained mixture was mixed uniformly, it was placed into a sealed stainless steel reactor, vacuumized to 100 pa. Then the reactor was heated to 650°C at a heating rate of 3°C/min in an argon atmosphere, and then heat-preserved for 8 hours to react sufficiently to obtain a reaction product.
(4) The reaction product was mechanically stirred in 2 L hydrochloric acid solution of 1 mol/L for 3 hours, filtered, washed, and dried to obtain a porous silicon composite anode material.

The silicon-carbon composite anode material obtained has a median particle size of about 0.6 µm, a specific surface area of 79 m²/g, porosity of 56%, and a carbon mass content of 20%.

The silicon-carbon composite anode material includes a core and a coating layer formed on the surface of the core. Wherein

The core is a primary particle. The primary particle includes a silicon skeleton. The silicon skeleton includes a main skeleton located inside the primary particle and multiple branches extending from the main skeleton to the surface of the primary particle. The primary particle has a macroporous structure, and is formed with pores extending to the surface of the primary particles.

The coating layer is 10 nm of amorphous carbon layer. The average diameter of the pores is about 130 nm, and the depth of the pores is about 800 nm.

### Example 17

A method for preparing a silicon-carbon anode material includes following steps.
(1) 12 µm of silicon powder and magnesium powder were mixed at a molar ratio of 1:2 and placed into an atmosphere furnace, and heated under the protection of argon inert gas to 600°C at a heating rate of 5°C/min and heat-preserved for 6 hours to make them react sufficiently to obtain a silicon-magnesium alloy. The silicon-magnesium alloy is ball-milled to obtain 10 µm of silicon-magnesium alloy powder.
(2) 1 mol of silicon-magnesium alloy powder was mixed uniformly with 1 mol of hexachlorobenzene to obtain a mixture.
(3) After the obtained mixture was mixed uniformly, it was placed into a sealed stainless steel reactor, vacuumized to 100 pa. Then the reactor was heated to 800°C at a heating rate of 3°C/min in an argon atmosphere, and then heat-preserved for 8 hours to react sufficiently to obtain a reaction product.
(4) The reaction product was mechanically stirred in 2 L hydrochloric acid solution of 1 mol/L for 3 hours, filtered, washed, and dried to obtain a porous silicon composite anode material.

The silicon-carbon composite anode material obtained has a median particle size of about 10 µm, a specific surface area of 43 m²/g, porosity of 61%, and a carbon mass content of 15%.

The silicon-carbon composite anode material includes a core and a coating layer formed on the surface of the core. Wherein

The core is a primary particle. The primary particle includes a silicon skeleton. The silicon skeleton includes a main skeleton located inside the primary particle and multiple branches extending from the main skeleton to the surface of the primary particle. The primary particle has a macroporous structure, and is formed with pores extending to the surface of the primary particles.

The coating layer is 5 nm of amorphous carbon layer. The average diameter of the 3D pores is about 110 nm, and the depth of the pores is about 670 nm.

### Example 18

A method for preparing a silicon-carbon anode material includes following steps.
(1) 1 µm of silicon powder and magnesium powder were mixed at a molar ratio of 1:1.2 and placed into an atmosphere furnace, and heated under the protection of argon inert gas to 600°C at a heating rate of 5°C/min and heat-preserved for 6 hours to make them react sufficiently to obtain a silicon-magnesium alloy. The silicon-magnesium alloy is ball-milled to obtain 1 µm of silicon-magnesium alloy powder.
(2) 1 mol of silicon-magnesium alloy powder was mixed uniformly with 0.5 mol of hexachlorobenzene to obtain a mixture.
(3) After the obtained mixture was mixed uniformly, it was placed into a sealed stainless steel reactor, vacuumized to 10 pa. Then the reactor was heated to 800°C at a heating rate of 3°C/min in an argon atmosphere, and then heat-preserved for 8 hours to react sufficiently to obtain a reaction product.
(4) The reaction product was mechanically stirred in 2 L hydrochloric acid solution of 1 mol/L for 3 hours, filtered, washed, and dried to obtain a composite anode material.

The silicon-carbon composite anode material obtained has a median particle size of about 1 µm, a specific surface area of 38 m²/g, porosity of 47%, and a carbon mass content of 5%.

The silicon-carbon composite anode material includes a core and a coating layer formed on the surface of the core. Wherein

The core is a primary particle. The primary particle includes a silicon skeleton. The silicon skeleton includes a main skeleton located inside the primary particle and multiple branches extending from the main skeleton to the surface of the primary particle. The primary particle has a macroporous structure, and is formed with pores extending to the surface of the primary particles. The coating layer is 4 nm of corrugated grapheme. The average diameter of the pores is about 65 nm, and the depth of the 3D pores is about 680 nm.

### Example 19

A method for preparing a silicon-carbon anode material includes following steps.
(1) 1.5 µm of silicon powder and magnesium powder were mixed at a molar ratio of 1:2.5 and placed into an atmosphere furnace, and heated under the protection of argon inert gas to 800°C at a heating rate of 5°C/min and heat-preserved for 6 hours to make them react sufficiently to obtain a silicon-magnesium alloy. The silicon-magnesium alloy is ball-milled to obtain 0.5 µm of silicon-magnesium alloy powder.
(2) 1 mol of silicon-magnesium alloy powder was mixed uniformly with 4 mol of hexachlorobenzene to obtain a mixture.
(3) After the obtained mixture was mixed uniformly, it was placed into a sealed stainless steel reactor, vacuumized to 100 pa. Then the reactor was heated to 750°C at a heating rate of 3°C/min in an argon atmosphere, and then heat-preserved for 8 hours to react sufficiently to obtain a reaction product.
(4) The reaction product was mechanically stirred in 2 L hydrochloric acid solution of 1 mol/L for 3 hours, filtered, washed, and dried to obtain a composite anode material.

The silicon-carbon composite anode material obtained has a median particle size of about 0.5 µm, a specific surface area of 80 m²/g, porosity of 53%, and a carbon mass content of 22%.

The silicon-carbon composite anode material includes a core and a coating layer formed on the surface of the core. Wherein

The core is a primary particle. The primary particle includes a silicon skeleton. The silicon skeleton includes a main skeleton located inside the primary particle and multiple branches extending from the main skeleton to the surface of the primary particle. The primary particle has a macroporous structure, and is formed with pores extending to the surface of the primary particles. The coating layer is 6 nm of corrugated grapheme. The average diameter of the pores is about 130 nm, and the depth of the pores is about 940 nm.

### Example 20

A method for preparing a germanium-carbon anode material includes following steps.
(1) 1.5 µm of germanium powder and magnesium powder were mixed at a molar ratio of 1:2.5 and placed into an atmosphere furnace, and heated under the protection of argon inert gas to 480°C at a heating rate of 5°C/min and heat-preserved for 6 hours to make them react sufficiently to obtain a germanium-magnesium alloy. The germanium-magnesium alloy is ball-milled to obtain 0.5 µm of germanium-magnesium alloy powder.
(2) 1 mol of germanium-magnesium alloy powder was mixed uniformly with 3 mol of hexachlorobenzene to obtain a mixture.
(3) After the obtained mixture was mixed uniformly, it was placed into a sealed stainless steel reactor, vacuumized to 100 pa. Then the reactor was heated to 600°C at a heating rate of 3°C/min in an argon atmosphere, and then heat-preserved for 8 hours to react sufficiently to obtain a reaction product.
(4) The reaction product was mechanically stirred in 2 L hydrochloric acid solution of 1 mol/L for 3 hours, filtered, washed, and dried to obtain a composite anode material.

The germanium-carbon composite anode material obtained has a median particle size of about 0.6 µm, a specific surface area of 75 m²/g, porosity of 63%, and a carbon mass content of 18%.

The germanium-carbon composite anode material includes a core and a coating layer formed on the surface of the core.

The core is a primary particle. The primary particle includes a germanium skeleton. The germanium skeleton includes a main skeleton located inside the primary particle and multiple branches extending from the main skeleton to the surface of the primary particle. The primary particle has a macroporous structure, and is formed with pores extending to the surface of the primary particles. The coating layer is 12 nm of corrugated grapheme. The average diameter of the 3D pores is about 120 nm, and the depth of the 3D pores is about 35 nm.

### Example 21

A method for preparing a silicon-carbon anode material includes following steps.
(1) 1.5 µm of silicon powder and magnesium powder were mixed at a molar ratio of 1:2.5 and placed into an atmosphere furnace, and heated under the protection of argon inert gas to 600°C at a heating rate of 5°C/min and heat-preserved for 6 hours to make them react sufficiently to obtain a silicon-magnesium alloy. The silicon-magnesium alloy is ball-milled to obtain 0.5 µm of silicon-magnesium alloy powder.
(2) 1 mol of silicon-magnesium alloy powder, 2.6 mol of chlorocyclohexane and 0.5 mol of carbonamide were mixed uniformly to obtain a mixture.
(3) After the obtained mixture was mixed uniformly, it was placed into a sealed stainless steel reactor, vacuumized to 100 pa. Then the reactor was heated to 750°C at a heating rate of 3°C/min in an argon atmosphere, and then heat-preserved for 8 hours to react sufficiently to obtain a reaction product.
(4) The reaction product was mechanically stirred in 2 L hydrochloric acid solution of 1 mol/L for 3 hours, filtered, washed, and dried to obtain a porous silicon composite anode material.

The silicon-carbon composite anode material obtained has a median particle size of about 0.5 µm, a specific surface area of 64 m²/g, porosity of 53%, and a carbon mass content of 19%.

The silicon-carbon composite anode material includes a core and a coating layer formed on the surface of the core.

The core is a primary particle. The primary particle includes a silicon skeleton. The silicon skeleton includes a main skeleton located inside the primary particle and multiple branches extending from the main skeleton to the surface of the primary particle. The primary particle has a macroporous structure, and is formed with pores extending to the surface of the primary particles. The coating layer is 3.2 nm of corrugated grapheme. The average diameter of the pores is about 110 nm, and the depth of the pores is about 780 nm.

### Example 22

A method for preparing a silicon anode material includes following steps.
(1) 1.5 µm of silicon powder and magnesium powder were mixed at a molar ratio of 1:2.5 and placed into an atmosphere furnace, and heated under the protection of argon inert gas to 600°C at a heating rate of 5°C/min and heat-preserved for 6 hours to make them react sufficiently to obtain a silicon-magnesium alloy. The silicon-magnesium alloy is ball-milled to obtain 0.5 µm of silicon-magnesium alloy powder.
(2) 1 mol of silicon-magnesium alloy powder and 0.7 g of cellulose were dissolved in 500 ml of absolute ethanol and dispersed uniformly to obtain a mixing solution.
(3) 3 g of tetrabutyl titanate was added dropwise to the above mixing solution, heated to 80°C while stirring quickly for 3 hours, and then filtered, and dried under vacuum at 60°C for 24 hours to obtain a silicon-magnesium alloy composite wrapped by titanium oxide precursor.
(4) After the obtained composite was placed into a sealed stainless steel reactor, vacuumized to 100 pa. Then the reactor was heated to 750°C at a heating rate of 3°C/min in an argon atmosphere, and then heat-preserved for 8 hours to react sufficiently to obtain a reaction product.
(5) The reaction product was mechanically stirred in 4 L hydrochloric acid solution of 1 mol/L for 3 hours, filtered, washed, and dried to obtain a porous silicon/titanium oxide composite anode material.

The composite anode material obtained has a median particle size of about 0.6 µm, a specific surface area of 44 m²/g, porosity of 43%, and a titanium oxide mass content of 12%.

The composite anode material includes a core and a coating layer formed on the surface of the core.

The core is a primary particle. The primary particle includes a silicon skeleton. The silicon skeleton includes a main skeleton located inside the primary particle and multiple branches extending from the main skeleton to the surface of the primary particle. The primary particle has a macroporous structure, and is formed with pores extending to the surface of the primary particles. The coating layer is a titanium oxide layer. The average diameter of the pores is about 20 nm, and the depth of the pores is about 150 nm.

### Example 23

A method for preparing a silicon anode material includes following steps.
(1) 1.5 µm of silicon powder and magnesium powder were mixed at a molar ratio of 1:2.5 and placed into an atmosphere furnace, and heated under the protection of argon inert gas to 600°C at a heating rate of 5°C/min and heat-preserved for 6 hours to make them react sufficiently to obtain a silicon-magnesium alloy. The silicon-magnesium alloy is ball-milled to obtain 0.5 µm of silicon-magnesium alloy powder.
(2) 1 mol of silicon-magnesium alloy powder and 0.7g of cellulose were dissolved in 500 ml of absolute ethanol and dispersed uniformly to obtain a mixing solution.
(3) 4 g of tetrabutyl titanate was added dropwise to the above mixing solution, heated to 80°C while stirring quickly for 3 hours, and then filtered, and dried under vacuum at 60°C for 24 hours to obtain a silicon-magnesium alloy composite wrapped by titanium oxide precursor.
(4) After the obtained composite was placed into a tubular atmosphere furnace, was heated to 650°C at a heating rate of 3°C/min in an argon atmosphere, and then heat-preserved for 5 hours to react sufficiently, next, the argon was changed to ammonia gas, and the temperature was raised to 800°C and heat-preserved for 8 hours, obtaining a reaction product.
(4) The reaction product was mechanically stirred in 4 L hydrochloric acid solution of 1 mol/L for 3 hours, filtered, washed, and dried to obtain a porous silicon/titanium nitride composite anode material.

The composite anode material obtained has a median particle size of about 0.7 µm, a specific surface area of 40 m²/g, porosity of 48%, and a titanium nitride mass content of 32%.

The composite anode material includes a core and a coating layer formed on the surface of the core.

The core is a primary particle. The primary particle includes a silicon skeleton. The silicon skeleton includes a main skeleton located inside the primary particle and multiple branches extending from the main skeleton to the surface of the primary particle. The primary particle has a macroporous structure, and is formed with pores extending to the surface of the primary particles. The coating layer is a titanium nitride layer. The average diameter of the pores is about 50 nm, and the depth of the pores is about 400 nm.

### Example 24

A method for preparing a silicon anode material includes following steps.
(1) 1.5 µm of silicon powder and magnesium powder were mixed at a molar ratio of 1:2.5 and placed into an atmosphere furnace, and heated under the protection of argon inert gas to 600°C at a heating rate of 5°C/min and heat-preserved for 6 hours to make them react sufficiently to obtain a silicon-magnesium alloy. The silicon-magnesium alloy is ball-milled to obtain 0.5 µm of silicon-magnesium alloy powder.
(2) Silicon-magnesium alloy wrapped by vanadium pentoxide was prepared through a sol-gel process. Firstly, 500 ml of triisopropoxy vanadium oxide in alcohol solution of 0.15 M/L was prepared, and 30ml of acetylacetone was add to obtain a mixing solution. 0.5 mol of silicon-magnesium alloy powder was added to the above mixing solution and stirred for 36 hours, and then dispersed uniformly to obtain a sol.
(3) The sol was filtered and dried under vacuum at 60°C for 24 hours to obtain a silicon-magnesium alloy composite wrapped by a vanadium pentoxide precursor.
(4) After the obtained composite was placed into a tubular atmosphere furnace, was heated to 600°C at a heating rate of 3°C/min in an argon atmosphere, and then heat-preserved for 3 hours to react sufficiently, next, the argon was changed to ammonia gas, and the temperature was raised to 750°C and heat-preserved for 8 hours, obtaining a reaction product.
(5) The reaction product was mechanically stirred in 4 L hydrochloric acid solution of 1 mol/L for 3 hours, filtered, washed, and dried to obtain a porous silicon/vanadium nitride composite anode material.

The composite anode material obtained has a median particle size of about 0.6 µm, a specific surface area of 51 m²/g, porosity of 40%, and a titanium nitride mass content of 25%.

The composite anode material includes a core and a coating layer formed on the surface of the core.

The core is a primary particle. The primary particle includes a silicon skeleton. The silicon skeleton includes a main skeleton located inside the primary particle and multiple branches extending from the main skeleton to the surface of the primary particle. The primary particle has a macroporous structure, and is formed with pores extending to the surface of the primary particles. The coating layer is a vanadium nitride layer of 60 nm. The average diameter of the pores is about 125 nm, and the depth of the pores is about 350 nm.

### Example 25

A method for preparing an anode material includes following steps.
(1) 1.5 µm of germanium powder and magnesium powder were mixed at a molar ratio of 1:2.5 and placed into an atmosphere furnace, and heated under the protection of argon inert gas to 600°C at a heating rate of 5°C/min and heat-preserved for 6 hours to make them react sufficiently to obtain a germanium-magnesium alloy. The germanium-magnesium alloy is ball-milled to obtain 0.5 µm of germanium-magnesium alloy powder.
(2) 1 mol of germanium-magnesium alloy powder and 0.7 g of cellulose were dissolved in 500 ml of absolute ethanol and dispersed uniformly to obtain a mixing solution.
(3) 3 g of tetrabutyl titanate was added dropwise to the above mixing solution, heated to 80°C while stirring quickly for 3 hours, and then filtered, and dried under vacuum at 60°C for 24 hours to obtain a germanium-magnesium alloy composite wrapped by titanium oxide precursor.
(4) After the obtained composite was placed into a sealed stainless steel reactor, vacuumized to 100 pa. Then the reactor was heated to 750°C at a heating rate of 3°C/min in an argon atmosphere, and then heat-preserved for 8 hours to react sufficiently to obtain a reaction product.
(4) The reaction product was mechanically stirred in 4 L hydrochloric acid solution of 1 mol/L for 3 hours, filtered, washed, and dried to obtain a porous germanium/titanium oxide composite anode material.

The composite anode material obtained has a median particle size of about 0.55 µm, a specific surface area of 41 m²/g, porosity of 45%, and a titanium oxide mass content of 13%.

The composite anode material includes a core and a coating layer formed on the surface of the core. Wherein

The core is a primary particle. The primary particle includes a germanium skeleton. The germanium skeleton includes a main skeleton located inside the primary particle and multiple branches extending from the main skeleton to the surface of the primary particle. The primary particle has a macroporous structure, and is formed with pores extending to the surface of the primary particles. The coating layer is a titanium oxide layer. The average diameter of the pores is about 600 nm, and the depth of the pores is about 180 nm.

### Example 26

A method for preparing an anode material includes following steps.
(1) 1.5 µm of germanium powder and magnesium powder were mixed at a molar ratio of 1:2.5 and placed into an atmosphere furnace, and heated under the protection of argon inert gas to 600°C at a heating rate of 5°C/min and heat-preserved for 6 hours to make them react sufficiently to obtain a germanium-magnesium alloy. The germanium-magnesium alloy is ball-milled to obtain 1.0 µm of germanium-magnesium alloy powder.
(2) Silicon-magnesium alloy wrapped by vanadium pentoxide was prepared through a sol-gel process. Firstly, 500 ml of triisopropoxy vanadium oxide in alcohol solution of 0.1 M/L was prepared, and 30 ml of acetylacetone was add to obtain a mixing solution. 0.5 mol of germanium-magnesium alloy powder was added to the above mixing solution and stirred for 36 hours, and then dispersed uniformly to obtain a sol.
(3) The sol was filtered and dried under vacuum at 60°C for 24 hours to obtain a germanium-magnesium alloy composite wrapped by a vanadium pentoxide precursor.
(4) After the obtained composite was placed into a tubular atmosphere furnace, was heated to 600°C at a heating rate of 3°C/min in an argon atmosphere, and then heat-preserved for 3 hours to react sufficiently, next, the argon was changed to ammonia gas, and the temperature was raised to 750°C and heat-preserved for 8 hours, obtaining a reaction product.
(5) The reaction product was mechanically stirred in 4 L hydrochloric acid solution of 1 mol/L for 3 hours, filtered, washed, and dried to obtain a porous germanium/vanadium nitride composite anode material.

The composite anode material obtained has a median particle size of about 1.2 µm, a specific surface area of 52 m²/g, porosity of 43%, and a titanium nitride mass content of 24%.

The composite anode material includes a core and a coating layer formed on the surface of the core. Wherein

The core is a primary particle. The primary particle includes a germanium skeleton. The germanium skeleton includes a main skeleton located inside the primary particle and multiple branches extending from the main skeleton to the surface of the primary particle. The primary particle has a macroporous structure, and is formed with pores extending to the surface of the primary particles. The coating layer is a vanadium nitride layer of 50 nm. The average diameter of the pores is about 150 nm, and the depth of the pores is about 900 nm.

### Example 27

A method for preparing an anode material includes following steps.
(1) 1.5 µm of silicon powder and magnesium powder were mixed at a molar ratio of 1:2.5 and placed into an atmosphere furnace, and heated under the protection of argon inert gas to 650°C at a heating rate of 5°C/min and heat-preserved for 6 hours to make them react sufficiently to obtain a silicon-magnesium alloy. The silicon-magnesium alloy is ball-milled to obtain 0.5 µm of silicon-magnesium alloy powder.
(2) 1 mol of silicon-magnesium alloy powder was mixed uniformly with 0.1 mol of hexachlorobenzene to obtain a mixture.
(3) After the obtained mixture was mixed uniformly, it was placed into a sealed stainless steel reactor, vacuumized to 100 pa. Then the reactor was heated to 750°C at a heating rate of 3°C/min in an argon atmosphere, and then heat-preserved for 8 hours to react sufficiently to obtain a reaction product.
(4) The reaction product was mechanically stirred in 2L hydrochloric acid solution of 1 mol/L for 3 hours, filtered, washed, and dried to obtain a porous silicon composite anode material.

The silicon-carbon composite anode material obtained has a median particle size of about 0.6 µm, a specific surface area of 79 m²/g, porosity of 56%, and a carbon mass content of 20%. The average diameter of the pores is about 130 nm, and the depth of the pores is about 800 nm.

### Example 28

(1) 1.5 µm of silicon powder and magnesium powder were mixed at a molar ratio of 1:2 and placed into an atmosphere furnace, and heated under the protection of argon inert gas to 600°C at a heating rate of 3°C/min and heat-preserved for 6 hours to make them react sufficiently to obtain a silicon-magnesium alloy. The silicon-magnesium alloy is ball-milled to obtain 1 µm of silicon-magnesium alloy powder.
(2) 1 mol of silicon-magnesium alloy powder was mixed uniformly with 2.6 mol of hexachlorocyclohexane to obtain a mixture.
(3) After the obtained mixture was mixed uniformly, it was placed into a sealed stainless steel reactor, vacuumized to 10 pa. Then the reactor was heated to 750°C at a heating rate of 3°C/min in an argon atmosphere, and then heat-preserved for 8 hours to react sufficiently to obtain a reaction product.
(4) The reaction product was mechanically stirred in hydrochloric acid solution of 1 mol/L for 2 hours, filtered, washed, and dried to obtain a silicon-carbon composite anode material.

The silicon-carbon composite anode material obtained has a median particle size of about 1 µm, a specific surface area of 77 m²/g, porosity of 56%, and a carbon mass content of 19%. The primary particle has a median particle size of about 0.5 µm. The average pore diameter of the three-dimensional pores is about 100 nm, and the pore depth of the three-dimensional pores is about 730 nm. The graphene layer cannot be formed. The carbon layer has a thickness of 25 nm.

### Comparative Example 3

The silicon-carbon composite anode material SiO/C is used. The silicon-carbon composite anode material has a median particle size of 1.5 µm. The core of the composite material is a porous silicon structure stacked with silicon nano-particles, and the shell is wrapped by a carbon layer. Amass percentage of carbon is 22%, the specific surface area is 38 m²/g, the thickness of the carbon layer is 50 nm, and the porosity of the silicon-carbon composite anode material is 67%. That is, the silicon-carbon composite anode material is SiOx/C anode material, where x=1.0.

In summary, the anode materials prepared in Examples 15-28 and Comparative Example 3 have the sample numbers S15 to S28 and R3 correspondingly. The performance parameters of the anode materials are described in Table 3.

**Table 3**

| Performance parameters | S15 | S16 | S17 | S18 | S19 | S20 | S21 | S22 | S23 | S24 | S25 | S26 | S27 | S28 | R3 |
|---|---|---|---|---|---|---|---|---|---|---|---|---|---|---|---|
| Particle size of anode material (D50,_{R}m) | 1 | 0.6 | 10 | 1 | 0.5 | 0.6 | 0.5 | 0.6 | 0.7 | 0.6 | 0.5 5 | 0.8 | 0.6 | 1 | 1.5 |
| Particle size of silicon alloy (D50,µm) | 1 | 0.5 | 10 | 1 | 0.5 | 0.5 | 0.5 | 0.5 | 0.5 | 0.5 | 0.5 | 1 | 0.5 | 1 | / |
| Specific surface area of the anode (m²/g) | 53 | 79 | 43 | 38 | 80 | 75 | 64 | 44 | 40 | 51 | 41 | 52 | 79 | 77 | 38 |
| Porosity (%) | 48 | 56 | 61 | 47 | 53 | 18 | 53 | 43 | 48 | 40 | 45 | 43 | 56 | 56 | 67 |
| Carbon content (%) | 12 | 20 | 15 | 5 | 22 | 18 | 19 | / | / | / | / | / | 20 | 19 | 22 |
| Metal oxide content (%) | / | / | / | / | / | / | / | 12 | / | / | 13 | / | / | / | / |
| Metal nitride content (%) | / | / | / | / | / | / | / | / | 32 | 25 | / | 24 | / | / | / |

### Performance Test

Slurries were prepared by mixing the anode materials, sodium carboxymethyl cellulose, styrene-butadiene rubber, conductive graphite (KS-6) and carbon black (SP) in a ratio of 92:2:2:2:2, and were uniformly coated on copper foil and dried to obtain anode plates. The anode plates were assembled into coin cells in an argon atmosphere glove box. The diaphragm used is a polypropylene micro-porous membrane, and the electrolyte used is 1 mol/L lithium hexafluorophosphate (solvent is a liquid mixture of ethylene carbonate, methyl ethyl carbonate and dimethyl carbonate), a counter electrode used is a metal lithium plate.

The discharge specific capacity was performed on above 15 groups of batteries through the LAND CT2001A battery test system. The ratio of the electric quantity discharged in 1 hour to the battery capacity is the discharge specific capacity.

The first coulomb efficiency test was performed on the above 15 groups of batteries through the LAND CT2001A battery test system, the charging and discharging current was 0.05C, and the first coulomb efficiency was measured.

The above 15 groups of batteries were tested through the LAND CT2001A battery test system after 100 cycles, the charging and discharging current was 0.2C, and the test was performed after 100 cycles to calculate the battery capacity after the cycle and the capacity retention rate after the cycle.

The capacity retention rate after 100 cycles at 0.2C =the discharge capacity at the 100^{th} cycle/the discharge capacity at the first cycle×100%, and the results are shown in Table 4.

**Table 4 Comparison of parameter performance of various batteries**

| Sample | Specific discharge capacity (mAh/g) | Initial coulombic efficiency (%) | Capacity after 100 cycles at 0.2C (mAh/g) | Capacity retention rate after 100 cycles at 0.2C(%) | Expansion rate of electrode membrane (%) |
|---|---|---|---|---|---|
| S15 | 2777 | 88.2 | 1290 | 46.5 | 25.6 |
| S16 | 2625 | 84.6 | 1177 | 44.8 | 26.4 |
| S17 | 2609 | 81.9 | 1160 | 44.5 | 26.8 |
| S18 | 2667 | 87.9 | 1158 | 43.4 | 27.1 |
| S19 | 2658 | 84.2 | 1175 | 44.2 | 26.9 |
| S20 | 2745 | 88.9 | 1109 | 40.4 | 28.4 |
| S21 | 2659 | 80.1 | 1119 | 42.1 | 27.5 |
| S22 | 2688 | 86.3 | 1275 | 47.4 | 23.1 |
| S23 | 2784 | 87.9 | 1255 | 45.1 | 22.8 |
| S24 | 2851 | 88.1 | 1289 | 45.2 | 21.8 |
| S25 | 2435 | 86.9 | 1144 | 47.0 | 18.9 |
| S26 | 2544 | 88.4 | 1208 | 47.5 | 17.5 |
| S27 | 2834 | 79.9 | 894 | 31.5 | 31.2 |
| S28 | 2437 | 76.2 | 854 | 35 | 32.9 |
| R3 | 1541 | 86.1 | 837 | 54.3 | 28.8 |

The composite anode materials of the present disclosure have the advantages of low expansion and excellent cycle stability.

It can be seen from above Tables 3 to 4 that Example 27 mainly differs from Example 26 that: the mixing ratio of silicon-magnesium alloy and hexachlorobenzene was relatively low, so that the thickness of the graphene layer on the surface of the silicon material was substantially decreased, which is not conducive to increasing the electrical conductivity of the anode material and inhibiting the volume expansion of the materials, resulting in poor long cycle performance.

Example 28 mainly differs from Example 15 that: cracking inhibitors (carbonamide, potassium cyanate and sodium cyanate) were not added, chlorinated cyclohexane was decomposed in a large amount during the reaction, it is difficult to deposit grapheme layer on the surface of silicon material, resulting in reduction of various performances such as battery's charging and discharging specific capacity, initial coulombic efficiency, and capacity retention rate after cycles. Comparative Example 3 is a porous silicon anode material coated by carbon. The capacity and capacity retention rate of the battery made of this material after 100 cycles at 0.2C have both decreased, and the expansion rate of the electrode membrane of Comparative Example 3 is also higher than that of Example 15.

In summary, the method for preparing the silicon-carbon anode material provided by the present disclosure is simple to operate, has a safe and efficient preparation process, and an effectively reduced preparation cost, and is suitable for mass production. The produced product can be used as electrode plates of batteries, which has better charging and discharging cycle performance.

### Fourth aspect

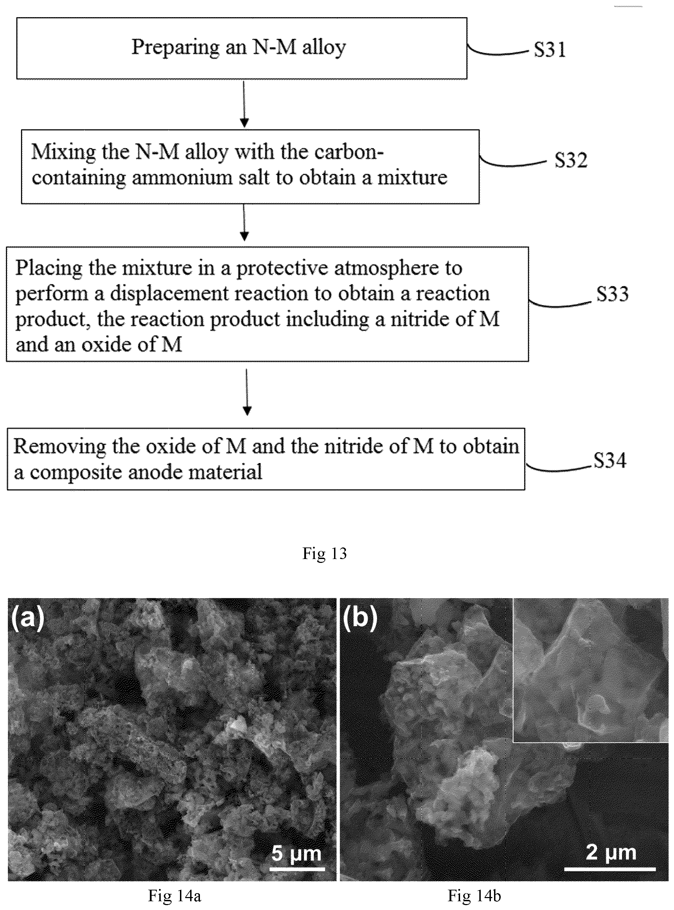

The anode material as described in the first aspect includes primary particles and a protective layer. The protective layer is a carbon layer. The method for preparing the anode material, as shown in FIG. 13, includes following steps S31 to S34.

In S31, preparing an N-M alloy.

In S32, mixing the N-M alloy with the carbon-containing ammonium salt to obtain a mixture.

In S33, placing the mixture in a protective atmosphere, and performing a displacement reaction to obtain a reaction product, and the reaction product includes a nitride of M and an oxide of M.

In S34, removing the oxide of M and the nitride of M to obtain a composite anode material.

The obtained composite anode material includes primary particles and a carbon layer. The primary particle includes a skeleton. The skeleton includes a main skeleton located inside the primary particle and multiple branches extending from the main skeleton to the surface of the primary particle. The carbon layer is located on the surface of the skeleton.

The primary particle has a macroporous structure. The primary particle is formed with pores extending to the surface of the primary particle.

In addition, the primary particle is formed with through holes, and the porosity of the primary particles is not less than 30%.

In this solution, the anode material is prepared by a one-step compounding method. The N-M alloy reacts directly with the carbon-containing ammonium salt at high temperature to remove the metal components in the N-M alloy. At the same time, a carbon layer is deposited in situ on the surface of the N material. The composite anode material is obtained after acid-washing. The overall reaction is mild and has no by-products. The N material has a complete and stable structure, and the carbon layer is deposited uniformly. The raw materials involved in the reaction are common alloys, ammonium salts and common inorganic compounds, which can reduce costs.

The method for preparing the anode material are described below in detail.

In step S31, preparing an N-M alloy.

In some embodiments, the N in the N-M alloy includes at least one of Si, Ge, Sn, B, and Sb; and the M in the N-M alloy includes at least one of Mg, Al, Zn, and Ca.
step S31 is substantially the same as step S21, which is not elaborated here.

It is appreciated that the N-M alloy can also be prepared by other preparation methods, e.g., high-energy ball milling, vacuum smelting, and hot pressed sintering. It can be understood that the N-M alloy can be obtained commercially, at this time, step S31 can be omitted.

In some embodiments, a mass percentage of the N in the N-M alloy ranges from 15% to 60%. Optionally, a mass percentage of the N in the N-M alloy can be 15%, 20%, 30%, 40%, 50%, or 60%, which is not limited here. It can be understood that the pore size and porosity of the pores of the N material can be changed by controlling the composition of the N-M alloy. Generally, the higher the N content in the N-M alloy, the smaller the pore diameter. The heating reaction time and reaction temperature can be controlled to change the depth of the pore channels. Generally, the longer the reaction time and the higher the reaction temperature, the deeper the pore depth.

In S32, mixing the N-M alloy with the carbon-containing ammonium salt to obtain a mixture.

It should be noted that the carbon-containing ammonium salt refers to a salt containing carbon and ammonium ion.

In some embodiments, a molar ratio of the N-M alloy and the carbon-containing ammonium salt is 1:(0.1-10), and can be 1:0.1, 1:0.5, 1:1, 1:2, 1:4, 1 :5, 1:7 or 1:10, which is not limited here.

Specifically, the carbon-containing ammonium salt includes at least one of ammonium carbonate, ammonium bicarbonate, and ammonium carbamate. Ammonium carbonate, ammonium bicarbonate, and ammonium carbamate are unstable under heat and easily decomposed into ammonia gas and carbon dioxide, therefore, during the reaction process, an ammonium salt inhibitor is also added to the mixture to inhibit the high temperature decomposition of ammonium salt.

In some embodiments, a molar ratio of the N-M alloy and the ammonium salt decomposition inhibitor is 1:(0.2-10), e.g., 1:0.2, 1:0.5, 1:1, 1:2, 1:4, 1:5, 1:7 or 1:10, which is not limited here.

In some embodiments, the ammonium salt decomposition inhibitor includes carbonate and/or bicarbonate.

The chemical formula of carbonate is M_{y}CO₃, and the chemical formula of bicarbonate is M(HCO₃)_{y}, in which M includes at least one of Na, K, Li, Mg, Ca, Zn, and Ba, and y=1 or 2.

It can be understood that bicarbonate is unstable at high temperature and easily decomposed into carbonate, carbon dioxide and water. The carbon dioxide gas, inorganic salt, and water that are decomposed are not harmful to the environment, a part of the reaction energy cab be absorbed, and ammonium salt is inhibited to be decomposed at high temperature.

In some embodiments, in order to improve the reaction degree, a molten salt medium is also added. Optionally, the molten salt medium includes at least one of an ammonium halide salt and a halide salt.

A molar ratio of the N-M alloy to the ammonium halide salt is 1 :(0.1-10), e.g., 1:0.1, 1:0.5, 1:1, 1:2, 1:4, 1:5, 1:7 or 1:10, which is not limited here. The chemical formula of the ammonium halide salt is NH₄Y, where Y includes at least one of Cl, Br, F, and I.

By adding an ammonium salt decomposition inhibitor and an appropriate amount of molten salt medium (ammonium halide) in the reaction, on the one hand, the ammonium salt decomposition inhibitor can be used to inhibit the decomposition of ammonium salt and keep it in a high-temperature liquid state, so that it is beneficial to achieve the purpose of de-alloying by reacting the ammonium salt from the outside to the inside, while gradually flowing into the pore structure of the N material as a liquid template for the interconnected skeleton, thereby uniformly depositing the carbon in the pore structure of the silicon material, and enhancing the electrical conductivity of the entire composite structure and structural stability. On the other hand, molten salt can increase the solubility of ammonium salt therein, promote the reaction degree, so that the high-temperature liquid environment and the uniformity of the reaction temperature when the alloy powder reacts with the ammonium salt can be ensured, destruction of the porous structure caused by excessive high local temperature is avoided, thereby improving the yield and purity.

After adding the corresponding ammonium halide as the molten salt medium, it can further ensure the high-temperature liquid environment and the uniformity of the reaction temperature when the alloy powder reacts with the ammonium salt, and avoid destruction of the porous structure caused by excessive high local temperature. The prepared anode material has excellent stability, uniform carbon composite structure, and excellent electrochemical performance.

Similarly, a molar ratio of the N-M alloy to the halide is 1:(0.1-10), e.g., 1:0.1, 1:0.5, 1:1, 1:2, 1:4, 1:5, 1:7 or 1:10, which is not limited here. The chemical formula of the halide is MYa, where a=1, M includes at least one of Na, K, Li, Mg, Ca, Zn, and Ba, and Y includes at least one of Cl, Br, F, and I.

In S33, placing the mixture in a protective atmosphere, and performing a displacement reaction to obtain a reaction product, and the reaction product includes the nitride of M and the oxide of M.

This reaction can be referred to as a de-alloying reaction.

The reaction products of the displacement reaction include the nitride of M, the oxide of M, carbon and N elemental substances. Exemplarily, the N-M alloy is a silicon-magnesium alloy, the ammonium salt is ammonium carbonate, and the chemical reaction formula for de-alloying is: 5Mg₂Si+2(NH₄)₂CO₃→5Si+2C+4MgO+2Mg₃N₂+2H₂O+6H₂. After the reaction, the metal oxide (MgO) and nitride (Mg₃N₂) can be removed from the reaction product to obtain the composite anode material.

It can be understood that when ammonium salt is selected to participate in the de-alloying process, the ammonium salt is in a molten state during the reaction process, so that it provides an interconnected liquid template for the formation of the interconnected N skeleton, ensuring the continuity of the pore structure of the N skeleton. In addition, the ammonium salt is used as a carbon source, the carbon layer formed after the reaction is also continuously filled in the pore structure to form a three-dimensional conductive carbon network structure. Since the reaction is relatively mild at high temperature, the broken carbon-oxygen bond in the ammonium salt can be recombined orderly to form a carbon layer, thereby improving conductivity, being more conducive to in and out of lithium ions, and improving the rate performance of the material.

In a specific embodiment, the de-alloying heat treatment is performed under vacuum conditions, in which the vacuum degree is 1Pa to 20KPa. It can be understood that in the embodiments of the present disclosure, the de-alloying heat treatment is performed in a high-temperature vacuum environment, so that the reaction rate is increased, thereby having a safer reaction.

In order to cause the mixture to react sufficiently, the temperature of the de-alloying heat treatment ranges from 200°C to 950°C, e.g., 200°C, 300°C, 400°C, 600°C, 800°C, or 950°C.

The heat-preserving time of the de-alloying heat treatment ranges from 1 hour to 24 hours, e.g., 1 hour, 3 hours, 6 hours, 9 hours, 12 hours, 15 hours, 18 hours or 24 hours, which is not limited here.

A heating rate of the de-alloying heat treatment ranges from 1°C/min to 20°C/min, e.g., 1°C/min, 5°C/min, 10°C/min, 15°C/min or 20°C/min, thereby effectively improving the reaction efficiency.

It can be understood that within the above suitable ranges of temperature, time, and heating rate of the heat treatment, it is helpful to improve the de-alloying efficiency, and it is helpful for the N-M alloy to form an N skeleton structure during the de-alloying process. In order to improve the safety of the reaction, the de-alloying heat treatment is performed under the protection of protective gases, and the protective gases of the protective atmosphere includes at least one of nitrogen, helium, neon, argon, and hernia. The flow rate of protective gas can be controlled between 1 L/min-10 L/min to improve the safety of the reaction.

In S34, removing the oxide of M and the nitride of M to obtain the composite anode material.

In some embodiments, the removal method includes acid-washing. The reaction product is acid-washed so that the oxide of M and the nitride of M in the reaction product can be removed.

A mass concentration of the acid solution ranges from 1 mol/L to 5 mol/L, e.g., 1 mol/L, 2 mol/L, 3 mol/L, 4 mol/L, or 5 mol/L. It is appreciated that a mass concentration of the acid solution can also be adjusted according to actual requirements, which is not limited here.

The duration of acid-washing ranges from 1 hour to 10 hours, e.g., 1 hour, 3 hours, 5 hours, 7 hours or 10 hours. In the embodiments, the acid-washed product can still be recycled to use.

When the coating layer is a metal oxide layer, the method for preparing the anode material includes following steps S31' to S35'.

In S31', preparing an N-M alloy;

In S32', mixing the N-M alloy with a transition metal halide to obtain a mixture;

In S33', placing the mixture in a protective atmosphere, and performing a displacement reaction to obtain a reaction product, and the reaction product includes a halide of M and a transition metal;

In S34', removing the halide of M and the transition metal from the reaction product to obtain an N material, the N material is primary particles including a skeleton, and the skeleton includes a main skeleton located inside the primary particle and multiple branches extending from the main skeleton to the surface of the primary particle; and

In S35', forming a metal oxide layer on the skeleton surface of the N material to obtain a composite anode material.

The obtained anode material includes a primary particle and a metal oxide layer. The primary particle includes a skeleton. The skeleton includes a main skeleton located inside the primary particle and multiple branches extending from the main skeleton to the surface of the primary particle. The metal oxide layer is located on the surface of the skeleton.

It can be understood that the primary particle has a macroporous structure, and is formed with pores extending to the surface of the primary particle.

It can also be understood that the primary particle is formed with through holes, and the porosity of the primary particle is not less than 30%.

The method for preparing the anode material will be described in detail.

In S31', preparing an N-M alloy.

In some embodiments, the N in the N-M alloy includes at least one of Si, Ge, Sn, B, and Sb. The M in the N-M alloy includes at least one of Mg, Al, Zn, and Ca. In a specific example, the N-M alloy can be Si-Mg alloy, Si-Al alloy, Ge-Mg alloy, or Ge-Al alloy. Different types of alloys can obtain different shapes of branches, including at least one of rod-shaped nano-particles, nano-sheets, nano-wires, and nano-tubes.

In some embodiments, the method for preparing the N-M alloy is the same as the step S31, which is not elaborated here.

In S32', mixing the N-M alloy with a transition metal halide to obtain a mixture.

In some embodiments, the chemical formula of the transition metal halide is ABx, where x=2 or 3, the A includes at least one of Sn, Cu, Fe, Zn, Co, Mn, Cr, and Ni, and the B includes at least one of Cl, F, and Br.

A molar ratio of the N-M alloy to the transition metal halide is 1 :(0.1-2).

It can be understood that the mixture can be obtained commercially, at this time, step S32' can be omitted.

S33', placing the mixture in a protective atmosphere, and performing a displacement reaction to obtain a reaction product, and the reaction product includes a halide of M and a transition metal.

In some embodiments, the temperature of the displacement reaction ranges from 500°C to 1100°C, e.g., 500°C, 600°C, 700°C, 800°C, 900°C, 1000°C, or 1100°C.

The reaction time ranges from 1 hour to 48 hours, e.g., 1 hour, 5 hours, 10 hours, 15 hours, 20 hours, 25 hours, 30 hours, 35 hours or 45 hours.

The gases of the protective atmosphere include at least one of helium, neon, argon, krypton, and xenon.

In S34', removing the halide of M and the transition metal from the reaction product to obtain an N material, the N material is primary particles including a skeleton, and the skeleton includes a main skeleton located inside the primary particle, and multiple branches extending from the main skeleton to the surface of the primary particle.

The removal method is the same as the step S34, which is not elaborated here.

In S35', forming a metal oxide layer on the surface of the skeleton structure of the N material to obtain a composite anode material.

In some embodiments, the method of forming the metal oxide layer includes at least one of a hydrothermal method, a sol-gel method, a precipitation method, a chemical vapor deposition method, a magnetron sputtering method or a solid phase reaction method.

The metal element in the metal oxide layer includes at least one of Si, Sn, Ge, Li, V, Al, Fe, and Zn.

When the protective layer is a metal nitride layer, the method for preparing the anode material includes following steps S31" to S36".

In S31", preparing an N-M alloy;

In S32", mixing the N-M alloy with a transition metal halide to obtain a mixture;

In S33", placing the mixture in a protective atmosphere, and performing a displacement reaction to obtain a reaction product, and the reaction product includes a halide of M and a transition metal;

In S34", removing the halide of M and the transition metal from the reaction product to obtain an N material., the N material is primary particles including a skeleton, and the skeleton includes a main skeleton located inside the primary particle and multiple branches extending from the main skeleton to the surface of the primary particle;

In S35", forming a metal oxide layer on the skeleton surface of the N material to obtain a composite; and

In S36", heat-treating the composite in a protective atmosphere and then subjected to nitriding treatment to obtain an anode material.

The obtained anode material includes a primary particle and a metal oxide layer. The primary particle includes a skeleton. The skeleton includes a main skeleton located inside the primary particle and multiple branches extending from the main skeleton to the surface of the primary particle. The metal nitride layer is located on the surface of the skeleton.

It can be understood that the primary particle has a macroporous structure, and is formed with pores extending to the surface of the primary particle.

It can also be understood that the primary particle is formed with through holes, and the porosity of the primary particle is not less than 30%.

The steps S31" to S35" are the same as steps S31' to S35', which are not be elaborated here.

In some embodiments, a heat treatment temperature ranges from 500°C to 800°C, and the heat-preserving time is 1 hour to 24 hours.

In some embodiments, the protective atmosphere includes at least one of helium, neon, argon, krypton, and xenon.

In some embodiments, the nitriding treatment is kept at 400°C-950°C for 2 hours to 24 hours.

The atmosphere of the nitriding treatment adopts at least one of ammonia atmosphere and nitrogen atmosphere.

The embodiments of the present disclosure will be further described in multiple Examples. The embodiments of the present disclosure are not limited to following Examples. Within the scope of the unchanging main rights, changes can be appropriately implemented.

### Example 29

A method for preparing a silicon-carbon anode material of this Example includes following steps.
(1) Silicon powder with a particle size of 1 µm and magnesium powder were mixed at a molar ratio of 1:2 and placed into a vacuum furnace vacuumized to 10pa, and heated under the protection of argon inert gas to 600°C at a heating rate of 3°C/min and heat-preserved for 6 hours to make them react sufficiently to obtain a silicon-magnesium alloy. The silicon-magnesium alloy is ball-milled to obtain 1 µm of silicon-magnesium alloy powder.
(2) 1 mol of silicon-magnesium alloy powder, 1 mol of ammonium carbonate, 1 mol of sodium carbonate and 1 mol of ammonium chloride were mixed uniformly, and then 1.5 mol of sodium chloride was added to obtain a mixture.
(3) After the obtained mixture was mixed uniformly, it was placed into a sealed stainless steel reactor. Then the reactor was heated to 750°C at a heating rate of 3°C/min in an argon atmosphere, and then heat-preserved for 8 hours to react sufficiently to obtain a reaction product.
(4) The reaction product was mechanically stirred in hydrochloric acid solution of 1 mol/L for 2 hours for acid-washing treatment, filtered, washed, and dried to obtain a silicon-carbon composite anode material.

After being tested, the prepared silicon composite anode material has a tap density of 0.73 g/cm³, the powder compaction density of 1.2 g/cm³, the porosity of 50%, the specific surface area of 18m²/g, and the carbon content of 12%.

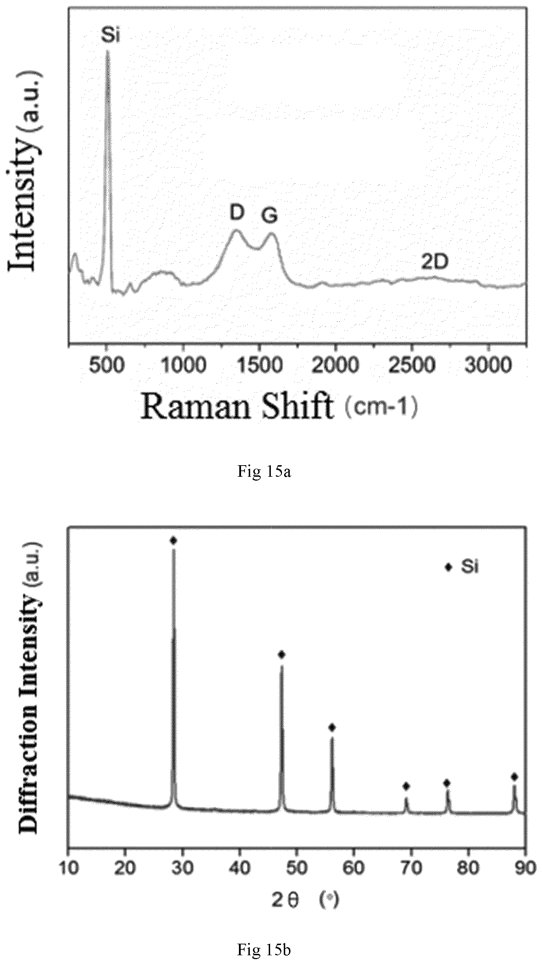

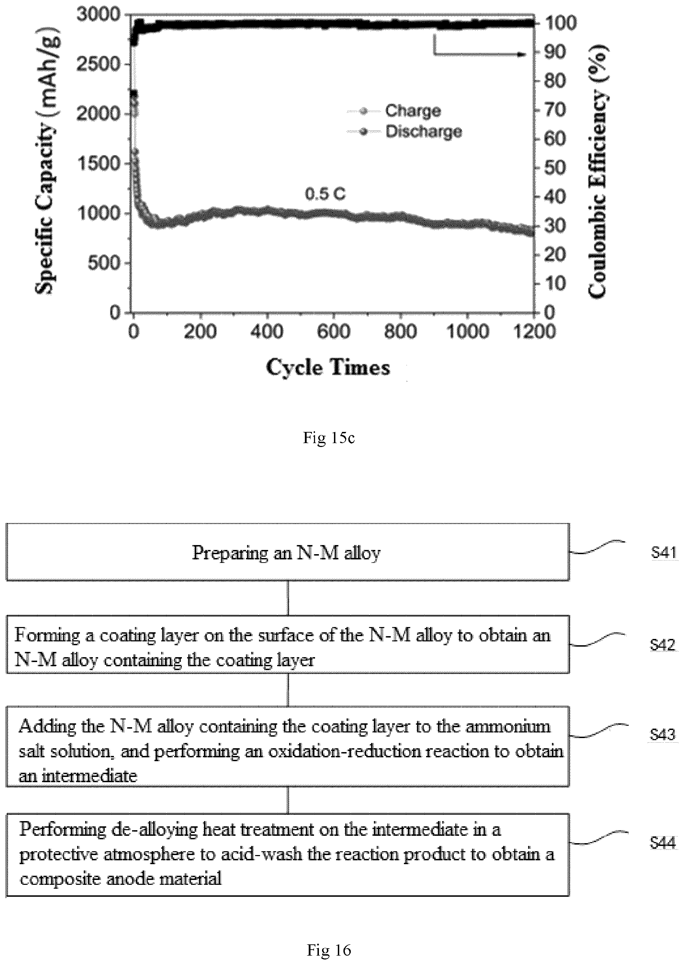

FIG. 14a and FIG. 14b are SEM images of the silicon-carbon composite anode material according to an embodiment of the present disclosure. FIG. 15a is a Raman pattern showing the silicon-carbon composite anode material according to an embodiment of the present disclosure; FIG. 15b is an XRD pattern of the silicon-carbon composite anode material according to an embodiment of the present disclosure; and FIG. 15c is a graph showing the cycle performance of a battery made of the composite anode material at a charging and discharging current of 0.5C.

As can be seen from the SEM images in FIG. 14a and FIG. 14b, the prepared silicon material is primary particles. The primary particle includes a silicon skeleton. The silicon skeleton includes a main skeleton located inside the primary particle and multiple branches extending from the main skeleton to the surface of the primary particle. The primary particle has a macroporous structure, and is formed with pores extending to the surface of the primary particles. The surface of the silicon skeleton is wrapped with a graphite carbon layer with the thickness of 25 nm. The branches of the skeleton are rod-shaped nano-silicon. The pores have an average diameter of about 80 nm, and a depth of about 250 nm.

The Raman pattern showing FIG. 15a further proves that there is a 2D peak near 2680 cm-1, which is a characteristic peak of graphite, and further shows that the carbon generated in situ is graphite-like carbon, having better electrical conductivity and stability. From the XRD pattern showing in FIG. 15b, it can be seen that three strong peaks at 28.4°, 47.3° and 56.1° corresponding to three strong peaks of silicon (JCPDS No. 27-1402), and there is substantially no impurity.

It can be seen in FIG. 15c that the lithium-ion battery prepared from the silicon-carbon composite anode material has a relatively high cycle performance, and has a capacity of 897mAh/g after 1200 cycles at a large current of 0.5C. Therefore, the silicon-carbon composite anode material prepared according to the method provided in the present disclosure at least has the advantage of high stability of charging and discharging cycle.

### Example 30

A method for preparing a silicon-carbon anode material of this Example includes following steps.
(1) Silicon powder with a particle size of 1.5 µm and zinc powder were mixed at a molar ratio of 1:2.2 and placed into a vacuum furnace vacuumized to 10pa, and heated under the protection of argon inert gas to 650°C at a heating rate of 5°C/min and heat-preserved for 3 hours to make them react sufficiently to obtain a silicon-zinc alloy. The silicon-zinc alloy is ball-milled to obtain 1 µm of silicon-zinc alloy powder.
(2) 1 mol of silicon-zinc alloy powder, 3 mol of ammonium carbamate, 1 mol of potassium carbonate and 1.5 mol of ammonium chloride were mixed uniformly, and then 1.5 mol of sodium chloride was added to obtain a mixture.
(3) After the obtained mixture was mixed uniformly, it was placed into a sealed stainless steel reactor. Then the reactor was heated to 800°C at a heating rate of 3°C/min in an argon atmosphere, and then heat-preserved for 8 hours to react sufficiently to obtain a reaction product.
(4) The reaction product was mechanically stirred in 2 L hydrochloric acid solution of 1 mol/L for 2 hours for acid-washing treatment, filtered, washed, and dried to obtain a silicon-carbon composite anode material.

After being tested, the prepared silicon composite anode material has a tap density of 0.77 g/cm³, the powder compaction density of 1.26 g/cm³, the porosity of 52%, the specific surface area of 25 m²/g, and the carbon content of 15%.

The silicon-carbon composite material includes a silicon material and a carbon layer. The silicon material is primary particles. The primary particle includes a silicon skeleton, and the silicon skeleton includes a main skeleton located inside the primary particle and multiple branches extending from the main skeleton to the surface of the primary particle. The branches of the skeleton are rod-shaped silicon nano-particles. The primary particle has a macroporous structure, and has pores extending to the surface of the primary particle. The surface of the silicon skeleton is wrapped with an amorphous carbon layer with a thickness of 15 nm. The pore has an average diameter of about 80 nm, and a depth of about 300 nm.

### Example 31

A method for preparing a silicon-carbon anode material of this Example includes following steps.
(1) Silicon powder with a particle size of 2 µm and magnesium powder were mixed at a molar ratio of 1:2.8 and placed into a vacuum furnace vacuumized to 10pa, and heated under the protection of argon inert gas to 620°C at a heating rate of 5°C/min and heat-preserved for 4 hours to make them react sufficiently to obtain a silicon-magnesium alloy, and the vacuum degree in the reaction process is kept unchanged. The silicon-magnesium alloy is ball-milled to obtain 2 µm of silicon-magnesium alloy powder.
(2) 1 mol of silicon-magnesium alloy powder, 5 mol of ammonium carbamate, 2 mol of ammonium bicarbonate and 2.5 mol of ammonium bromide were mixed uniformly, and then 1.5 mol of potassium chloride was added to obtain a mixture.
(3) After the obtained mixture was mixed uniformly, it was placed into a sealed stainless steel reactor. Then the reactor was heated to 820°C at a heating rate of 3°C/min in an argon atmosphere, and then heat-preserved for 8 hours to react sufficiently to obtain a reaction product.
(4) The reaction product was mechanically stirred in 3L hydrochloric acid solution of 1 mol/L for 3 hours for acid-washing treatment, filtered, washed, and dried to obtain a silicon-carbon composite anode material.

After being tested, the prepared silicon composite anode material has a tap density of 0.45 g/cm³, the powder compaction density of 1.09 g/cm³, the porosity of 65%, the specific surface area of 53 m²/g, and the carbon content of 38%.

The silicon-carbon composite material includes a silicon material and a carbon layer. The silicon material is primary particles. The primary particle includes a silicon skeleton, and the silicon skeleton includes a main skeleton located inside the primary particle and multiple branches extending from the main skeleton to the surface of the primary particle. The branches are nano-silicon sheets. The primary particle has a macroporous structure, and has pores extending to the surface of the primary particle. The surface of the silicon skeleton is wrapped with an amorphous carbon layer with a thickness of 25 nm. The pore is filled with carbon material. The pore has an average diameter of about 50 nm, and a depth of about 500 nm.

### Example 32

A method for preparing a silicon-carbon anode material of this Example includes following steps.
(1) Silicon powder with a particle size of 3 µm and aluminum powder were mixed at a molar ratio of 1:3 and placed into a vacuum furnace vacuumized to 10 pa, and heated under the protection of argon inert gas to 660°C at a heating rate of 5°C/min and heat-preserved for 3 hours to make them react sufficiently to obtain a silicon-aluminum alloy, and the vacuum degree in the reaction process is kept unchanged. The silicon-aluminum alloy is ball-milled to obtain 3 µm of silicon-aluminum alloy powder.
(2) 1 mol of silicon-aluminum alloy powder, 4.5 mol of ammonium carbamate, 1.8 mol of ammonium carbonate and 2.2 mol of ammonium bromide were mixed uniformly, and then 1.5 mol of sodium chloride was added to obtain a mixture.
(3) After the obtained mixture was mixed uniformly, it was placed into a sealed stainless steel reactor. Then the reactor was heated to 810°C at a heating rate of 2°C/min in an argon atmosphere, and then heat-preserved for 8 hours to react sufficiently to obtain a reaction product.
(4) The reaction product was mechanically stirred in 4 L hydrochloric acid solution of 1 mol/L for 3 hours for acid-washing treatment, filtered, washed, and dried to obtain a silicon-carbon composite anode material.

After being tested, the prepared silicon composite anode material has a tap density of 0.58 g/cm³, the powder compaction density of 1.12 g/cm³, the porosity of 32%, the specific surface area of 60 m²/g, and the carbon content of 40%.

The silicon-carbon composite material includes a silicon material and a carbon layer. The silicon material is primary particles. The primary particle includes a silicon skeleton, and the silicon skeleton includes a main skeleton located inside the primary particle and multiple branches extending from the main skeleton to the surface of the primary particle. The branches are rod-shaped silicon nano-particles. The primary particle has a macroporous structure, and has pores extending to the surface of the primary particle. The surface of the silicon skeleton is wrapped with a graphite carbon layer with a thickness of 50 nm. The pore is filled with carbon material. The pore has an average diameter of about 150 nm, and a depth of about 1000 nm.

### Example 33

A method for preparing a silicon-carbon anode material of this Example includes following steps.
(1) Silicon powder with a particle size of 2 µm and magnesium powder were mixed at a molar ratio of 1:1.8 and placed into a vacuum furnace vacuumized to 10pa, and heated under the protection of argon inert gas to 650°C at a heating rate of 5°C/min and heat-preserved for 3 hours to make them react sufficiently to obtain a silicon-magnesium alloy, and the vacuum degree in the reaction process is kept unchanged. The silicon-magnesium alloy is ball-milled to obtain 3 µm of silicon-magnesium alloy powder.
(2) 1 mol of silicon-magnesium alloy powder were mixed uniformly with 1.5 mol of ammonium carbamate, 0.8 mol of ammonium carbonate and 1.2 mol of ammonium bromide, and then 0.5 mol of sodium chloride was added to obtain a mixture.
(3) After the obtained mixture was mixed uniformly, it was placed into a sealed stainless steel reactor. Then the reactor was heated to 750°C at a heating rate of 4°C/min in an argon atmosphere, and then heat-preserved for 8 hours to react sufficiently to obtain a reaction product.
(4) The reaction product was mechanically stirred in 2 L hydrochloric acid solution of 1 mol/L for 3 hours for acid-washing treatment, filtered, washed, and dried to obtain a silicon-carbon composite anode material.

After being tested, the prepared silicon composite anode material has a tap density of 0.8 g/cm³, the powder compaction density of 1.38 g/cm³, the porosity of 30%, the specific surface area of 10 m²/g, and the carbon content of 5%.

The silicon-carbon composite material includes a silicon material and a carbon layer. The silicon material is primary particles. The primary particle includes a silicon skeleton, and the silicon skeleton includes a main skeleton located inside the primary particle and multiple branches extending from the main skeleton to the surface of the primary particle. The primary particle has a macroporous structure, and has pores extending to the surface of the primary particle. The surface of the silicon skeleton is wrapped with an graphitic carbon layer with a thickness of 5 nm. The pore has an average diameter of about 20 nm, and a depth of about 60 nm.

### Example 34

A method for preparing a germanium-carbon anode material of this Example includes following steps.
(1) 1.5 µm of silicon powder and aluminum powder were mixed at a molar ratio of 1:3 and placed into an atmosphere furnace, and heated under the protection of argon inert gas to 480°C at a heating rate of 5°C/min and heat-preserved for 6 hours to make them react sufficiently to obtain a germanium-aluminum alloy. The germanium-aluminum alloy is ball-milled to obtain 0.5 µm of germanium-aluminum alloy powder.
(2) 1 mol of germanium-aluminum alloy powder, 2.5 mol of ammonium carbamate, 1.8 mol of ammonium carbonate and 2.2 mol of ammonium bromide were mixed uniformly, and then 1.5 mol of sodium chloride was added to obtain a mixture.
(3) After the obtained mixture was mixed uniformly, it was placed into a sealed stainless steel reactor. Then the reactor was heated to 780°C at a heating rate of 4°C/min in an argon atmosphere, and then heat-preserved for 8 hours to react sufficiently to obtain a reaction product.
(4) The reaction product was mechanically stirred in 2 L hydrochloric acid solution of 1 mol/L for 3 hours for acid-washing treatment, filtered, washed, and dried to obtain a germanium-carbon composite anode material.

The obtained germanium-carbon composite anode material has a median particle size of about 0.6 µm, a tap density of 0.78 g/cm³, the powder compaction density of 1.1 g/cm³, the specific surface area of 16 m²/g, the porosity of 24%, and the carbon mass content of 75%.

The germanium-carbon composite material includes a germanium material and a carbon layer. The germanium material is primary particles. The primary particle includes a germanium skeleton, and the germanium skeleton includes a main skeleton located inside the primary particle and multiple branches extending from the main skeleton to the surface of the primary particle. The branches are rod-shaped nano-particles. The primary particle has a macroporous structure, and has pores extending to the surface of the primary particle. The surface of the germanium skeleton is wrapped with a carbon layer with a thickness of 80 nm. The pore has an average diameter of about 100 nm, and a depth of about 800 nm.

### Example 35

A method for preparing a germanium-carbon anode material of this Example includes following steps.
(1) 1.5 µm of silicon powder and magnesium powder were mixed at a molar ratio of 1:2.5 and placed into an atmosphere furnace, and heated under the protection of argon inert gas to 480°C at a heating rate of 5°C/min and heat-preserved for 6 hours to make them react sufficiently to obtain a germanium-magnesium alloy. The germanium-magnesium alloy is ball-milled to obtain 0.5 µm of germanium-magnesium alloy powder.
(2) 1 mol of germanium-magnesium alloy powder, 1.5 mol of ammonium carbamate, 0.8 mol of ammonium carbonate and 1.2 mol of ammonium bromide were mixed uniformly, and then 0.5 mol of sodium chloride was added to obtain a mixture.
(3) After the obtained mixture was mixed uniformly, it was placed into a sealed stainless steel reactor. Then the reactor was heated to 750°C at a heating rate of 4°C/min in an argon atmosphere, and then heat-preserved for 8 hours to react sufficiently to obtain a reaction product.
(4) The reaction product was mechanically stirred in 2 L hydrochloric acid solution of 1 mol/L for 3 hours for acid-washing treatment, filtered, washed, and dried to obtain a germanium-carbon composite anode material.

The obtained germanium-carbon composite anode material has a median particle size of about 0.6 µm, a tap density of 0.88 g/cm³, the powder compaction density of 1.3 g/cm³, the specific surface area of 11 m²/g, the porosity of 44%, and the carbon mass content of 25%.

The germanium-carbon composite material includes a germanium material and a carbon layer. The germanium material is primary particles. The primary particle includes a germanium skeleton, and the germanium skeleton includes a main skeleton located inside the primary particle and multiple branches extending from the main skeleton to the surface of the primary particle. The branches are rod-shaped nano-particles. The primary particle has a macroporous structure, and has pores extending to the surface of the primary particle. The surface of the germanium skeleton is wrapped with a carbon layer with a thickness of 50 nm. The pore has an average diameter of about 60 nm, and a depth of about 1500 nm.

### Example 36

A method for preparing silicon anode material includes following steps.
(1) 1.5 µm of silicon powder and magnesium powder were mixed at a molar ratio of 1:2.5 and placed into an atmosphere furnace, and heated under the protection of argon inert gas to 600°C at a heating rate of 5°C/min and heat-preserved for 6 hours to make them react sufficiently to obtain a silicon-magnesium alloy. The silicon-magnesium alloy is ball-milled to obtain 0.5 µm of silicon-magnesium alloy powder.
(2) 1 mol of silicon-magnesium alloy powder, 1 mol of copper chloride, and 1 mol of sodium chloride were mixed uniformly to obtain a mixture.
(3) After the obtained mixture was placed into an argon atmosphere, and heated to 750°C at a heating rate of 3°C/min, and then heat-preserved for 8 hours to react sufficiently to obtain a reaction product. The reaction product was mechanically stirred in 2 L hydrochloric acid solution of 1 mol/L for 3 hours, filtered, washed, and dried to obtain a silicon composite anode material with a skeleton structure.
(4) 1 mol of the above silicon anode material and 0.7g of cellulose dissolved in 500ml of absolute ethanol were dispersed uniformly to obtain a mixing solution.
(5) 3 g of tetrabutyl titanate was added dropwise to the above mixing solution, heated to 80°C while stirring quickly for 3 hours, and then filtered, and dried under vacuum at 60°C for 24 hours to obtain a silicon-magnesium alloy composite wrapped by titanium oxide precursor.
(6) After the obtained composite was placed into a tubular atmosphere furnace, was heated to 750°C at a heating rate of 3°C/min in an argon atmosphere, and then heat-preserved for 8 hours to react sufficiently to obtain a silicon/titanium oxide composite anode material.

The composite anode material obtained has a median particle size of about 0.6 µm, a specific surface area of 44 m²/g, porosity of 43%, and a titanium oxide mass content of 12%.

The composite material includes a silicon material and a titanium oxide layer. The silicon material is primary particles. The primary particle includes a silicon skeleton. The silicon skeleton includes a main skeleton located inside the primary particle and multiple branches extending from the main skeleton to the surface of the primary particle. The branches are rod-shaped nano-particles. The primary particle has a macroporous structure, and is formed with pores extending to the surface of the primary particles. The surface of the silicon skeleton is wrapped with a titanium oxide layer. The average diameter of the pores is about 100 nm, and the depth of the pores is about 700 nm.

### Example 37

A method for preparing silicon anode material includes following steps.
(1) 1.5µm of silicon powder and magnesium powder were mixed at a molar ratio of 1:2.5 and placed into an atmosphere furnace, and heated under the protection of argon inert gas to 600°C at a heating rate of 5°C/min and heat-preserved for 6 hours to make them react sufficiently to obtain a silicon-magnesium alloy. The silicon-magnesium alloy is ball-milled to obtain 0.5 µm of silicon-magnesium alloy powder.
(2) 1 mol of silicon-magnesium alloy powder, 1 mol of copper chloride (CuCl₂), and 1 mol of sodium chloride (NaCl) were mixed uniformly to obtain a mixture.
(3) After the obtained mixture was placed into an argon atmosphere, and heated to 750°C at a heating rate of 3°C/min, and then heat-preserved for 8 hours to react sufficiently to obtain a reaction product. The reaction product was mechanically stirred in 2 L hydrochloric acid solution of 1 mol/L for 3 hours for acid-washing treatment, filtered, washed, and dried to obtain a silicon composite anode material with a skeleton structure.
(4) 1 mol of the above silicon anode material and 0.7g of cellulose dissolved in 500ml of absolute ethanol were dispersed uniformly to obtain a mixing solution.
(5) 3g of tetrabutyl titanate was added dropwise to the above mixing solution, heated to 80°C while stirring quickly for 3 hours, and then filtered, and dried under vacuum at 60°C for 24 hours to obtain a silicon-magnesium alloy composite wrapped by titanium oxide precursor.
(6) After the obtained composite was placed into a tubular atmosphere furnace, was heated to 650°C at a heating rate of 3°C/min in an argon atmosphere, and then heat-preserved for 5 hours to react sufficiently, next, the argon was changed to ammonia gas, and the temperature was raised to 800°C and heat-preserved for 8 hours, obtaining a silicon/titanium nitride composite anode material.

The composite anode material obtained has a median particle size of about 0.7 µm, a specific surface area of 40 m²/g, porosity of 48%, and a titanium nitride mass content of 32%.

The composite material includes a silicon material and a titanium nitride layer. The silicon material is primary particles. The primary particle includes a silicon skeleton. The silicon skeleton includes a main skeleton located inside the primary particle and multiple branches extending from the main skeleton to the surface of the primary particle. The branches are nano-wires. The primary particle has a macroporous structure, and is formed with pores extending to the surface of the primary particles. The surface of the silicon skeleton is wrapped with a titanium nitride layer. The average diameter of the pores is about 58 nm, and the depth of the pores is about 1000 nm.

### Example 38

A method for preparing silicon anode material includes following steps.
(1) 1.5µm of silicon powder and magnesium powder were mixed at a molar ratio of 1:2.5 and placed into an atmosphere furnace, and heated under the protection of argon inert gas to 600°C at a heating rate of 5°C/min and heat-preserved for 6 hours to make them react sufficiently to obtain a silicon-magnesium alloy. The silicon-magnesium alloy is ball-milled to obtain 0.5 µm of silicon-magnesium alloy powder.
(2) 1 mol of silicon-magnesium alloy powder, 1 mol of copper chloride (CuCl₂), and 1 mol of sodium chloride (NaCl) were mixed uniformly to obtain a mixture.
(3) After the obtained mixture was placed into an argon atmosphere, and heated to 700°C at a heating rate of 3°C/min, and then heat-preserved for 6 hours to react sufficiently to obtain a reaction product. The reaction product was mechanically stirred in 2L hydrochloric acid solution of 1 mol/L for 3 hours, filtered, washed, and dried to obtain a silicon composite anode material with a skeleton structure.
(4) Silicon-magnesium alloy wrapped by vanadium pentoxide was prepared through a sol-gel process. Firstly, 500 ml of triisopropoxy vanadium oxide in alcohol solution of 0.15 M/L was prepared, and 30 ml of acetylacetone was add to obtain a mixing solution. 0.5 mol of silicon-magnesium alloy powder was added to the above mixing solution and stirred for 36 hours, and then dispersed uniformly to obtain a sol.
(5) The sol was filtered and dried under vacuum at 60°C for 24 hours to obtain a silicon alloy composite wrapped by a vanadium pentoxide precursor.
(6) After the obtained composite was placed into a tubular atmosphere furnace, was heated to 600°C at a heating rate of 3°C/min in an argon atmosphere, and then heat-preserved for 3 hours to react sufficiently, next, the argon was changed to ammonia gas, and the temperature was raised to 750°C and heat-preserved for 8 hours, obtaining a silicon/vanadium nitride composite anode material.

The composite anode material obtained has a median particle size of about 0.6 µm, a specific surface area of 51 m²/g, porosity of 40%, and a vanadium nitride mass content of 25%.

The composite material includes a silicon material and a vanadium nitride layer. The silicon material is primary particles. The primary particle includes a silicon skeleton. The silicon skeleton includes a main skeleton located inside the primary particle and multiple branches extending from the main skeleton to the surface of the primary particle. The branches are rod-shaped nano-particles. The primary particle has a macroporous structure, and is formed with pores extending to the surface of the primary particles. The surface of the silicon skeleton is wrapped with a vanadium nitride layer. The average diameter of the pores is about 100 nm, and the depth of the pores is about 900 nm.

### Comparative Example 4

(1) Silicon powder with a particle size of 1 µm and magnesium powder were mixed at a molar ratio of 1:2 and placed into a vacuum furnace vacuumized to 10 pa, and heated under the protection of argon inert gas to 600°C at a heating rate of 3°C/min and heat-preserved for 6 hours to make them react sufficiently to obtain a silicon-magnesium alloy. The silicon-magnesium alloy is ball-milled to obtain 1 µm of silicon-magnesium alloy powder.
(2) 1 mol of silicon-magnesium alloy powder, 1 mol of ammonium carbonate, 1 mol of sodium carbonate and 1 mol of ammonium chloride were mixed uniformly to obtain a mixture.
(3) After the obtained mixture was mixed uniformly, it was placed into a sealed stainless steel reactor. Then the reactor was heated to 750°C at a heating rate of 3°C/min in an argon atmosphere, and then heat-preserved for 8 hours to react sufficiently to obtain a reaction product.
(4) The reaction product was mechanically stirred in hydrochloric acid solution of 1 mol/L for 2 hours for acid-washing treatment, filtered, washed, and dried to obtain a silicon-carbon composite anode material.

### Comparative Example 5

(1) Silicon powder with a particle size of 1 µm and magnesium powder were mixed at a molar ratio of 1:2 and placed into a vacuum furnace vacuumized to 10pa, and heated under the protection of argon inert gas to 600°C at a heating rate of 3°C/min and heat-preserved for 6 hours to make them react sufficiently to obtain a silicon-magnesium alloy. The silicon-magnesium alloy is ball-milled to obtain 1 µm of silicon-magnesium alloy powder.
(2) 1 mol of silicon-magnesium alloy powder, 1 mol of ammonium carbonate, 1 mol of sodium carbonate and 1 mol of ammonium chloride were mixed uniformly, and then 1.5 mol of sodium chloride was added to obtain a mixture.
(3) After the obtained mixture was mixed uniformly, it was placed into a sealed stainless steel reactor. Then the reactor was heated to 750°C at a heating rate of 3°C/min in an argon atmosphere, and then heat-preserved for 8 hours to react sufficiently to obtain a reaction product.
(4) The reaction product was mechanically stirred in hydrochloric acid solution of 1 mol/L for 2 hours, filtered, washed, and dried to obtain a silicon-carbon composite anode material.

### Comparative Example 6

The silicon-carbon composite anode material SiO/C is used. The silicon-carbon composite anode material has a median particle size of 1.5 µm. The core of the composite material is a porous silicon structure stacked with silicon nano-particles, and the shell is wrapped by a carbon layer. Amass percentage of carbon is 22%, the specific surface area is 38 m²/g, and the porosity of the silicon-carbon composite anode material is 67%. That is, the silicon-carbon composite anode material is SiOx/C anode material, where x=1.0.

### Performance Test

The anode materials prepared in Examples 29 to 37 and Comparative Examples 4 to 6, the same positive electrode material and current collector were made into lithium-ion batteries to carry out battery performance test. The test items included discharge specific capacity, initial coulombic efficiency, and capacity after 1200 cycles at 0.5C, capacity retention rate after 1200 cycles at 0.5C. The sample numbers are S29 to S37 and R4 to R6, and the performance parameters of the samples are described in Table 5.

**Table 5 Performance comparison result table**

| Performance parameters | S29 | S30 | S31 | S32 | S33 | S34 | S35 | S36 | S37 | S38 | R4 | R5 | R6 |
|---|---|---|---|---|---|---|---|---|---|---|---|---|---|
| Alloy size (D50,µm) | 1 | 1 | 2 | 3 | 3 | 0.6 | 0.6 | 0.6 | 0.7 | 0.6 | 1 | 1 | / |
| Tap density (g/cm³) | 0.73 | 0.77 | 0.45 | 0.58 | 0.8 | 0.78 | 0.88 | / | / | / | 0.4 | 0.5 | 0.52 |
| Compaction density (g/cm³) | 1.2 | 1.26 | 1.09 | 1.12 | 1.38 | 1.1 | 1.3 | / | / | / | 1.3 | 1.4 | 1.2 |
| Specific surface area (m²/g) | 18 | 25 | 53 | 60 | 10 | 16 | 11 | 44 | 40 | 51 | 6 | 5 | 38 |
| Carbon content (%) | 12 | 15 | 38 | 40 | 5 | 75 | 25 | / | | | 13 | 6 | 22 |
| Metal oxide content (%) | / | / | / | / | / | / | / | 12 | / | / | / | / | / |
| Metal nitride content (%) | / | / | / | / | / | / | / | / | 32 | 25 | / | / | / |
| Porosity (%) | 50 | 52 | 65 | 32 | 30 | 24 | 44 | 43 | 48 | 40 | 34 | 30 | 67 |
| Specific discharge capacity (mAh/g) | 2650 | 2605 | 2612 | 2482 | 2661 | 1204 | 1119 | 2623 | 2589 | 2258 | 2530 | 1235 | 1864 |
| Initial coulombic efficiency (%) | 88.1 | 86.8 | 81.5 | 78.2 | 88.6 | 81.3 | 80.3 | 80.2 | 79.5 | 78.2 | 66 | 53 | 71 |
| Capacity after 1200 cycles at 0.5C (mAh/g) | 1061 | 1021 .1 | 783. 6 | 868. 3 | 691 | 528. 5 | 428. 5 | 723 | 642 | 698 | 632. 2 | 247 | 372. 8 |
| Capacity retention rate after 1200 cycles at 0.5C (%) | 40.9 | 39.2 | 30.8 | 35.2 | 26 | 43.9 | 38.3 | 32.1 | 27 | 30.5 | 25 | 20 | 21 |

Based on the foregoing Examples and Comparative Examples, it can be seen that the composite anode materials provided in Examples 29, 30, 33, and 34 have a three-dimensional pore structure, and a carbon layer is coated on the surface of the skeleton of the anode material. The composite anode materials provided in Examples 31 and 32 have a three-dimensional pore structure. A carbon layer is coated on the surface of skeleton of the anode material and filled into the three-dimensional pore structure, which has good structural stability. A passing though pore structure can provide a space for inner expansion during lithium deintercalation and lithium intercalation of anode materials, and can be used as passages for flow of the electrolyte, so that the expansion of the lithium battery is reduced while improving the lithium storage performance of silicon, thereby improving the capacity retention rate of the battery.

In Comparative Example 4, no molten salt medium was added during the preparation process, and the local temperature of the high-temperature liquid environment during the reaction of the alloy powder and the ammonium salt was excessively high, resulting in the destruction of part of the three-dimensional pore structure, thereby deteriorating the charging and discharging cycle stability of the battery. In Comparative Example 5, no ammonium salt decomposition inhibitor was added during the preparation process. The ammonium salt was decomposed into ammonia and carbon dioxide during the reaction process, and a carbon layer was difficult to be formed by uniformly depositing on the surface of the silicon material or in the three-dimensional pore channels, so that the carbon content of the final anode materials is decreased, the electrical conductivity of the anode material becomes worse, and the volume expansion inhibition performance is weak, resulting in a poor long cycle performance.

According to the foregoing examples and test results, it can be seen that the battery made of the silicon-carbon composite anode materials prepared in the present disclosure has good charging and discharging cycle stability, high capacity, and high cycle service life. In summary, the method for preparing the silicon-carbon anode material provided by the present disclosure is simple to operate, has a safe and efficient preparation process, and an effectively reduced preparation cost, and is suitable for mass production. The produced product can be used as electrode plates of batteries, which has better charging and discharging cycle performance.

### Fifth aspect

The anode materials described in the first aspect include primary particles, a nano-particle layer on the surface of the primary particles, and a coating layer coating the nano-particle layer. The embodiments of the present disclosure provide a method for preparing the anode material. As shown in FIG. 16, the method incudes following steps S41 to S44.

In S41, preparing an N-M alloy.

In S42, forming a coating layer on the surface of the N-M alloy to obtain an N-M alloy containing the coating layer.

In S43, adding the N-M alloy containing the coating layer to the ammonium salt solution, and performing an oxidation-reduction reaction to obtain an intermediate.

In S44, performing de-alloying heat treatment on the intermediate in a protective atmosphere to acid-wash the reaction product to obtain a composite anode material, the N in the N-M alloy includes at least one of silicon, germanium, antimony, tin, and boron, and the M in the N-M alloy includes at least one of magnesium, aluminum, calcium, and zinc.

In this solution, a composite anode material with two kinds of pore structures can be prepared in one step by a simple in-situ reaction. The N-M alloy coated by carbon is reacted with a cheap and common ammonium salt solution to obtain an intermediate, and then is placed in a protective atmosphere to perform a high temperature de-alloying treatment. During the de-alloying treatment, the active metals in the N-M alloy are reacted to form a nano-particle layer on the surface of the N-M alloy, and finally a composite anode material is obtained. The obtained anode material has pore channels, meso-pores and micro-pores, and the morphology and pore structure are easy to be controlled. The alloy components can be controlled to change the size and porosity of the pores. The depth of the pores can be controlled by reaction time and reaction temperature.

The primary particles obtained by de-alloying the N-M alloy inner layer have continuous passing through pore channels. The continuous pores can provide pore diameter of internal expansion for the lithiation process, and can also provide circulation passages for the electrolyte, which can reduce the expansion of the lithium battery while improving the lithium storage performance of the anode material. The produced nano-particle layer is formed with meso-pores and micro-pores, which can not only prevent from pulverization of the material, but also relieve the volume expansion of the material, ensuring the structural stability of the anode material. The use of carbon-coated N-M alloy as a raw material can avoid the blocking of the pore structure by carbon coating in the later stage and improve the initial efficiency of the battery.

The composite anode material obtained by the method includes a core and a coating layer on the surface of the core.

The core includes a primary particle and a nano-particle layer located on the surface of the primary particle. The primary particle includes a skeleton. The skeleton includes a main skeleton located inside the primary particle and multiple branches extending from the main skeleton to the surface of the primary particle. The nano-particle layer is formed with micro-pores and/or meso-pores.

The preparation method is explained in detail as follows.

In S41, preparing an N-M alloy.

In some embodiments, the N in the N-M alloy includes at least one of Si, Ge, Sn, B, and Sb; and the M in the N-M alloy includes at least one of Mg, Al, Zn, and Ca. In a specific example, the N-M alloy can be Si-Mg alloy, Si-Al alloy, Ge-Mg alloy, or Ge-Al alloy. Different types of alloys can obtain branches having different shapes, including at least one of rod-shaped nano-particles, nano-sheets, nano-wires, and nano-tubes.

S41 is substantially the same as step S21, which is not elaborated here.

In some embodiments, a mass percentage of N in the N-M alloy ranges from 15% to 60%. Optionally, a mass percentage of N can be 15%, 20%, 30%, 40%, 50%, or 60%, which is not limited here. In a specific embodiment, the N-M alloy can be at least one of silicon-magnesium alloy, silicon-aluminum alloy, silicon-calcium alloy, and silicon-zinc alloy. It can be understood that the pore size and porosity of the pores of the N material can be changed by controlling the components of the N-M alloy. Generally, the higher the N content in the N-M alloy, the smaller the pore diameter. The depth of the pores can be changed by controlling reaction time and reaction temperature. Generally, the longer the reaction time and the higher the reaction temperature, the deeper the pore depth.

It is appreciated that the N-M alloy can also be prepared by other preparation methods, e.g., high-energy ball milling, vacuum smelting, and hot pressed sintering.

It can be understood that the N-M alloy can be obtained commercially, at this time, step S41 can be omitted.

In step S42, forming a coating layer on the surface of the N-M alloy to obtain an N-M alloy containing the coating layer.

In the embodiments, a carbon source gas is used under protective gas to vapor-deposit a carbon layer on the surface of the N-M alloy. The carbon source gas used includes at least one of methane, acetylene, acetone, and alcohol. In other embodiments, a carbon layer can also be formed on the surface of the N-M alloy by means of liquid phase coating and solid phase coating. The solid-phase carbon source includes at least one of calcium carbonate, lithium carbonate, iron carbonate, zinc carbonate, and magnesium carbonate.

When the vapor deposition process is adopted, the protective gas used in the vapor deposition process includes at least one of helium, neon, argon, krypton, and xenon.

A volume ratio of the carbon source gas to the protective gas is 1: (0.1 to 100), e.g., 1:0.1, 1:10, 1:20, 1:40, 1:60, 1:80 or 1:100.

The feed time of carbon source gas ranges from 5min to 60min, e.g., 5min, 15min, 25min, 35min, 45min or 60min. It is appreciated that the feed time of carbon source gas can also be set according to the actual situation, which is not limited here.

The flow rate of the carbon source gas ranges from 0.1 L/min to 2 L/min, e.g., 0.1 L/min, 0.5 L/min, 0.8 L/min, 0.8 L/min, 1.5 L/min or 2 L/min. It is appreciated that, the flow rate of the carbon source gas can also be set according to the actual situation, which is not limited here.

The temperature of vapor deposition ranges from 400°C to 950°C, e.g., 400°C, 500°C, 600°C, 700°C, 800°C, 900°C or 950°C. It is appreciated that the temperature of vapor deposition can also be set according to the actual situation, which is not limited here.

The heating rate ranges from 1°C/min to 20°C/min, e.g., 1°C/min, 5°C/min, 10°C/min, 15°C/min or 20°C/min, thereby effectively improving the reaction efficiency.

It should be noted that the above suitable ranges of carbon source feed time or flow rate, vapor deposition temperature and heating rate may help to improve the uniform deposition of the carbon layer on the surface of the N-M alloy.

When the solid-phase coating method is adopted, a molar mass ratio of the solid-phase carbon source to the N-M alloy is 2: (1 to 10), e.g., 2:1, 2:3, 2:5, 2:7, 2: 8. 2:9 or 2:10. It is appreciated that the molar mass ratio of the solid-phase carbon source to the N-M alloy can also be set according to the actual situation, which is not limited here.

A heat treatment temperature range the solid phase carbon source and the N-M alloy ranges from 500°C to 1000°C, e.g., 500°C, 600°C, 700°C, 800°C, 900°C or 1000°C. It is appreciated that the reaction temperature can also be set according to the actual situation, which is not limited here.

In the embodiments, the thickness of the carbon layer formed on the surface of the N-M alloy ranges from 5 nm to 100 nm, e.g., 5 nm, 10 nm, 20 nm, 30 nm, 40 nm, 50 nm, 60 nm, 70 nm, 80 nm or 100 nm. The deposition thickness of the carbon layer can be controlled according to the deposition time.

The median particle size of carbon-coated N-M alloys ranges from 0.1µm to 15µm, e.g., 0.1µm, 0.5µm, 1µm, 2µm, 3µm, 4µm, 5µm, 6µm, 7µm, 8µm, 9µm, 10µm or 15µm, which is not limited here.

In step S43, adding the N-M alloy containing the coating layer to the ammonium salt solution, and performing an oxidation-reduction reaction to obtain an intermediate.

In the embodiments, the ammonium salt includes at least one of ammonium fluoride, ammonium chloride, ammonium bromide, ammonium iodide, ammonium nitrate, ammonium carbonate, ammonium perchlorate, ammonium sulfate, and ammonium sulfide. A mass concentration of the ammonium salt solution ranges from 0.1 mol/L to 5 mol/L, e.g., 0.1 mol/L, 0.5 mol/L, 1 mol/L, 1.5 mol/L, 2 mol/L, 2.5 mol/L, 3 mol/L, 4 mol/L or 5 mol/L. It is appreciated that a mass concentration of the ammonium salt solution can also be set according to the actual situation.

Optionally, a molar ratio of the N-M alloy containing the coating layer to the ammonium salt is 1: (0.1 to 2), e.g, 1:0.1, 1:0.5, 1:0.8, 1:1, 1:1.5, or 1: 2.

The oxidation-reduction reaction time of the N-M alloy and the ammonium salt solution ranges from 0.5 hours to 12 hours, e.g., 0.5 hours, 1 hour, 2 hours, 3 hours, 6 hours, 9 hours, 10 hours or 12 hours. The oxidation-reduction reaction temperature is 20°C to 80°C, e.g., 20°C, 40°C, 50°C, 60°C, 70°C, or 80°C.

For example, when the N-M alloy is a Si-M alloy, the carbon-coated Si-M alloy is immersed in an ammonium salt solution, after the Si-M alloy reacts with the ammonium salt solution, a silicic acid layer is formed on the surface of the Si-M alloy. The reaction chemical formula is shown in following formula:

MSi+NH₄Y+H₂O → H₂SiO₃+MY+NH₃+H₂.

In some embodiments, the silicon-magnesium alloy is placed in an ammonium chloride solution, and silicic acid, magnesium chloride, ammonia and hydrogen are generated on the surface of the silicon-magnesium alloy. It should be noted that the silicic acid is bonded to the surface of the silicon-magnesium alloy in a form of colloidal particles, precipitates or gels, and is further subject to a drying treatment, so that the surface of the silicon-magnesium alloy is adhered with the silicic acid nano-colloidal particles.

In step S44, performing de-alloying heat treatment on the intermediate in a protective atmosphere, and the reaction product is subjected to post-treatment to obtain an anode material.

It can be understood that, for example, when the N-M alloy is a Si-M alloy, during the de-alloying process, the active metal vapor evaporated from the Si-M alloy reacts with silicic acid, so that the silicic acid is reduced to be silicon nano-particles in situ at a high temperature. The silicon nano-particles are stacked to form a nano-particle layer, so that the nano-particle layer has micro-pores and/or meso-pores, that is, the silicic acid nano-colloid particles react with the active metal vapor to form an oxide. After the oxide is removed, the nano-particle layer can form micro-pores or meso-pores. The reaction chemical formula thereof is shown in following formula:

M+H₂SiO₃ → Si+MO+H₂O.

In order to make the mixture react sufficiently, the temperature of de-alloying heat treatment ranges from 200°C to 950°C, e.g., 200°C, 300°C, 400°C, 600°C, 800°C or 950°C, and the heat-preserving time is 2hours to 18 hours, e.g., 2 hours, 3 hours, 6 hours, 9 hours, 12 hours, 15hours or 18 hours, which are not limited here.

A heating rate of the de-alloying heat treatment ranges from 1°C/min to 20°C/min, e.g., 1°C/min, 5°C/min, 10°C/min, 15°C/min or 20°C/min, thereby effectively improving the reaction efficiency.

In order to improve the safety of the reaction, the de-alloying heat treatment is performed under the protection of an inert gas. The inert gas includes at least one of helium, neon, argon, krypton, and hernia. The flow rate of inert gas can be controlled in a range of 1 L/min to 10 L/min.

It can be understood that within the above suitable ranges of temperature, time, and heating rate of the heat treatment, it helps to improve the de-alloying efficiency, helps the Si-M alloy to form a skeleton structure during the de-alloying process, and helps to form a nano-particle layer on the surface of the Si-M alloy.

In a specific embodiment, the acid washing means that the reaction product is washed by an acid solution to remove the metal oxides in the reaction product. In a feasible embodiment, the acid solution used in the acid washing includes at least one of hydrochloric acid, nitric acid, and sulfuric acid.

A mass concentration of the acid solution ranges from 1 mol/L to 5 mol/L, e.g., 1 mol/L, 2 mol/L, 3 mol/L, 4 mol/L, or 5 mol/L. It is appreciated that a mass concentration of the acid solution can also be adjusted according to actual requirements, which is not limited here.

The duration of acid-washing ranges from 1 hour to 10 hours, e.g., 1 hour, 3 hours, 5 hours, 7 hours or 10 hours. In the embodiments, the acid-washed product can still be recycled to use.

It can be understood that within the above suitable ranges of acid solution concentration and acid-washing time, it is helpful to improve the acid-washing efficiency and reduce the impurities in the anode material.

In the embodiments, the Si-M alloy reacts with the ammonium salt solution to form a silicic acid layer on the surface of the Si-M alloy. During the high-temperature de-alloying process, the metal vapor of the active metal in the Si-M alloy reacts with silicic acid, so that the silicic acid is reduced to be silicon nano-particles in situ at a high temperature, and the silicon nano-particles form a nano-particle layer with micro-pores and/or meso-pores. The final prepared anode material has a pore structure with multiple pore diameters, and the pore diameter of the skin layer of the silicon material is smaller than the pore diameter of the inner layer, so that the volume expansion of silicon is relieved, and material pulverization is effectively inhibited, thereby enhancing structural stability. The prepared composite anode material can also effectively improve the stability of the charging and discharging cycle of the lithium battery, and has the advantages of high capacity, long cycle service life, high initial efficiency, and low expansion.

The embodiments of the present disclosure will be further described in multiple Examples. The embodiments of the present disclosure are not limited to following Examples. Within the scope of the unchanging main rights, changes can be appropriately implemented.

### Example 39

A method for preparing an anode material includes following steps.
(1) Silicon powder with a particle size of 1 µm and magnesium powder were mixed at a molar ratio of 1:2 and placed into an atmosphere furnace, and heated under the protection of argon inert gas to 600°C at a heating rate of 3°C/min and heat-preserved for 6 hours to make them react sufficiently to obtain a silicon-magnesium alloy. The silicon-magnesium alloy is ball-milled to obtain 1 µm of silicon-magnesium alloy powder.
(2) The silicon-magnesium alloy powder was placed into a rotation atmosphere furnace, and heated under the protection of argon gas atmosphere to 500°C at a heating rate of 3°C/min, and then fed with acetylene gas of 0.5 L/min so that a volume ratio of argon gas to acetylene gas in the rotation atmosphere furnace is 9:1, and then heat-preserved for 30 minutes to turn off the acetylene gas, and cooled to obtain a carbon-coated silicon-magnesium alloy powder.
(3) 1 mol of carbon-coated silicon-magnesium alloy powder was added to 1L of ammonium chloride solution of 1 mol/L, reacted for 1 hour under water bath of 60°C, filtered and dried to obtain an intermediate.
(4)The intermediate was placed into an argon atmosphere, heated to 700°C at a heating rate of 3°C/min, and then heat-preserved for 8 hours to react sufficiently to obtain a reaction product.
(5) The reaction product was mechanically stirred and acid-washed in a hydrochloric acid solution of 1 mol/L for 2 hours, and then was filtered, washed and dried to obtain the composite anode material.

After being tested, the obtained composite anode material has a median particle size of 1.2 µm, a carbon mass content of 15%, a specific surface area of 45 m²/g, and a carbon layer thickness of 50 nm. The obtained composite anode material has a porosity of 55%, the primary particle has a porosity of 40%, the nano-particle layer has a porosity of 25%. The ratio of the total porosity of the meso-pores in the nano-particle layer to the total porosity of the micro-pores in the nano-particle layer is 4:1. The volume of open pores accounts for about 80% of volume of all pore structures, and the volume of close pores accounts for about 20% of volume of all pore structures. The maximum cross-sectional width of the branches is about 40 nm, and the thickness of the nano-particle layer is 100 nm.

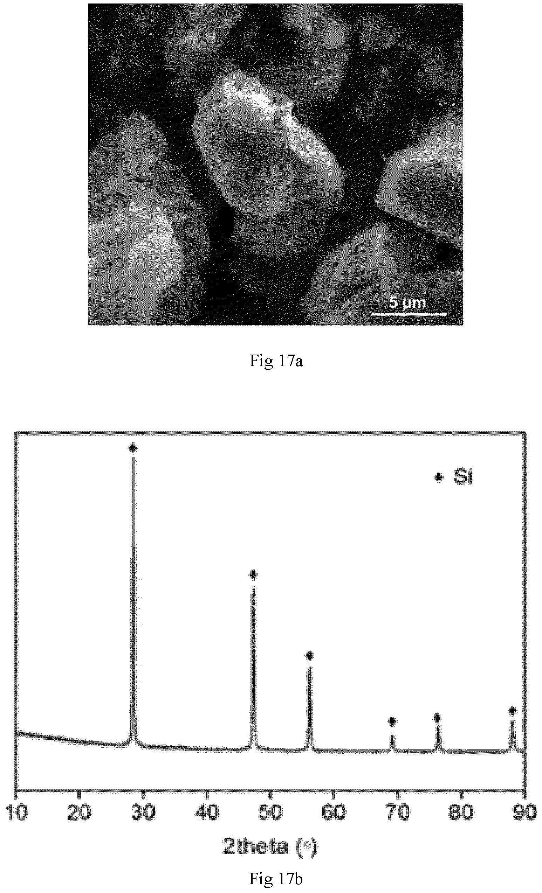

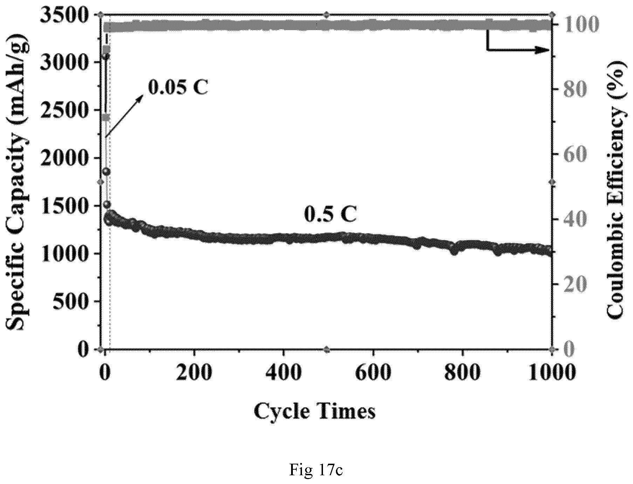

FIG. 17a is an SEM photograph of the composite anode material, FIG. 17b is an XRD pattern of the composite anode material according to an embodiment of the present disclosure; and FIG. 17c is a graph showing the cycle performance of a porous silicon anode material at a charging and discharging current of 0.5C. It can be seen from the SEM photograph in FIG. 17a that the prepared porous silicon has a clear porous structure, and the surface of the porous silicon is wrapped with a carbon layer. It can be seen from the XRD pattern shown in FIG. 17b that the three strong peaks at 28.4°, 47.3° and 56.1° correspond to three strong peaks of silicon (JCPDS No. 27-1402), and there is substantially no impurity.

### Example 40

(1) 2 µm of silicon powder and magnesium powder were mixed at a molar ratio of 1:2 and placed into an atmosphere furnace, and heated under the protection of argon inert gas to 650°C at a heating rate of 3°C/min and heat-preserved for 5 hours to make them react sufficiently to obtain a silicon-magnesium alloy. The silicon-magnesium alloy is ball-milled to obtain 1.5 µm of silicon-magnesium alloy powder.
(2) The silicon-magnesium alloy powder was placed into a rotation atmosphere furnace, and heated under the protection of argon gas atmosphere to 600°C at a heating rate of 3°C/min, and then fed with acetylene gas of 0.5 L/min so that a volume ratio of argon gas to acetylene gas in the rotation atmosphere furnace is 9:1, and then heat-preserved for 30 minutes to turn off the acetylene gas, and cooled to obtain a carbon-coated silicon-magnesium alloy powder.
(3) 1 mol of carbon-coated silicon-magnesium alloy powder was added to 1L of ammonium chloride solution of 1 mol/L, reacted for 2 hours under water bath of 60°C, filtered and dried to obtain an intermediate.
(4)The intermediate was placed into an argon atmosphere, heated to 650°C at a heating rate of 1°C/min, and then heat-preserved for 6 hours to react sufficiently to obtain a reaction product.
(5) The reaction product was mechanically stirred and acid-washed in a hydrochloric acid solution of 1 mol/L for 2 hours, and then was filtered, washed and dried to obtain the composite anode material.

After being tested, the obtained composite anode material has a median particle size of 1.8 µm, a carbon mass content of 16%, a specific surface area of 55 m²/g, and a carbon layer thickness of 53 nm. The obtained composite anode material has a porosity of 55%, the primary particle has a porosity of 35%, the nano-particle layer has a porosity of 23%. The ratio of the total porosity of the meso-pores in the nano-particle layer to the total porosity of the micro-pores in the nano-particle layer is 5:1. The volume of open pores accounts for about 83% of volume of all pore structures, and the volume of close pores accounts for about 17% of volume of all pore structures. The maximum cross-sectional width of the branches is about 35 nm, and the thickness of the nano-particle layer is 150 nm.

### Example 41

(1) 2 µm of silicon powder and aluminum powder were mixed at a molar ratio of 1:2 and placed into an atmosphere furnace, and heated under the protection of argon inert gas to 650°C at a heating rate of 5°C/min and heat-preserved for 5 hours to make them react sufficiently to obtain a silicon-aluminum alloy. The silicon-magnesium alloy is ball-milled to obtain 3 µm of silicon-magnesium alloy powder.
(2) The silicon-magnesium alloy powder was placed into a rotation atmosphere furnace, and heated under the protection of argon gas atmosphere to 600°C at a heating rate of 3°C/min, and then fed with acetylene gas of 0.5 L/min so that a volume ratio of argon gas to acetylene gas in the rotation atmosphere furnace is 9:1, and then heat-preserved for 30 minutes to turn off the acetylene gas, and cooled to obtain a carbon-coated silicon-magnesium alloy powder.
(3) 1 mol of carbon-coated silicon-magnesium alloy powder was added to 1L of ammonium chloride solution of 0.5 mol/L, reacted for 1 hour under water bath of 60°C, filtered and dried to obtain an intermediate.
(4)The intermediate was placed into an argon atmosphere, heated to 650°C at a heating rate of 3°C/min, and then heat-preserved for 6 hours to react sufficiently to obtain a reaction product.
(5) The reaction product was mechanically stirred and acid-washed in a hydrochloric acid solution of 1 mol/L for 2 hours, and then was filtered, washed and dried to obtain the composite anode material.

After being tested, the obtained composite anode material has a median particle size of 3.5 µm, a carbon mass content of 15%, a specific surface area of 40 m²/g, and a carbon layer thickness of 80 nm. The obtained composite anode material has a porosity of 45%, the primary particle has a porosity of 36%, the nano-particle layer has a porosity of 27%. The ratio of the total porosity of the meso-pores in the nano-particle layer to the total porosity of the micro-pores in the nano-particle layer is 5:1. The volume of open pores accounts for about 83% of volume of all pore structures, and the volume of close pores accounts for about 17% of volume of all pore structures. The maximum cross-sectional width of the branches is about 50 nm, and the thickness of the nano-particle layer is 50 nm.

### Example 42

(1) 2 µm of silicon powder and aluminum powder were mixed at a molar ratio of 1:2 and placed into an atmosphere furnace, and heated under the protection of argon inert gas to 650°C at a heating rate of 3°C/min and heat-preserved for 5 hours to make them react sufficiently to obtain a silicon-aluminum alloy. The silicon-magnesium alloy is ball-milled to obtain 1 µm of silicon-magnesium alloy powder.
(2) The silicon-magnesium alloy powder was placed into a rotation atmosphere furnace, and heated under the protection of argon gas atmosphere to 650°C at a heating rate of 3°C/min, and then fed with acetylene gas of 0.5 L/min so that a volume ratio of argon gas to acetylene gas in the rotation atmosphere furnace is 9:1, and then heat-preserved for 30 minutes to turn off the acetylene gas, and cooled to obtain a carbon-coated silicon-magnesium alloy powder.
(3) 1 mol of carbon-coated silicon-magnesium alloy powder was added to 1L of ammonium chloride solution of 5 mol/L, reacted for 2 hours under water bath of 60°C, filtered and dried to obtain an intermediate.
(4)The intermediate was placed into an argon atmosphere, heated to 650°C at a heating rate of 3°C/min, and then heat-preserved for 6 hours to react sufficiently to obtain a reaction product.
(5) The reaction product was mechanically stirred and acid-washed in a hydrochloric acid solution of 1 mol/L for 2 hours, and then was filtered, washed and dried to obtain the composite anode material.

After being tested, the obtained composite anode material has a median particle size of 1.5 µm, a carbon mass content of 18%, a specific surface area of 90 m²/g, and a carbon layer thickness of 50 nm. The obtained composite anode material has a porosity of 45%, the primary particle has a porosity of 30%, the nano-particle layer has a porosity of 15%. The ratio of the total porosity of the meso-pores in the nano-particle layer to the total porosity of the micro-pores in the nano-particle layer is 8:1. The volume of open pores accounts for about 81% of volume of all pore structures, and the volume of close pores accounts for about 19% of volume of all pore structures. The maximum cross-sectional width of the branches is about 30 nm, and the thickness of the nano-particle layer is 500 nm.

### Example 43

(1) Silicon powder with a particle size of 1 µm and magnesium powder were mixed at a molar ratio of 1:2 and placed into an atmosphere furnace, and heated under the protection of argon inert gas to 600°C at a heating rate of 3°C/min and heat-preserved for 6 hours to make them react sufficiently to obtain a silicon-magnesium alloy. The silicon-magnesium alloy is ball-milled to obtain 1 µm of silicon-magnesium alloy powder.
(2) The silicon-magnesium alloy powder was placed into a rotation atmosphere furnace, and heated under the protection of argon gas atmosphere to 500°C at a heating rate of 3°C/min, and then fed with acetylene gas of 0.5 L/min so that a volume ratio of argon gas to acetylene gas in the rotation atmosphere furnace is 9:1, and then heat-preserved for 60 minutes to turn off the acetylene gas, and cooled to obtain a carbon-coated silicon-magnesium alloy powder.
(3) 1 mol of carbon-coated silicon-magnesium alloy powder was added to 1L of ammonium chloride solution of 1 mol/L, reacted for 1 hour under water bath of 60°C, filtered and dried to obtain an intermediate.
(4)The intermediate was placed into an argon atmosphere, heated to 700°C at a heating rate of 3°C/min, and then heat-preserved for 8 hours to react sufficiently to obtain a reaction product.
(5) The reaction product was mechanically stirred and acid-washed in a hydrochloric acid solution of 1 mol/L for 2 hours, and then was filtered, washed and dried to obtain the composite anode material.

After being tested, the obtained composite anode material has a median particle size of 1.2 µm, a carbon mass content of 20%, a specific surface area of 50 m²/g, and a carbon layer thickness of 100 nm. The obtained composite anode material has a porosity of 55%, the primary particle has a porosity of 40%, the nano-particle layer has a porosity of 25%. The ratio of the total porosity of the meso-pores in the nano-particle layer to the total porosity of the micro-pores in the nano-particle layer is 4:1. The volume of open pores accounts for about 80% of volume of all pore structures, and the volume of close pores accounts for about 20% of volume of all pore structures. The maximum cross-sectional width of the branches is about 40 nm, and the thickness of the nano-particle layer is 100 nm.

### Example 44

(1) Silicon powder with a particle size of 1 µm and magnesium powder were mixed at a molar ratio of 1:2 and placed into an atmosphere furnace, and heated under the protection of argon inert gas to 600°C at a heating rate of 3°C/min and heat-preserved for 6 hours to make them react sufficiently to obtain a silicon-magnesium alloy. The silicon-magnesium alloy is ball-milled to obtain 1 µm of silicon-magnesium alloy powder.
(2) The silicon-magnesium alloy powder was placed into a rotation atmosphere furnace, and heated under the protection of argon gas atmosphere to 500°C at a heating rate of 3°C/min, and then fed with acetylene gas of 0.5 L/min so that a volume ratio of argon gas to acetylene gas in the rotation atmosphere furnace is 9:1, and then heat-preserved for 30 minutes to turn off the acetylene gas, and cooled to obtain a carbon-coated silicon-magnesium alloy powder.
(3) 1 mol of carbon-coated silicon-magnesium alloy powder was added to 1L of ammonium chloride solution of 1 mol/L, reacted for 12 hours under water bath of 90°C, filtered and dried to obtain an intermediate.
(4)The intermediate was placed into an argon atmosphere, heated to 800°C at a heating rate of 3°C/min, and then heat-preserved for 8 hours to react sufficiently to obtain a reaction product.
(5) The reaction product was mechanically stirred and acid-washed in a hydrochloric acid solution of 1 mol/L for 2 hours, and then was filtered, washed and dried to obtain the composite anode material.

After being tested, the obtained composite anode material has a median particle size of 1.6 µm, a carbon mass content of 20%, a specific surface area of 30 m²/g, and a carbon layer thickness of 50 nm. The obtained composite anode material has a porosity of 55%, the primary particle has a porosity of 40%, the nano-particle layer has a porosity of 32%. The ratio of the total porosity of the meso-pores in the nano-particle layer to the total porosity of the micro-pores in the nano-particle layer is 4:1. The volume of open pores accounts for about 80% of volume of all pore structures, and the volume of close pores accounts for about 20% of volume of all pore structures. The maximum cross-sectional width of the branches is about 40 nm, and the thickness of the nano-particle layer is 100 nm.

### Example 45

(1) Silicon powder with a particle size of 1 µm and magnesium powder were mixed at a molar ratio of 1:2 and placed into an atmosphere furnace, and heated under the protection of argon inert gas to 600°C at a heating rate of 3°C/min and heat-preserved for 6 hours to make them react sufficiently to obtain a silicon-magnesium alloy. The silicon-magnesium alloy is ball-milled to obtain 1 µm of silicon-magnesium alloy powder.
(2) The silicon-magnesium alloy powder was placed into a rotation atmosphere furnace, and heated under the protection of argon gas atmosphere to 500°C at a heating rate of 3°C/min, and then fed with acetylene gas of 0.5 L/min so that a volume ratio of argon gas to acetylene gas in the rotation atmosphere furnace is 9:1, and then heat-preserved for 30 minutes to turn off the acetylene gas, and cooled to obtain a carbon-coated silicon-magnesium alloy powder.
(3) 1 mol of carbon-coated silicon-magnesium alloy powder was added to 1L of ammonium chloride solution of 1 mol/L, reacted for 1 hour under water bath of 60°C, filtered and dried to obtain an intermediate.
(4)The intermediate was placed into an argon atmosphere, heated to 1000°C at a heating rate of 3°C/min, and then heat-preserved for 8 hours to react sufficiently to obtain a reaction product.
(5) The reaction product was mechanically stirred and acid-washed in a hydrochloric acid solution of 1 mol/L for 2 hours, and then was filtered, washed and dried to obtain the composite anode material.

After being tested, the obtained composite anode material has a median particle size of 1.3 µm, a carbon mass content of 20%, a specific surface area of 30 m²/g, and a carbon layer thickness of 50 nm. The obtained composite anode material has a porosity of 50%, the primary particle has a porosity of 65%, the nano-particle layer has a porosity of 22%. The ratio of the total porosity of the meso-pores in the nano-particle layer to the total porosity of the micro-pores in the nano-particle layer is 4:1. The volume of open pores accounts for about 80% of volume of all pore structures, and the volume of close pores accounts for about 20% of volume of all pore structures. The maximum cross-sectional width of the branches is about 60 nm, and the thickness of the nano-particle layer is 70 nm.

### Example 46

(1) Germanium powder with a particle size of 1 µm and magnesium powder were mixed at a molar ratio of 1:2 and placed into an atmosphere furnace, and heated under the protection of argon inert gas to 650°C at a heating rate of 3°C/min and heat-preserved for 8 hours to make them react sufficiently to obtain a germanium-magnesium alloy. The germanium-magnesium alloy is ball-milled to obtain 1 µm of germanium-magnesium alloy powder.
(2) The germanium-magnesium alloy powder was placed into a rotation atmosphere furnace, and heated under the protection of argon gas atmosphere to 500°C at a heating rate of 3°C/min, and then fed with acetylene gas of 0.5 L/min so that a volume ratio of argon gas to acetylene gas in the rotation atmosphere furnace is 9:1, and then heat-preserved for 30 minutes to turn off the acetylene gas, and cooled to obtain a carbon-coated germanium-magnesium alloy powder.
(3) 1 mol of carbon-coated germanium-magnesium alloy powder was added to 1L of ammonium chloride solution of 1 mol/L, reacted for 2 hours under water bath of 60°C, filtered and dried to obtain an intermediate.
(4)The intermediate was placed into an argon atmosphere, heated to 1000°C at a heating rate of 3°C/min, and then heat-preserved for 8 hours to react sufficiently to obtain a reaction product.
(5) The reaction product was mechanically stirred and acid-washed in a hydrochloric acid solution of 1 mol/L for 2 hours, and then was filtered, washed and dried to obtain the composite anode material.

After being tested, the obtained composite anode material has a median particle size of 1.3 µm, a carbon mass content of 21%, a specific surface area of 31 m²/g, and a carbon layer thickness of 40 nm. The obtained composite anode material has a porosity of 52%, the primary particle has a porosity of 64%, the nano-particle layer has a porosity of 23%. The ratio of the total porosity of the meso-pores in the nano-particle layer to the total porosity of the micro-pores in the nano-particle layer is 4:1. The volume of open pores accounts for about 81% of volume of all pore structures, and the volume of close pores accounts for about 19% of volume of all pore structures. The maximum cross-sectional width of the branches is about 62 nm, and the thickness of the nano-particle layer is 73 nm.

### Comparative Example 7

(1) Silicon powder with a particle size of 1 µm and magnesium powder were mixed at a molar ratio of 1:2 and placed into an atmosphere furnace, and heated under the protection of argon inert gas to 600°C at a heating rate of 3°C/min and heat-preserved for 6 hours to make them react sufficiently to obtain a silicon-magnesium alloy. The silicon-magnesium alloy is ball-milled to obtain 1 µm of silicon-magnesium alloy powder.
(2) The silicon-magnesium alloy powder was placed into a rotation atmosphere furnace, and heated under the protection of argon gas atmosphere to 500°C at a heating rate of 3°C/min, and then fed with acetylene gas of 0.5 L/min so that a volume ratio of argon gas to acetylene gas in the rotation atmosphere furnace is 9:1, and then heat-preserved for 30 minutes to turn off the acetylene gas, and cooled to obtain a carbon-coated silicon-magnesium alloy powder.
(3) The carbon-coated silicon-magnesium alloy powder was placed into an argon atmosphere, heated to 700°C at a heating rate of 3°C/min, and then heat-preserved for 8 hours to react sufficiently to obtain a reaction product.
(4) The reaction product was mechanically stirred and acid-washed in a hydrochloric acid solution of 1 mol/L for 2 hours, and then was filtered, washed and dried to obtain the composite anode material.

After being tested, the obtained composite anode material has a median particle size of 1.4 µm, a carbon mass content of 20%, a specific surface area of 15 m²/g, and a carbon layer thickness of 50 nm. The obtained composite anode material has a porosity of 70%. The volume of open pores accounts for about 70% of volume of all pore structures, and the volume of close pores accounts for about 30% of volume of all pore structures. The maximum diameter of the skeleton of the nano-silicon skeleton unit is about 65 nm.

### Comparative Example 8

(1) Silicon powder with a particle size of 1 µm and magnesium powder were mixed at a molar ratio of 1:2 and placed into an atmosphere furnace, and heated under the protection of argon inert gas to 600°C at a heating rate of 3°C/min and heat-preserved for 6 hours to make them react sufficiently to obtain a silicon-magnesium alloy. The silicon-magnesium alloy is ball-milled to obtain 1 µm of silicon-magnesium alloy powder.
(2) The silicon-magnesium alloy powder was placed into a rotation atmosphere furnace, and heated under the protection of argon gas atmosphere to 500°C at a heating rate of 3°C/min, and then fed with acetylene gas of 0.5 L/min so that a volume ratio of argon gas to acetylene gas in the rotation atmosphere furnace is 9:1, and then heat-preserved for 30 minutes to turn off the acetylene gas, and cooled to obtain a carbon-coated silicon-magnesium alloy powder.
(3) 1 mol of carbon-coated silicon-magnesium alloy powder was added to 1L of ammonium chloride solution of 10 mol/L, reacted for 12 hours under water bath of 100°C, filtered and dried to obtain an intermediate.
(4) The intermediate was placed into an argon atmosphere, heated to 700°C at a heating rate of 3°C/min, and then heat-preserved for 8 hours to react sufficiently to obtain a reaction product.
(5) The reaction product was mechanically stirred and acid-washed in a hydrochloric acid solution of 1 mol/L for 2 hours, and then was filtered, washed and dried to obtain the composite anode material.

After being tested, the obtained composite anode material has a median particle size of 1.8 µm, a carbon mass content of 25%, a specific surface area of 45 m²/g, and a carbon layer thickness of 50 nm. The obtained composite anode material has a porosity of 55%, the primary particle has a porosity of 40%, the nano-particle layer has a porosity of 7%. The ratio of the total porosity of the meso-pores in the nano-particle layer to the total porosity of the micro-pores in the nano-particle layer is 1.8:1. The volume of open pores accounts for about 58% of volume of all pore structures, and the volume of close pores accounts for about 42% of volume of all pore structures. The maximum cross-sectional width of the branches is about 40 nm, and the thickness of the nano-particle layer is 200 nm.

### Comparative Example 9

The composite anode material Si/C is used. The median particle size of the composite anode material is 1.5 µm . The core of the composite material is a porous silicon structure stacked by silicon nano-particles, and the shell thereof is wrapped by a carbon layer. The carbon mass content is 22%, the specific surface area is 38 m²/g, the thickness of the carbon layer is 50 nm, and the porosity of the composite anode material is 67%.

### Performance Test:

### (1) Observation of the microscopic morphology of powder particles of composite anode materials

An SEM is used to observe and characterize the surface condition of the powder. The selected test instrument is OXFORD EDS (X-max-20mm2), the acceleration voltage is 10KV to adjust focus length, the adopted magnification is 50K for high magnification observation, and the low magnification from 500 to 2000 is mainly used to observe particle agglomeration.

### (2) Test of particle size

About 0.02g of a powder sample was added to a clean beaker of 50 ml, about 20 ml of deionized water was added, and then a few drops of 1% surfactant to completely disperse the powder in the water. A ultrasonic treatment was performed in an ultrasonic cleaning machine of 120W for 5 minutes, and then particle size distribution was tested by MasterSizer 2000.

### (3) Testing method for the diameter of the skeleton

An SEM was used to randomly select 20 cores of anode materials to test the diameter and length of the skeleton and the size of the branches.

### (4) Test method for carbon content of anode material

The samples are heated at high temperature by a high-frequency furnace under oxygen-rich conditions and burned to oxidize carbon and sulfur into carbon dioxide and sulfur dioxide, respectively. After treatment, the gas enters the corresponding absorption tank. The corresponding infrared radiation is absorbed, and then is converted into the corresponding signal by a detector. This signal is sampled by a computer and converted into a value proportional to the concentration of carbon dioxide and sulfur dioxide after linear correction, and then the values of the whole analysis process are accumulated. After the analysis is completed, the accumulated value is divided by the weight value in the computer, and then multiplied by a correction factor, and the blank is subtracted, so that the content of carbon in the sample can be obtained. A high-frequency infrared carbon and sulfur analyzer (Shanghai Dekai HCS-140) was used for sample testing.

### (5) Test method for specific surface area of anode material

At a constant low temperature, after measuring the adsorption amount of gas on solid surface at different relative pressures, the adsorption amount of the sample monolayer is calculated based on the Brunauer-Emmelt-Teller adsorption theory and its formula (BET formula), so that the specific surface area of the solid is calculated.

### (6) Porosity test

The porosities of the anode material and the anode plate were tested by a gas displacement method. In the calculation method, regarding the percentage of pore volume of the sample to the total volume, P=(V-V0)/V×100%, V0: true volume, V: apparent volume.

### (7) Cross section test for of anode material

In a cross section polisher, an ion source ionizes inert gas to generate inert ions. The inert ions is accelerated and focused, the inert ions with high speed impact atoms or molecules on the surface of the samples, so that ion polishing is achieved. After CP cutting, the samples are placed on the SEM special sample stage for SEM test. The instrument model is IB-09010CP, an ion acceleration voltage is 2kV to 6kV, and the gas used is argon gas. After cutting the silicon-carbon anode material in a cross section test, the thickness of the cross-sectional nano-particle layer and the thickness of the carbon layer can be tested.

The anode materials prepared in Examples 39 to 46 and Comparative Examples 7 to 9 were used, and the sample numbers are S39 to S46 and R7 to R9. Slurries were prepared by mixing the anode material, sodium carboxymethyl cellulose, styrene-butadiene rubber, conductive graphite (KS-6) and carbon black (SP) in a ratio of 92:2:2:2:2, and were uniformly coated on copper foil and dried to obtain anode plates. The anode plates were assembled into coin cells in an argon atmosphere glove box. The diaphragm used is a polypropylene microporous membrane, and the electrolyte used is 1 mol/L lithium hexafluorophosphate (solvent is a liquid mixture of ethylene carbonate, methyl ethyl carbonate and dimethyl carbonate), a counter electrode used is a metal lithium plate.

The discharge specific capacity was performed on above 11 groups of batteries through the LAND CT2001A battery test system. The ratio of the electric quantity discharged in 1 hour to the battery capacity is the discharge specific capacity.

The first coulomb efficiency test was performed on the above 11 groups of batteries through the LAND CT2001A battery test system, the charging and discharging current was 0.05C, and the first coulomb efficiency was measured.

The above 11 groups of batteries were tested through the LAND CT2001A battery test system after 100 cycles, the charging and discharging current was 0.2C, and the test was performed after 100 cycles to calculate the battery capacity after the cycle and the capacity retention rate after the cycle.

The capacity retention rate after 100 cycles of 0.2C cycle=the discharge capacity at the 100th cycle/the discharge capacity at the first cycle×100%, the results are shown in Table 6.

**Table 6. Parameter performance comparison table of various anode materials**

| Performance parameters | S39 | S40 | S41 | S42 | S43 | S44 | S45 | S46 | R7 | R8 | R9 |
|---|---|---|---|---|---|---|---|---|---|---|---|
| Particle size of the anode material (D50,µm) | 1.2 | 1.8 | 3.5 | 1.5 | 1.2 | 1.6 | 1.3 | 1.2 | 1.4 | 1.8 | 1.5 |
| particle size of the N-M alloy (D50,µm) | 1 | 1.5 | 3 | 1 | 1 | 1 | 1 | 1 | 1 | 1 | / |
| Carbon content (%) | 15 | 16 | 15 | 18 | 20 | 20 | 20 | 21 | 20 | 25 | 22 |
| The specific surface area of the anode material (m²/g) | 45 | 55 | 40 | 90 | 50 | 30 | 30 | 32 | 15 | 45 | 38 |
| Thickness of the carbon layer (nm) | 50 | 53 | 80 | 50 | 100 | 50 | 50 | 40 | 50 | 50 | 50 |
| Total porosity (%) | 55 | 55 | 45 | 45 | 55 | 55 | 50 | 52 | 70 | 55 | 67 |
| Porosity of primary particles (%) | 40 | 35 | 36 | 30 | 40 | 40 | 65 | 64 | / | 40 | / |
| Porosity of the nano-particle layer (%) | 25 | 23 | 27 | 15 | 25 | 32 | 22 | 23 | / | 7 | / |
| Ratio of the porosity of meso-pores to the porosity of micro-pores | 4:1 | 5:1 | 5:1 | 8:1 | 4:1 | 4:1 | 4:1 | 4:1 | / | 1.8:1 | / |
| Proportion of volume of open pore (%) | 80 | 83 | 83 | 81 | 80 | 80 | 80 | 81 | 70 | 58 | / |
| Proportion of volume of close pore (%) | 20 | 17 | 17 | 19 | 20 | 20 | 20 | 19 | 30 | 42 | / |
| Maximum cross section width | 40 | 35 | 50 | 30 | 40 | 40 | 60 | 62 | 65 | 40 | / |
| of branches (nm) | | | | | | | | | | | |
| Thickness of the nano-particle layer (nm) | 100 | 150 | 50 | 500 | 100 | 100 | 70 | 73 | / | 300 | / |

**Table 7. Table of parameter performance comparison of various batteries**

| Sample | Specific discharge capacity (mAh/g) | Initial coulombic efficiency (%) | Capacity after 100 cycles at 0.2C (mAh/g) | Capacity retention rate after 100 cycles at 0.2C (%) | Expansion rate of electrode membrane (%) |
|---|---|---|---|---|---|
| S39 | 3290 | 86.8 | 1256 | 44 | 23 |
| S40 | 3225 | 75.2 | 988.9 | 41 | 26 |
| S41 | 3265 | 82.8 | 1102 | 28 | 30 |
| S42 | 3251 | 82.2 | 668 | 25 | 35 |
| S43 | 3218 | 81.9 | 785 | 43 | 29 |
| S44 | 3246 | 83.4 | 892 | 39 | 25 |
| S45 | 3255 | 80.6 | 991 | 38 | 27 |
| S46 | 1589 | 82.6 | 1102.1 | 69.3 | 28 |
| R7 | 3178 | 70.8 | 645 | 23 | 37 |
| R8 | 2803 | 73.7 | 733 | 24 | 36 |
| R9 | 1864 | 71 | 609 | 22 | 36 |

It can be seen in FIG. 17c that the material of Example 39 has an excellent cycle performance, and still has a capacity of 997 mAh/g after being undergone 1000 cycles at a large current of 0.5C. It can be seen from Tables 6 and 7 above that Example 42 has a higher concentration of ammonium chloride and a longer immersion time compared with Example 39, so that more silicic acid particles are generated on the surface of carbon-coated silicon-magnesium alloy. Therefore, the thickness of the nano-silicon particle layer of the final product is larger, the number of meso-pores and micro-pores of the nano-silicon particle layer is reduced, and the electrolyte is difficult to flow into the primary particles in the inner layer, thereby increasing the expansion rate of the electrode plate, and deteriorating the cycle stability during the charging and discharging process of the battery.

Compared with Example 39, the anode material of Comparative Example 7 was not subjected to an immersing treatment in ammonium chloride solution during the preparation process, and silicic acid particles were not generated on the surface of the silicon-magnesium alloy, so that the final product only includes the carbon layer and the primary particles. The carbon particles in the layer easily block the pore structure of the primary particles, thereby increasing the expansion rate of the electrode plate, and deteriorating the cycle stability during the charging and discharging process of the battery.

Compared with Example 43, Comparative Example 8 has a higher concentration of ammonium chloride and a longer immersion time compared with Example 39, so that more silicic acid particles are generated on the surface of carbon-coated silicon-magnesium alloy. Therefore, the thickness of the nano-silicon particle layer of the final product is larger, the number of meso-pores and micro-pores of the nano-silicon particle layer is reduced, and the electrolyte is difficult to flow into the primary particles in the inner layer, thereby increasing the expansion rate of the electrode plate, and deteriorating the cycle stability during the charging and discharging process of the battery..

Comparative Example 9 provides a carbon-coated porous silicon anode material. The capacity and capacity retention rate of the battery made of this material each have decreased after 100 cycles at 0.2C, and the expansion rate of the electrode membrane of Comparative Example 9 is also higher than that of Example 39.

According to the above Examples and Comparative Examples, the nano-particle layer on the surface of the primary particles of the anode material of the present disclosure has excellent meso-pores and micro-pores, which can effectively prevent from pulverization of the material. A rigid silicon-lithium alloy layer is formed after lithiation, so that the volume expansion of primary particles can be inhibited, thereby ensuring the structural stability of the porous silicon. During the lithiation process, the silicon intercalated lithium expands to fill the gaps among meso-pores, so that solvent molecules of the electrolyte is prevented from contacting the primary particles to form side effects, which may generate more SEI, and lower initial efficiency. In addition, the pore structure on the primary particles is different from the structures of the meso-pores and micro-pores of the nano-particle layer, so that the stress produced by the volume expansion of porous silicon can be further relieved, thereby reducing the expansion of the electrode membrane, improving the safety, avoiding damage to the structure of the materials, ensuring structural stability of the materials, and achieving long cycle service life. After the carbon layer wraps the silicon material, better electrical conductivity and stability can be achieved. The sequence of first coating carbon and then reacting to prepare multiple pores can effectively avoid filling or closing the pore structure by carbon, which may reduce the initial efficiency of the material, and even side effects may be triggered. Therefore, the composite anode material is beneficial to meet the requirements of batteries, such as long cycle service life, high capacity and low expansion, so that it can be widely used in the field of anode materials of lithium ion batteries.

In summary, the method for preparing the silicon-carbon anode material provided by the present disclosure is simple to operate, has a safe and efficient preparation process, and an effectively reduced preparation cost, and is suitable for mass production. The produced product can be used as electrode plates of batteries, which has better charging and discharging cycle performance.

### Sixth aspect

The present disclosure also provides a lithium-ion battery anode plate and a lithium-ion battery, which adopt the composite anode material provided in the above embodiments of the present disclosure or the anode material prepared by the method for preparing an anode material provided in the above embodiments of the present disclosure.

The applicant states that the detailed process equipment and process flow of the present disclosure are illustrated through the above examples in the present disclosure, but the present disclosure is not limited to the above detailed process equipment and process flow, that is, it does not mean that the present disclosure must be implemented relying upon the detailed process equipment and process flow above. Those skilled in the prior art should understand that any improvement to the present disclosure, the equivalent replacement of each raw material of the product of the present disclosure, the addition of auxiliary components, the selection of specific manners, and the like, fall within the protection scope and disclosing scope of the present disclosure.

## Claims

1. An anode material, wherein the anode material comprises primary particles, the primary particle each comprises a skeleton, and the skeleton comprises a main skeleton located inside the primary particle and a plurality of branches extending from the main skeleton to a surface of the primary particle.

2. The anode material according to claim 1, wherein the anode material comprises at least one of following features (1) to (5):
(1) the main skeleton has a three-dimensional network structure;
(2) a single said branch is a single crystal grain;
(3) the crystal grain has a size ranging from 30 nm to 100 nm;
(4) a maximum width of a cross section of the branch ranges from 20 nm to 350 nm, and a maximum length of a cross section of the branch ranges from 50 nm to 2500 nm; and
(5) the branch is selected from at least one of rod-shaped nano-particles, nano-sheets, nano-wires and nano-tubes.

3. An anode material, wherein the anode material comprises primary particles, the primary particle has a macroporous structure, and the primary particle is provided with pores extending to the surface of the primary particle.

4. The anode material according to claim 3, wherein the pores have a diameter ranging from 10 nm to 150 nm and a depth ranging from 50 nm to 1500 nm.

5. An anode material, wherein the anode material comprises primary particles, the primary particle each is formed with through holes inside, and the primary particle has a porosity not less than 30%.

6. The anode material according to any one of claims 1 to 5, wherein the anode material further comprises a coating layer on the surface of the primary particle.

7. The anode material according to claim 6, wherein the anode material comprises at least one of following features (1) to (15):
(1) the coating layer comprises at least one of a carbon layer, a metal oxide layer, and a metal nitride layer;
(2) the coating layer comprises a carbon layer, and a mass percentage of carbon ranges from 2% to 50% based on 100% of the total mass of a composite anode material;
(3) the coating layer comprises a metal oxide layer, and and a mass percentage of the metal oxide ranges from 2% to 60% based on 100% of the total mass of the composite anode material;
(4) the coating layer comprises a metal nitride layer, and, a mass percentage of the metal nitride ranges from 2% to 70% based on 100% of the total mass of the composite anode material;
(5) the carbon layer comprises at least one of a graphene layer and an amorphous carbon layer;
(6) the carbon layer comprises a graphene layer having a corrugated structure;
(7) the carbon layer comprises a graphene layer having a corrugated structure, a maximum height difference between a peak and a valley of the corrugated structure is greater than 10 nm and less than 1 µm, and a distance between two adjacent peaks or two adjacent valleys of the corrugated structure is greater than 10 nm and less than 1 µm;
(8) the carbon layer comprises a graphene layer, the graphene layer has corrugated structures, the corrugated structure is selected from at least one of arc corrugations, sharp edge corrugations and fan-shaped corrugations based on classification according to bending morphology of the corrugated surface of the corrugated structure;
(9) the carbon layer comprises a graphene layer, the graphene layer has corrugated structures which are classified according to axial appearance and two-wing appearance of the corrugated structure, and the corrugated structures are selected from at least one of upright corrugations, oblique corrugations, inverted corrugations and horizontal corrugations;
(10) the carbon layer comprises an amorphous carbon layer, and the amorphous carbon layer has a thickness ranging from 5 nm to 150 nm;
(11) the coating layer comprises a metal oxide layer, and the metal element in the metal oxide layer comprises at least one of Ti, V, Nb, Ta, W, and Zr;
(12) a molar ratio of the metal element to the oxygen element in the metal oxide layer is 1: (0.1-3);
(13) the metal oxide layer has a thickness ranging from 1 nm to 200 nm;
(14) the coating layer comprises a metal nitride layer, and the metal element in the metal nitride layer comprises at least one of Ti, V, Nb, Ta, W, and Zr; and
(15) the metal nitride layer has a thickness ranging from 1 nm to 250 nm.

8. The anode material according to any one of claims 1 to 5, wherein the anode material further comprises a protective layer, and the protective layer located on a surface of the skeleton.

9. The anode material according to claim 8, wherein the anode material comprises at least one of following features (1) to (6):
(1) the protective layer is further filled in the pore or the through hole;
(2) the protective layer comprises at least one of a carbon layer, a metal oxide layer, and a metal nitride layer;
(3) the protective layer comprises a carbon layer, the carbon layer is an amorphous carbon layer and/or a graphitic carbon layer; when the carbon layer is only located on the surface of the skeleton, based on 100% of the total mass of the composite anode material, a mass percentage of carbon ranges from 5% to 25%; when the carbon layer is located on the surface of the skeleton and is filled in the pores or the through holes, based on 100% of the total mass of the composite anode material, the carbon content ranges from 25% to 75% and excluding 25%;
(4) the protective layer comprises a metal oxide layer, and the metal element of the metal oxide layer comprises at least one of Si, Sn, Ge, Li, V, Al, Fe, and Zn; when the metal oxide layer is only located on the surface of the skeleton, based on 100% of the total mass of the composite anode material, the metal oxide mass percentage ranges from 5% to 25%; when the metal oxide layer is located on the surface of the skeleton and is filled in the pores or the through holes, based on 100% of the total mass of the composite anode material, the metal oxide mass percentage ranges from 25% to 75%, excluding 25%;
(5) the protective layer comprises a metal nitride layer, and the metal element in the metal nitride layer comprises at least one of Ti, V, Nb, Ta, W, and Zr, when the metal nitride layer is only located on the surface of the skeleton, based on 100% of the total mass of the composite anode material, a mass percentage of the metal nitride ranges from 5% to 25%; when the metal nitride is located on the surface of the skeleton and is filled in the pores or the through holes, based on 100% of the total mass of the composite anode material, and a mass percentage of the metal nitride ranges from 25% to 75%, excluding 25%; and
(6) the protective layer located on the surface of the skeleton has a thickness ranging from 1 nm to 300 nm.

10. The anode material according to any one of claims 1 to 5, wherein the anode material further comprises a nano-particle layer located on the surface of the primary particle and a coating layer coated the surface of the nano-particle layer, and the nano-particle layer is formed with micro-pores and/or meso-pores.

11. The anode material according to claim 10, wherein the anode material comprises at least one of following features (1) to (6):
(1) a volume ratio of pores in all pore structures ranges from 35% to 90%, a volume ratio of meso-pores in all pore structures ranges from 5% to 45%, and a volume ratio of micro-pores in all pore structures ranges from 5% to 20%;
(2) the primary particle has a porosity ranging from 15% to 75%, and the nano-particle layer has a porosity ranging from 5% to 35%;
(3) a ratio of a total porosity of the meso-pores to a total porosity of the micro-pores in the nano-particle layer is (2-10):1;
(4) a volume ratio of open pores in all pore structures of the composite anode material ranges from 60% to 95%, and a volume ratio of close pores ranges from 5% to 40%;
(5) in the open pores of all pore structures, the volume of the crosslinking holes accounts for 79% to 95% of the volume of all open pores, the volume of the through holes accounts for 4% to 20% of the volume of all open pores, and the volume of the blind holes accounts for 1% to 10% of the volume of all open pores;
(6) the nano-particle layer comprises a plurality of nano-particles stacked;
(7) the nano-particles are selected from at least one of silicon nano-particles, germanium nano-particles, antimony nano-particles, tin nano-particles, and boron nano-particles;
(8) the nano-particle layer comprises a plurality of nano-particles, and the nano-particles has a median diameter ranging from 20 nm to 200 nm;
(9) the nano-particle layer has a thickness ranging from 20 nm to 2000 nm;
(10) the coating layer comprises a carbon layer;
(11) the coating layer comprises a carbon layer, and the carbon layer has a thickness ranging from 5 nm to 100 nm; and
(12) a mass percentage of carbon in the composite anode material ranges from 5% to 50%.

12. The anode material according to any one of claims 1 to 11, wherein the anode material comprises at least one of following features (1) to (9):
(1) the primary particles are selected from at least one of silicon, germanium, antimony, tin, and boron;
(2) the primary particles have a median diameter ranging from 0.2 µm to 15 µm;
(3) the primary particles have a specific surface area ranging from 5 m²/g to 100 m²/g;
(4) the primary particles have a porosity ranging from 30% to 70%;
(5) the primary particles have a powder compaction density ranging from 0.2 g/cm³ to 0.8 g/cm³;
(6) the primary particles have a powder compaction density ranging from 1.2 g/cm³ to 1.8 g/cm³;
(7) the composite anode material has a median particle size ranging from 0.1 µm to 15 µm;
(8) the composite anode material has a specific surface area ranging from 1 m²/g to 150 m²/g; and
(9) the composite anode material has a porosity ranging from 10% to 70%.

13. A method for preparing an anode material, wherein the method comprises following steps:
placing a mixture containing an N-M material and a transition metal halide in a protective atmosphere, and performing a displacement reaction to obtain a reaction product, the reaction product comprises a halide of M and a transition metal; and
removing the halide of M and the transition metal in the reaction product to obtain an anode material;
wherein the M in the N-M material comprises at least one of Mg, Al, Li, and Ca, and the N in the N-M material comprises at least one of Si, Ge, Sn, B, and Sb.

14. The anode material according to claim 13, wherein the anode material comprises at least one of following features (1) to (21):
(1) the N-M material is at least one of intermetallic compounds and alloys;
(2) the N-M material has a D50 ranging from 0.1 µm to 15 µm;
(3) the transition metal halide has a chemical formula of ABx, where x=2 or 3, A comprises at least one of Sn, Cu, Fe, Zn, Co, Mn, Cr, and Ni, and the B comprises at least one of CI, F and Br;
(4) a molar ratio of the N-M material to the transition metal halide is 1 :(0.2-2);
(5) a heating rate of the replacement reaction ranges from 1°C/min to 20°C/min;
(6) the displacement reaction is heat-preserved at 200°C to 950°C for 2 hours to 18 hours;
(7) the gas of the protective atmosphere comprises at least one of nitrogen, helium, neon, argon, krypton, and xenon;
(8) the method for removing the halide of M and the transition metal in the reaction product is that the reaction product is treated in an acid solution and/or a transition metal halide solution;
(9) the acid in the acid solution comprises at least one of hydrochloric acid, nitric acid and sulfuric acid;
(10) the concentration of the acid solution ranges from 1 mol/L to 5 mol/L, and the treatment time in the acid solution ranges from 1 hours to 10 hours;
(11) the concentration of the transition metal halide solution ranges from 0.5 mol/L to 5 mol/L, and the treatment time in the transition metal halide solution ranges from 1 hours to 12 hours;
(12) the method for preparing the N-M material is that: an M powder and an N powder are mixed, and perform a heating reaction in a protective atmosphere to obtain an N-M alloy or an N-M intermetallic compound;
(13) the N powder has a solid structure, and the N powder comprises at least one particle having a shape of sphere, flake, fiber, and diamond;
(14) the N powder has a D50 ranging from 0.1 µm to 15 µm;
(15) a molar ratio of the N powder to the M powder is 1:(1.5-2.5);
(16) the heating reaction in the steps of the method for preparing the N-M material is that it is heat-preserved at a temperature of 400°C to 900°C for 2 hours to 8 hours;
(17) a heating rate of the heating reaction in the steps of the method for preparing the N-M material ranges from 1°C/min to 10°C/min;
(18) after the reaction, the N-M material obtained is crushed to a D50 of 0.1 µm to 15 µm;
(19) alkali metal halides and/or alkaline earth metal halides are further added to the mixture;
(20) a chemical formula of the alkali metal halide and alkaline earth metal halide is ZBy, where y is 1 or 2, the Z comprises at least one of Li, Na, K, Mg, and Ca, and the B comprises at least one of Cl, F, and Br; and
(21) a molar ratio of at least one of the alkali metal halide and the alkaline earth metal halide to the transition metal halide is (0.2-1.5):1.

15. A method for preparing an anode material, wherein the method comprises following steps:
placing a mixture containing an N-M alloy and a halogen-containing six-membered ring organic substance in a protective atmosphere, and performing a substitution reaction to obtain a reaction product, the reaction product comprises an oxide of M and a halide of M; and
removing the oxide of M and the halide of M to obtain an anode material;
wherein N in the N-M alloy represents at least one of silicon, germanium, antimony, tin, and boron, and M in the N-M alloy represents at least one of magnesium, aluminum, calcium, and zinc.

16. The method for preparing an anode material according to claim 15, wherein the method comprises at least one of following features (1) to (6):
(1) a molar ratio of the N-M alloy to the halogen-containing six-membered ring organic substance is 1:(0.2-6);
(2) the halogen-containing six-membered ring organic substance comprises at least one of halogenated cyclohexane and its derivatives, halogenated benzene, halogenated benzoic acid and halogenated aniline, and the halogen comprises at least one of fluorine, chlorine and bromine;
(3) When the halogen-containing six-membered ring organic substance adopts halogenated cyclohexane, the mixture further comprises a cleavage inhibitor, wherein the cleavage inhibitor comprises an amide compound and a cyanate; and/or
a molar ratio of the N-M alloy to the amide compound is 1:(0.1-10); a molar ratio of the N-M alloy to the cyanate is 1:(0.1-10); and/or
the amide compound comprises at least one of carbonamide, formamide, acetamide, dimethylformamide and lactam; and/or
the cyanate comprises at least one of potassium cyanate, sodium cyanate and ammonium cyanate;
(4) a heat treatment temperature of the displacement reaction ranges from 200°C to 1000°C, and the reaction time ranges from 1 hours to 24 hours;
(5) the gas of the protective atmosphere comprises at least one of helium, neon, argon, krypton and xenon; and
(6) the method for removing the oxide of M and the halide of M comprises acid-washing, and a mass concentration of the acid solution used in the acid-washing ranges from 1 mol/L to 5 mol/L.

17. A method for preparing an anode material, wherein the method comprises following steps:
suffering the composite to a displacement reaction in a vacuum environment to obtain a reaction product, the reaction product comprises an oxide of Ml, and the composite comprises an N1-M1 material with a metal oxide layer formed on the surface of the N1-M1 material; and
removing the oxide of Ml to obtain an anode material;
wherein the N1 in the N1-M1 material comprises at least one of silicon, germanium, antimony, tin, and boron, and the Ml in the N1-M1 material comprises at least one of magnesium, aluminum, calcium, and zinc.

18. A method for preparing an anode material, wherein the method comprises following steps:
suffering the composite to a heat-treatment in a protective atmosphere and then perform nitridation treatment to obtain a reaction product, the reaction product comprises an oxide of Ml, and the composite comprises an N1-M1 material with a metal oxide layer formed on the surface of the N1-M1 material; and
removing the oxide of Ml to obtain an anode material;
wherein the N1 in the N1-M1 material comprises at least one of silicon, germanium, antimony, tin, and boron; and the Ml in the N1-M1 material comprises at least one of magnesium, aluminum, calcium, and zinc.

19. The method according to claim 17 or 18, wherein the method comprises at least one of following features (1) to (8):
(1) the N1-M1 material is at least one of intermetallic compounds and alloys;
(2) the method for forming a metal oxide layer on the surface of the N1-M1 material comprises at least one of a hydrothermal method, a sol-gel method, a precipitation method, a chemical vapor deposition method, a magnetron sputtering method and a solid phase reaction method;
(3) the metal element in the metal oxide layer comprises at least one of Ti, V, Nb, Ta, W, and Zr;
(4) a vacuum degree of the vacuum environment is less than 1000 Pa;
(5) a temperature of the displacement reaction ranges from 500°C tol 100°C, and the heat-preserving time ranges from 1 hour to 48 hours;
(6) a heat treatment temperature ranges from 500°C to 800°C, and the heat-preserving time is 1 hour to 24 hours; and/or, the protective atmosphere comprises at least one of helium, neon, argon, krypton and xenon;
(7) the nitriding treatment is heat preserved at 400°C to 950°C for 2 hours to 24 hours; and/or, the atmosphere of the nitriding treatment adopts at least one of an ammonia atmosphere and a nitrogen atmosphere; and
(8) the method for removing the oxide of M is acid-washing.

20. A method for preparing an anode material, wherein the method comprises following steps:
placing a mixture containing an N-M alloy and a carbon-containing ammonium salt in a protective atmosphere, and performing a substitution reaction to obtain a reaction product, the reaction product comprises an oxide of M and a nitride of M; and
removing the oxide of M and the nitride of M to obtain an anode material;
wherein the N in the N-M alloy comprises at least one of silicon, germanium, antimony, tin, and boron, and the M in the N-M alloy comprises at least one of magnesium, aluminum, calcium, and zinc.

21. The method for preparing an anode material according to claim 20, wherein the method comprises at least one of following features (1) to (9):
(1) the N-M alloy has a particle size ranging from 0.2 µm to 15 µm;
(2) a mixing molar ratio of the N-M alloy to the carbon-containing ammonium salt is 1:(0.1-10);
(3) the carbon-containing ammonium salt comprises at least one of ammonium carbonate, ammonium bicarbonate, and ammonium carbamate;
(4) the mixture further comprises a carbon-containing ammonium salt decomposition inhibitor;
(5) the mixture further comprises a carbon-containing ammonium salt decomposition inhibitor, a molar ratio of the N-M alloy to the carbon-containing ammonium salt decomposition inhibitor is 1:(0.2-10), and the ammonium salt decomposition inhibitor comprises carbonate and/or bicarbonate;
(6) the mixture further comprises a molten salt medium;
(7) a molar ratio of the N-M alloy to the molten salt medium is 1 :(0.1-10);
(8) the molten salt medium comprises at least one of a ammonium halide salt and a halide salt;
(9) the chemical formula of the ammonium halide salt is NH₄Y, where the Y comprises at least one of Cl, Br, F, and I;
(10) a heat treatment temperature range the displacement reaction ranges from 200°C to 950°C, and the heat-preserving time ranges from 1 hour to 24 hours;
(11) a reaction heating rate of the displacement reaction ranges from 1°C/min to 20°C/min;
(12) the gas of the protective atmosphere comprises at least one of helium, neon, argon, krypton and xenon;
(13) the method for removing the oxide of M and the nitride of M comprises acid-washing;
(14) the method for removing the oxide of M and the nitride of M comprises acid-washing, and the acid solution used in the acid-washing comprises at least one of hydrochloric acid, nitric acid, and sulfuric acid;
(15) the method for removing the oxide of M and the nitride of M comprises acid-washing, and a mass concentration of the acid solution used in the acid-washing ranges from 1 mol/L to 5 mol/L; and
(16) the method for removing the oxide of M and the nitride of M comprises acid-washing, and the acid-washing time ranges from 1 hour to 10 hours.

22. A method for preparing an anode material, wherein the method comprises following steps:
placing a mixture containing an N-M alloy and a transition metal halide in a protective atmosphere, and performing a displacement reaction to obtain a reaction product, the reaction product comprises a halide of M and a transition metal; and
removing the halide of M and the transition metal in the reaction product to obtain an N material, the N material are primary particles, the primary particle comprises a skeleton, the skeleton comprises a main skeleton located inside the primary particle and a plurality of branches extending from the main skeleton to the surface of the primary particle; and
forming a metal oxide layer on the surface of the skeleton of the N material to obtain a composite, the composite comprises the N material and a metal oxide layer formed on the surface of the skeleton;
wherein the N in the N-M alloy comprises at least one of silicon, germanium, antimony, tin, and boron, and the M in the N-M alloy comprises at least one of magnesium, aluminum, calcium, and zinc.

23. The method for preparing an anode material according to claim 22, wherein the method comprises at least one of following features (1) to (9):
(1) the method for preparing the anode material further comprises suffering the composite to a heat treatment in a protective atmosphere and then performing nitridation treatment to obtain an anode material, the anode material comprises an N material and a metal nitrogen layer on the surface of the skeleton;
(2) a chemical formula of the transition metal halide is ABx, where x=2 or 3, the A comprises at least one of Sn, Cu, Fe, Zn, Co, Mn, Cr, and Ni, and the B comprises at least one of Cl, F and Br;
(3) the method for forming the metal oxide layer comprises at least one of a hydrothermal method, a sol-gel method, a precipitation method, a chemical vapor deposition method, a magnetron sputtering method, and a solid phase reaction method;
(4) the metal element in the metal oxide layer comprises at least one of Si, Sn, Ge, Li, V, Al, Fe, and Zn;
(5) a temperature of the displacement reaction ranges from 500°C to 1100°C, and the heat-preserving time ranges from 1 hour to 48 hours;
(6) a heat treatment temperature ranges from 500°C to 800°C, and the heat-preserving time ranges from 1 hour to 24 hours; and/or, the protective atmosphere comprises at least one of helium, neon, argon, krypton and xenon;
(7) the method for removing the transition metal and the halide of M is acid-washing;
(8) the nitriding treatment is heat-preserved at 400°C to 950°C for 2 hours to 24 hours; and
(9) the atmosphere of the nitriding treatment adopts at least one of an ammonia atmosphere and a nitrogen atmosphere.

24. A method for preparing an anode material, wherein the method comprises following steps:
a coating layer is formed on a surface of an N-M alloy to obtain an N-M alloy containing the coating layer;
adding the N-M alloy containing the coating layer to the ammonium salt solution, and performing an oxidation-reduction reaction to obtain an intermediate; and
suffering the intermediate to a de-alloying heat treatment in a protective atmosphere, and the reaction product is acid-washed to obtain an anode material, wherein the N in the N-M alloy comprises at least one of silicon, germanium, antimony, tin, and boron, and the M in the N-M alloy comprises at least one of magnesium, aluminum, calcium, and zinc.

25. The method according to claim 24, wherein the preparation method comprises at least one of following features (1) to (15):
(1) the method for forming the coating layer comprises: coating the surface of the N-M alloy with a carbon source to form a carbon layer;
(2) the method for forming the coating layer comprises: coating the surface of the N-M alloy with a carbon source to form a carbon layer; the carbon source comprises at least one of a gas phase carbon source and a solid phase carbon source, and the gas phase carbon source comprises at least one of methane, acetylene, acetone, and alcohol; the solid-phase carbon source comprises at least one of calcium carbonate, lithium carbonate, iron carbonate, zinc carbonate, and magnesium carbonate;
(3) the coating layer formed on the surface of the N-M alloy has a thickness ranging from 5 nm to 100 nm;
(4) the N-M alloy has a median particle size ranging from 0.1µm to 15µm;
(5) the N-M alloy containing the coating layer has a median diameter ranging from 0.1 µm to 15 µm;
(6) the ammonium salt comprises at least one of ammonium fluoride, ammonium chloride, ammonium bromide, ammonium iodide, ammonium nitrate, ammonium carbonate, ammonium perchlorate, ammonium sulfate, and ammonium sulfide;
(7) a mass concentration of the ammonium salt solution ranges from 0.1 mol/L to 5 mol/L;
(8) a molar ratio of the N-M alloy containing the coating layer to the ammonium salt is 1: (0.1-2);
(9) the oxidation-reduction reaction time between the N-M alloy containing the coating layer and the ammonium salt solution ranges from 0.5 hour to 12 hours, and the temperature ranges from 20°C to 80°C;
(10) a temperature of the de-alloying heat treatment ranges from 200°C to 950°C, and the heat-preserving time of the de-alloying heat treatment ranges from 2 hours to 18 hours;
(11) a heating rate of the de-alloying heat treatment ranges from 1°C/min to 20°C/min;
(12) the gas of the protective atmosphere comprises at least one of helium, neon, argon, krypton and xenon;
(13) the acid solution used in the acid-washing comprises at least one of hydrochloric acid, nitric acid and sulfuric acid;
(14) a mass concentration of the acid solution ranges from 1 mol/L to 5 mol/L; and
(15) the acid-washing time ranges from 1 hour to 10 hours.

26. A lithium ion battery, wherein the lithium ion battery comprises a composite anode material according to any one of claims 1-12 or an anode material prepared according to a method for preparing an anode material according to any one of claims 13-25.
